# EUROPEAN PATENT APPLICATION

(11) **EP 4 474 399 A1**
(43) Date of publication of application: **11.12.2024**
(21) Application number: 23747134.7
(22) Date of filing: 30.01.2023
(51) Int. Cl.: C08F 10/02, C08F 4/655, H01M 4/13, H01M 4/139, H01M 4/62

(54) **ETHYLENE POLYMER PARTICLES, METHOD FOR PRODUCING ETHYLENE POLYMER PARTICLES, STRETCH MOLDED BODY, METHOD FOR PRODUCING STRETCH MOLDED BODY, AND USE OF SAME**

(30) Priority: 31.01.2022 JP 2022013593; 31.01.2022 JP 2022013594; 31.01.2022 JP 2022013595; 29.09.2022 JP 2022156729
(71) Applicant: Mitsui Chemicals, Inc., Tokyo 104-0028 (JP)
(72) Inventor: KIYOSAWA Kuniomi, Sodegaura-shi, Chiba 299-0265 (JP); SHIMODA Manabu, Sodegaura-shi, Chiba 299-0265 (JP); NISHINO Fumiaki, Kuga-gun, Yamaguchi 740-0061 (JP); TSURUGI Kou, Tokyo 105-7122 (JP); YANAGIMOTO Yasushi, Sodegaura-shi, Chiba 299-0265 (JP)
(74) Representative: J A Kemp LLP
(86) International application number: PCT/JP2023/002800
(87) International publication number: WO 2023/145924

(57) **Abstract**

One embodiment of the present invention is an ethylenic polymer particle, having a specific surface area of larger than 2.00 m²/g and 30.0 m²/g or smaller, as determined by a BET method from the adsorption/desorption isotherms measured by a nitrogen gas adsorption method, and a median diameter (D50) of 20 µm or larger and 700 pm or smaller as determined by laser diffraction/scattering.

## Description

### Technical Field

The present invention relates to an ethylenic polymer particle, a method for producing the ethylenic polymer particle, a stretch-molded body, a method for producing the stretch-molded body, and use of the same.

### Background Art

Extremely high molecular weight polymers, so-called ultrahigh molecular weight ethylenic polymers, have superior impact resistance, abrasion resistance, chemical resistance, and strengths compared to general-purpose ethylenic polymers, and have excellent characteristics as engineering plastics.

However, the ultrahigh molecular weight ethylenic polymer has poor flowability when melted due to its high molecular weight, and therefore it is said to be difficult to undergo melt-molding, which is a common resin molding method. For this reason, as a method for molding the ultrahigh molecular weight ethylenic polymer, there have been developed, for example, a method for dissolving an ultrahigh molecular weight ethylenic polymer in a solvent to mold it, and a solid phase stretch molding method in which an ultrahigh molecular weight ethylenic polymer particles is compression bonded at temperature of their melting point or lower followed by stretched.

For example, Patent Literature 1 describes a method for producing an ultrahigh molecular weight ethylenic polymer particle with excellent stretch moldability. Patent Literature 2 describes polyethylene powder that can inhibit a coloring agent from falling off and is excellent in flowability.

An ethylenic polymer particle containing a coarse particle upon molding by the aforementioned solid phase stretch molding method, for example, arises a problem such as retention of the ethylenic polymer particle upon powder transfer. When a coarse particle is present, uneven feed and clogging due to poor powder flowability occur, which may result in poor molding and uneven molding due to the uneven feed and clogging. In a molding method including a powder spreading and leveling step, defects may develop due to coarse particles that are caught and dragged. These uneven molding and defects cause problems such as reduced physical properties and poor appearance of a molded body. Moreover, when many coarse particles are present, a step of sifting and removing them is added, requiring more labor, and the removed coarse particles themselves are not suitable for production of molded body, requiring a step of crushing them into smaller particles for use. Therefore, a large number of coarse particles lead to higher costs upon manufacture.

In particular, when a polymerization material and polymerized polymer adhere to, for example, a polymerization tank wall and stirring blades upon a polymerization reaction (hereinafter referred to as "fouling"), larger coarse particles develop. Adhesion thereof to an inner wall surface prevents polymerization or allows the adhered polymerized material to grow into a clump, resulting in irregularly shaped, larger clumps.

In production of the aforementioned ultrahigh molecular weight ethylenic polymer particle, a balance of two aspects of industrial productivity and physical properties of the ethylenic polymer particle, has drawn attention. For example, Patent Literature 1 describes a production method for inhibiting the fouling to obtain an ultrahigh molecular weight ethylenic polymer particle excellent in stretch moldability. Patent Literature 3 describes a method for efficiently producing an olefin polymer particle of a relatively low molecular weight, high bulk density, and excellent particle properties, without being accompanied by the fouling.

For example, when also molding an inorganic material, a binder may be used in order to join the inorganic materials together. As a method for forming a molded body by using a binder in such a manner, for example, a method for mixing an inorganic material, a binder, and a solvent to prepare slurry, applying it, and then removing the solvent by heating (wet method), is frequently employed.

From the viewpoint of saving energy required for heating and reducing wastes, for example, a so-called dry method, which is a method for forming a molded body without using a solvent, has attracted attention.

One example of a molded body in which the inorganic materials have been joined together includes an electrode mixture layer (electrode active material layer) used in an electrode. When such an electrode mixture layer is also formed, it is usually formed by a wet method in which a current collector is coated with slurry containing an active material (inorganic material), a binder, and a solvent followed by removal of the solvent by heating, however, from the same viewpoint as above, forming of electrode mixture layer by the dry method has been investigated. Forming of the electrode mixture layer by such a dry method is disclosed in, for example, Patent Literature 4.

### Citation List

### Patent Literature

[Patent Literature 1] JP5689473
[Patent Literature 2] JP2019-038931A
[Patent Literature 3] JP5796797
[Patent Literature 4] JP2022-527458A

### Summary of Invention

### Technical Problem

However, the production method described in Patent Literature 1 cannot yield an ethylenic polymer particle excellent in flowability. Even with the polyethylene powder described in Patent Literature 2, sufficient flowability could not be attained, resulting in poor molding processability.

Moreover, for the purpose of more effectively achieving uniformity of a composition and reaction rate in a reaction system and inhibition of, for example, product retention at the bottom, a baffle board is generally provided in a reaction tank. However, the production method described in Patent Literature 1 confirmed that when a baffle board was provided in a reaction tank, the fouling occurred and coarse particles developed. As described above, the fouling promotes development of coarse particles, and therefore, when taking into consideration of industrially stable production, further improvement is desired from the viewpoint of inhibiting coarse particles from developing.

Concurrence of fouling is inhibited in the production method described in Patent Literature 3, however, the olefin polymer particle created has a relatively low molecular weight and high bulk density, thereby having left room for development in industrialization of ultrahigh molecular weight ethylenic polymer particle having favorable solid-phase stretching moldability.

Conventional materials that can be used as binders, including the binder described in Patent Literature 4 and the polyethylene powder described in Patent Literature 2, may not have sufficient bindability (bondability) to a target component to which the materials bond or may not have sufficient flowability, resulting in poor handleability.

In view of Background Art described above, an object the first aspect of the present invention to solve the aforementioned problems, is to provide an ethylenic polymer particle excellent in flowability. An object of the second aspect of the present invention to solve the problems, is to provide an ultrahigh molecular weight ethylenic polymer particle having excellent stretch moldability and few coarse particles, which is excellent in industrial handleability and is capable of being obtained at low costs. An object of the third aspect of the present invention to solve the problems, is to provide a method for producing an ultrahigh molecular weight ethylenic polymer particle excellent in flowability and stretch moldability while inhibiting concurrence of the fouling. An object of the fourth aspect of the present invention to solve the problems is to provide a binder excellent in handleability and bindability.

### Solution to Problem

The present inventors have diligently investigated the aforementioned problems. As a result, the present inventors have found that according to the first to fourth aspects of the present invention, each of the aforementioned problems can be solved, and thus have completed the present invention. Configuration examples of the first to fourth aspects of the present invention will be described below.

Configuration examples of the first aspect of the present invention are as described in the following [1] to [5] .
[1] An ethylenic polymer particle, having a specific surface area of larger than 2.00 m²/g and 30.0 m²/g or smaller, as determined by a BET method from the adsorption/desorption isotherms measured by a nitrogen gas adsorption method, and
   a median diameter (D50) of 20 to 700 µm as determined by laser diffraction/scattering.
[2] The ethylenic polymer particle according to [1], having an intrinsic viscosity [η] of 5 to 50 dl/g, measured at 135°C in a decalin solvent.
[3] The ethylenic polymer particle according to [1] or [2], having a bulk density of 0.01 to 0.20 g/mL.
[4] A stretch-molded body including the ethylenic polymer particle according to any one of [1] to [3] as a component.
[5] The stretch-molded body according to [4], wherein the stretch-molded body is obtained by solid phase stretch molding of the ethylenic polymer particle.

Configuration examples of the second aspect of the present invention are as described in the following [6] to [13] .
[6] An ethylenic polymer particle having a specific surface area of larger than 2.00 m²/g and 30.0 m²/g or smaller, as determined by a BET method from the adsorption/desorption isotherms measured by a nitrogen gas adsorption method,
   wherein an acetone extract of the ethylenic polymer particle includes a compound (F) having a molecular backbone of the following general formula (I): 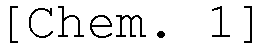 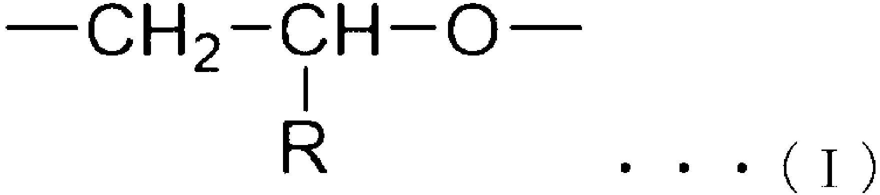 wherein R represents a hydrogen atom or an alkyl group having 1 to 12 carbon atoms.
[7] The ethylenic polymer particle according to [6], wherein the compound (F) has a weight-average molecular weight (Mw) of 500 or higher and 30,000 or lower.
[8] The ethylenic polymer particle according to [6] or [7], wherein a content of the compound (F) is 6 ppm or more and 1,000 ppm or less.
[9] The ethylenic polymer particle according to any one of [6] to [8], wherein when the ethylenic polymer particle is sieved on a 1 mm × 1 mm mesh sieve for a shaking time of 10 minutes at an amplitude of 0.5 mm and an interval of 15 seconds, an amount of the polymer particle not passing through the sieve is 20% by mass or less.
[10] The ethylenic polymer particle according to any one of [6] to [9], including 10 to 2,000 ppm of magnesium in the ethylenic polymer particle.
[11] The ethylenic polymer particle according to any one of [6] to [11], wherein the ethylenic polymer particle has a bulk density of 0.01 to 0.20 g/mL.
[12] A method for producing a stretch-molded body using the ethylenic polymer particle according to any one of [6] to [11] .
[13] The method for producing a stretch-molded body according to [12], which is obtained by a solid phase stretch molding method.

Configuration examples of the third aspect of the present invention are as described in the following [14] to [17] .
[14] A method for producing an ethylenic polymer particle having an intrinsic viscosity [η] of 5 to 50 dl/g measured at 135°C in a decalin solvent, the method including:
   a step [α] of producing an olefin polymerization catalyst-containing liquid, the step [α] including:
   a step <i> of obtaining a suspension via at least a step (1) of bringing a metal halide into contact with an alcohol in a hydrocarbon solvent, and a step (2) of bringing the component obtained in the step (1) into contact with an organoaluminum compound and/or an organoaluminum oxy compound,
   a step <ii> of bringing the suspension obtained in the step <i> into contact with a transition metal compound (B) represented by the following general formula (II), and
   a step <iii> of adding a compound (F) containing a molecular backbone represented by the following general formula (I),
   wherein the step <iii> is carried out between the step <i> and the step <ii>, and/or after the step <ii>; and
   a step [β] of homopolymerizing ethylene or copolymerizing ethylene with a linear or branched α-olefin having 3 to 20 carbon atoms, in the presence of the polymerization catalyst-containing liquid to produce an ethylenic polymer particle,
   wherein a concentration of the compound (F) in the polymerization catalyst-containing liquid is greater than 1 mg/L and 150 mg/L or less. 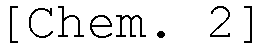 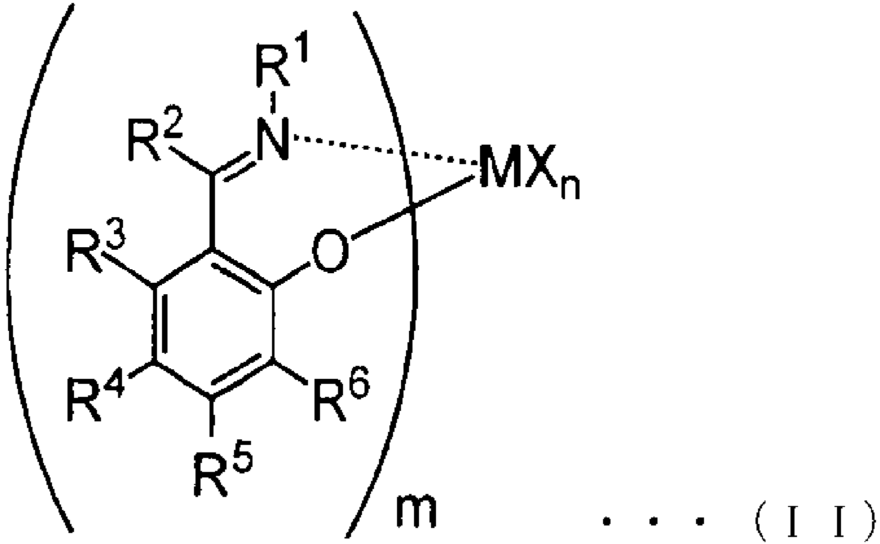 wherein M represents titanium, zirconium, or hafnium,
      m represents an integer of 1 to 4,
      R¹ to R⁵ may be the same as or different from each other, and each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, and two or more of these may be connected to each other to form a ring,
      R⁶ is selected from a hydrogen atom, a hydrocarbon group having 1 to 4 carbon atoms composed only of primary carbon or secondary carbon, an aliphatic hydrocarbon group having 4 or more carbon atoms, an aryl group-substituted alkyl group, a monocyclic or bicyclic alicyclic hydrocarbon group, an aromatic hydrocarbon group and a halogen atom,
      n is a numeral satisfying a valence of M,
      X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group, and when n is 2 or greater, a plurality of groups represented by X may be the same as or different from each other, and the plurality of groups represented by X may be bonded to each other to form a ring, 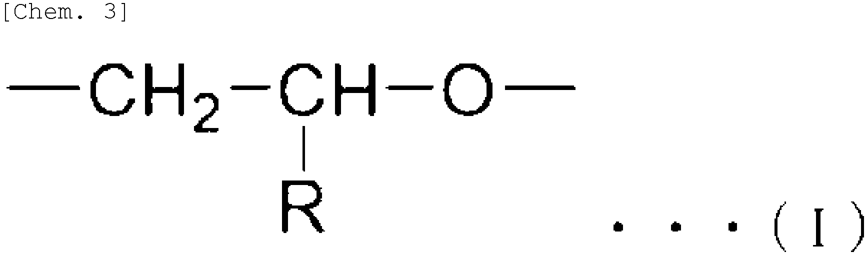 wherein R represents a hydrogen atom or an alkyl group having 1 to 12 carbon atoms.
[15] The method for producing an ethylenic polymer particle according to [14], wherein the compound (F) has a weight-average molecular weight of 500 or higher and 30,000 or lower.
[16] The method for producing an ethylenic polymer particle according to [14] or [15], wherein a content of a metal derived from the metal halide in the polymerization catalyst-containing liquid is 0.10 to 5.0 mmol/L.
[17] The method for producing an ethylenic polymer particle according to any one of [14] to [16], wherein a temperature at which the compound (F) is added is 0 to 80°C.

Configuration examples of the fourth aspect of the present invention are as described in the following [18] to [27] .
[18] A binder including the ethylenic polymer particle according to any one of [1] to [3] and [6] to [11].
[19] The binder according to [18], wherein the binder is a binder for an electrode.
[20] A molded body including the binder according to [18] or [19] and an inorganic material.
[21] The molded body according to [20], wherein the inorganic material includes an inorganic particle.
[22] The molded body according to [21], wherein the inorganic particle has an average particle size of 1 to 500 pm.
[23] The molded body according to any one of [20] to [22], wherein the molded body is an electrode mixture layer.
[24] An electrode including the molded body according to any one of [20] to [23] and a current collector.
[25] The electrode according to [24], wherein the electrode is obtained by a dry method.
[26] A lithium ion secondary battery, including the electrode according to [24] or [25] and an electrolyte.
[27] A method for producing an electrode, including a step of dry mixing the binder according to [18] or [19] and an active material to obtain an electrode composite material; a step of forming an electrode mixture layer from the electrode composite material; and a step of producing an electrode including the electrode mixture layer and a current collector.

### Advantageous Effects of Invention

The ethylenic polymer particle according to the first aspect of the present invention is excellent in flowability. The ethylenic polymer particle having favorable flowability allows the ethylenic polymer particle to be uniformly supplied into a molding container, resulting in favorable molding processability. Therefore, from the ethylenic polymer particle according to the first aspect of the present invention, a fiber of extremely high strength can be obtained in solid phase stretch molding.

The ethylene polymer particle according to the second aspect of the present invention contains a compound with a specific structural unit and has a specific surface area. This makes it possible to obtain sufficient flowability upon transfer after polymerization and stably perform the transfer. Furthermore, when the ethylenic polymer particle is stretch-molded, a stretch-molded body of a high strength can be obtained. Thus, the second aspect of the present invention is a highly balanced combination of two effects such as an industrial advantage upon manufacture of ethylenic polymer particle and superiority in physical properties of the ethylenic polymer particle. The ethylenic polymer particle according to the second aspect of the present invention is composed of a so-called ultrahigh molecular weight polyethylene and usually has an intrinsic viscosity [η] in a range thereof as described below.

According to the production method according to the third aspect of the present invention, an olefin polymerization catalyst-containing liquid that is obtained via a specific step, contains a compound with a specific structure as an essential component. This makes it possible to minimize fouling of ethylenic polymer particles on a polymerization tank wall and stirring blades, and to sufficiently acquire flowability upon polymerization. Furthermore, when the ethylenic polymer particle obtained by the method is stretch-molded, a stretch-molded body with a high strength can be obtained. Thus, the production method according to the third aspect of the present invention has a high industrial advantage. An ethylenic polymer particle to be obtained has a predetermined intrinsic viscosity and is composed of a so-called ultrahigh molecular weight polyethylene, and a stretch-molded body using the ethylenic polymer particle is also excellent in physical properties such as a strength.

The production method described in the aforementioned Patent Literature 3 inhibits the concurrence of the fouling, however, the literature does not describe that containing a compound with a specific structure as an essential component leads to inhibition of development of coarse particle. Since the polymerization method described above is also different from the production method according to the third aspect of the present invention, the polymerization method provides no suggestion as to at which timing in a polymerization step, the compound with a specific structure is added.

According to the fourth aspect of the present invention, a binder excellent in handleability and bindability can be provided. In particular, it is possible to provide a binder capable of producing a molded body excellent in bindability even by a dry method. For example, a binder for an electrode capable of producing an electrode mixture layer by a dry method, can be provided.

According to one embodiment of the fourth aspect of the present invention, a molded body excellent in shape retention (self-supportability) and a mechanical strength (for example, tensile strength at break) can be produced by a dry method.

### Description of Embodiments

The present invention will be specifically described below.

The sign "∼" used herein refers to a numerical range, and for example, "M ∼ N," refers to "M or more and N or less" unless otherwise specified.

The term "(co)polymer" herein is used as a concept that encompasses both a homopolymer and a copolymer.

In the present description, when an olefin constituting a (co)polymer is M, an expression a "constituent unit derived from M" may be used, however, it refers to "a constituent unit corresponding to M," i.e., a constituent unit having a pair of bonds formed by opening a n bond constituting a double bond of M.

The ethylenic polymer particle (hereinafter also referred to as an "ethylenic polymer particle [1]") according to the first aspect of the present invention and a stretch-molded body produced from the ethylenic polymer particle [1] will be described in more detail below.

### «Ethylenic polymer particle [1]>>

The ethylenic polymer particle [1] according to the first aspect of the present invention has a specific surface area of larger than 2.00 m²/g and 30.0 m²/g or smaller, as determined by a BET method from the adsorption/desorption isotherms measured by a nitrogen gas adsorption method. The specific surface area is preferably 2.50 to 28.0 m²/g and more preferably 3.00 to 26.0 m²/g. Within the aforementioned range of the specific surface area, stretch moldability in particular solid-phase stretching moldability is excellent.

The ethylenic polymer particle [1] has a median diameter (D50) of 20 to 700 µm as determined by laser diffraction scattering. The median diameter (D50) is preferably 30 to 680 pm, more preferably 40 to 660 pm, and more preferably 220 to 660 pm. The median diameter (D50) within the aforementioned range provides excellent flowability.

The ethylenic polymer particle [1] is formed of an aggregate of microparticles. The median diameter is an average size of the aggregates (particles). The average size of the microparticles can be determined by observing it with a scanning electron microscope (SEM), for example, but the median diameter is different from the average sizer of these microparticles.

A particle in which a median diameter (D50) cannot be determined by laser diffraction/scattering due to a reason that the particle size is not in a measurable range of a measurement apparatus (for example, 0.01 to 3000 pm), for example, is not the ethylenic polymer particle [1].

In order to obtain an ethylenic polymer particle having a median diameter within the above range, the polymerization conditions are adjusted in a polymerization step so that the median diameter within the above range can be obtained, to be able to obtain an ethylenic polymer particle having a median diameter within the above range, or an ethylenic polymer particle having a median diameter larger than the above range may be, for example, crushed to obtain an ethylenic polymer particle having a median diameter within the above range. The median diameter can be fallen within the above range either in a polymerization step or in a post-treatment step.

The ethylenic polymer particle [1] preferably has an intrinsic viscosity [η] of 5 to 50 dl/g, measured at 135°C in a decalin solvent, more preferably 6 to 50 dl/g, and further preferably from 7 to 50 dl/g. Within the aforementioned range of the intrinsic viscosity [η], the flowability is further improved.

The ethylenic polymer particle [1] preferably has a bulk density of 0.01 to 0.20 g/mL, more preferably 0.02 to 0.20 g/mL, and further preferably 0.03 to 0.20 g/mL. The bulk density within the aforementioned range further improves flowability.

The ethylenic polymer constituting the ethylenic polymer particles [1] is an ethylene homopolymer or a copolymer of ethylene and other monomer.

Examples of the other monomer include, for example, a linear or branched α-olefin having 3 to 30 carbon atoms, preferably 3 to 20 carbon atoms, a cyclic olefin having 3 to 30 carbon atoms, preferably 3 to 20 carbon atoms, a polar monomer, an α, β-unsaturated carboxylic acid ester, an unsaturated glycidyl ester, a vinylcyclohexane, a diene, a polyene, and an aromatic vinyl compound.

Examples of the α-olefin include, for example, propylene, 1-butene, 2-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene.

Examples of the cyclic olefin include, for example, cyclopentene, cycloheptene, norbornene, 5-methyl-2-norbornene, tetracyclododecene, and 2-methyl-1,4,5,8-dimethanol-1, 2, 3, 4, 4a, 5, 8, 8a-octahydronaphthalene.

Examples of the polar monomer include, for example, α, β-unsaturated carboxylic acids such as acrylic acid, methacrylic acid, fumaric acid, maleic anhydride, itaconic acid, itaconic anhydride, and bicyclo(2,2,1)-5-heptene-2,3-dicarboxylic anhydride, and α, β-unsaturated carboxylic acid metal salts such as sodium salts, potassium salts, lithium salts, zinc salts, magnesium salts, and calcium salts, of the α, β-unsaturated carboxylic acids.

Examples of the α, β-unsaturated carboxylic acid esters include, for example, methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate, and isobutyl methacrylate.

Examples of the unsaturated glycidyl esters include, for example, vinyl esters such as vinyl acetate, vinyl propionate, vinyl caproate, vinyl caprate, vinyl laurate, vinyl stearate, and vinyl trifluoroacetate; unsaturated glycidyl esters such as glycidyl acrylate, glycidyl methacrylate, and an itaconic acid monoglycidyl ester.

Examples of the dienes and polyenes include a cyclic or chain compound with two or more double bonds, having 4 to 30 carbon atoms and preferably 4 to 20 carbon atoms. Specific examples thereof include butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinylnorbornene, dicyclopentadiene; 7-methyl-1,6-octadiene, 4 -ethylidene-8-methyl-1,7-nonadiene, and 5,9-dimethyl-1,4,8-decatriene.

Examples of the aromatic vinyl compounds include, for example, mono- or polyalkylstyrenes such as styrene, o-methylstyrene, m-methylstyrene, p-methylstyrene, o, p-dimethylstyrene, o-ethylstyrene, m-ethylstyrene, and p-ethylstyrene; functional group-containing styrene derivatives such as methoxystyrene, ethoxystyrene, vinylbenzoic acid, methyl vinylbenzoate, vinylbenzyl acetate, hydroxystyrene, o-chlorostyrene, p-chlorostyrene, and divinylbenzene; 3-phenylpropylene, 4-phenylpropylene, and α-methylstyrene.

In a case in which the ethylenic polymer is a copolymer of ethylene and other monomer, the repeating unit derived from ethylene is preferably 99.5 mol% or more. The content of repeating unit derived from the other monomer can be measured by a known measurement methods such as nuclear magnetic resonance (NMR) spectroscopy and infrared absorption spectroscopy.

The ethylenic polymer is preferably an ethylene homopolymer from the viewpoint of increasing a degree of its crystallinity and stretchability in solid phase stretch molding. In a case in which a molded body requires creep resistance, on the other hand, a copolymer of ethylene with propylene, for example, is preferred.

The ethylenic polymer, or an ethylenic polymer constituting the ethylenic polymer particle [2] or [3] described below, each may contain at least one or more types of biomass-derived monomer (other monomer such as ethylene or α-olefin). The monomer of the same type constituting the polymer may be a biomass-derived monomer singly, a fossil fuel-derived monomer singly, or may contain both the biomass-derived monomer and fossil fuel-derived monomer. The biomass-derived monomer is a monomer composed of all renewable natural materials and their residues as raw materials, such as those derived from plants or animals, including fungi, yeast, algae, and bacteria, and containing a ¹⁴C isotope as carbon at a proportion of approximately 1 × 10-¹², wherein the biomass carbon concentration (unit: pMC) measured in accordance with ASTM D6866 is approximately 100 pMC. The biomass-derived monomers (other monomers such as ethylene and α-olefin) can be obtained, for example, by conventionally known methods.

It is preferable for these ethylenic polymers to contain a constituent unit derived from a biomass-derived monomer from the viewpoint of reducing environmental burden (mainly greenhouse gas reduction). Under the same conditions of polymer production such as a polymerization catalyst, polymerization process, and polymerization temperature, even though a raw material monomer is a (co)polymer containing a biomass-derived monomer, the molecular structure other than containing a ¹⁴C isotope at a proportion of approximately 1 × 10⁻¹² to 10⁻¹⁴, is the same as that of a (co)monomer composed of a fossil-derived monomer. Therefore, the performance is also considered to be the same.

### <Method for producing ethylenic polymer particle [1]>

A method for producing the ethylenic polymer particle [1], is not particularly limited, but the ethylenic polymer particle [1] can be produced based on the method described in the aforementioned Patent Literature 1. In order to obtain an ethylenic polymer particle having a median diameter (D50) in the range thereof described above, for example, the following methods can be employed, such as (1) a method for increasing power and a linear velocity upon stirring in a polymerization step to inhibit aggregation, (2) a method for adding, for example, an antistatic agent in a polymerization step to inhibit aggregation, and (3) a method of crushing in a post-treatment step after the polymerization.

### «Stretch-molded body»

The stretch-molded body can be obtained by stretch molding the ethylenic polymer particle [1]. The stretch-molded body is obtained, for example, by molding the ethylenic polymer particle [1] using a known stretch molding method for polyethylenes. As described above, the ethylenic polymer particle [1] has favorable flowability, and thus has satisfactory molding processability. The excellent flowability also allows a fiber with an extremely high mechanical strength to be obtained, for example, in solid phase stretch molding.

The stretch-molded body tends to have a high strength by using an ethylenic polymer particle with a high intrinsic viscosity [η].

The stretch-molded body is preferably a stretch molded body molded particularly by the solid phase stretch molding method. Since the solid phase stretch molding is a molding method without using a solvent, it is a molding method using relatively simple molding facilities and having little adverse effect on the environment. Thus, providing stretch-molded bodies using such a method is considered to highly contribute to the society.

When subjected to solid phase stretch molding, the ethylenic polymer particle [1] exhibits extremely high stretching performance, and therefore, for example, fibers, films, sheets, and biomaterials such as bone substitute materials, can be obtained with a high strength one.

For the conditions of solid phase stretch molding, known conditions can be used without limitation, except that the ethylenic polymer particle [1] is used. Examples of the solid phase stretch molding include, for example, a method for compression bonding the ethylenic polymer particle [1] under a pressure of 1 MPa or higher to mold it into a sheet, then subjecting it to tensile stretching at a relatively high temperature, or stretching it while applying pressure using a roll, for example. A temperature at which the molding is performed in the compression bonding step and stretching step, for example, is preferably the melting point of the ethylenic polymer particle to be used or lower, but the molding may be performed at the melting point or higher as long as no substantial melt flow results. It is preferable that the temperature range is such that the upper temperature is an approximate temperature of 5°C higher than the melting point of the ethylenic polymer particle to be used, and the lower limit is an approximate temperature of 30°C lower than the melting point.

When the ethylenic polymer particle [1] is used, a stretch-molded body having a stretching ratio of 50 times or more can be obtained. The stretching ratio is more preferably 80 times or more, further preferably 100 times or more, and particularly preferably 120 times or more.

Use of the ethylenic polymer particle [1] reduces a tensile stress upon stretch, which is lower than that of a conventional polymer. Therefore, this gives a tendency to be able to be more uniformly stretched. The stress upon stretch is preferably 30 MPa or lower, more preferably 25 MPa or lower, further preferably 23 MPa or lower, further preferably 20 MPa or lower, and particularly preferably 16 MPa or lower.

As the stretch-molded body according to the first aspect of the present invention can be molded at a high stretching ratio, it is expected to have a high tensile modulus and a tensile strength. A tensile modulus of a stretch-molded body to be obtained is preferably 80 GPa or higher, more preferably 120 GPa or higher, and particularly preferably 140 GPa or higher. A strength of a stretch-molded body to be obtained is also preferably 1 GPa or more, more preferably 2 GPa or more, further preferably 2.5 GPa or more, and particularly preferably 3 GPa or more.

The ethylenic polymer particle according to the second aspect of the present invention (hereinafter also referred to as an "ethylenic polymer particle [2]"), a stretch-molded body produced from the ethylenic polymer particle [2], and a method for producing the same will be described in more detail below.

### <<Ethylenic polymer particle [2]>>

The ethylenic polymer particle [2] according to the second aspect of the present invention is characterized in that it has a specific surface area of larger than 2.00 m²/g and 30.0 m²/g or smaller, and an acetone extract of the ethylenic polymer particle [2] contains a compound (F) having a molecular backbone of general formula [I].

The specific surface area refers to the total specific surface area that is a sum of all the specific surface areas determined by a BET method from the adsorption/desorption isotherms measured by a nitrogen gas adsorption method, and is usually larger than 2.00 m²/g and 30.0 m²/g or smaller, preferably 2.50 to 28.0 m²/g, more preferably 3.00 to 26.0 m²/g, further preferably 4.00 to 20.0 m²/g, even further preferably 5.00 to 18.0 m²/g. Within the above range of the total specific surface area, stretch moldability, particularly solid-phase stretching moldability is excellent. The ethylene polymer particle [2] subjected to solid phase stretch molding can provide a stretch-molded body with an extremely high strength.

It is generally known that the larger the molecular weight of ethylenic polymer particle, the higher the strength of a stretch-molded body, which is obtained when stretch molded at a higher stretching ratio. In contrast, it is known that the larger the molecular weight of the polymer, the further solid-phase stretching moldability deteriorates, making it difficult to stretch mold it at a high stretch ratio. In the solid phase stretch molding method, the larger the molecular weight of the ethylenic polymer, the further compression bondability between polymer particles worsen, having a likelihood of worsening stretch moldability.

The present inventors have found that the ethylenic polymer particle having the large total specific surface area within the above range, provides favorable compression bondability between particles even when the molecular weight of the ethylenic polymer becomes large, and enables solid stretch molding at a high stretching ratio, as a result of which a stretch-molded body with a high strength is obtained.

The acetone extract of the ethylenic polymer particle used herein is a component which was eluted in acetone after the ethylenic polymer particle had been brought into contact with acetone. The components eluted into acetone are generally, for example, a catalyst and an additive, used in a stage of polymerization operation, among constituents of the ethylenic polymer particle. A component such as an additive used after polymerization is also included in the acetone extract.

The acetone extract herein includes a compound (F) having a molecular backbone represented by the following general formula (I). Hereinafter, the molecular backbone represented by general formula (I) may be referred to as "oxyalkylene backbone."

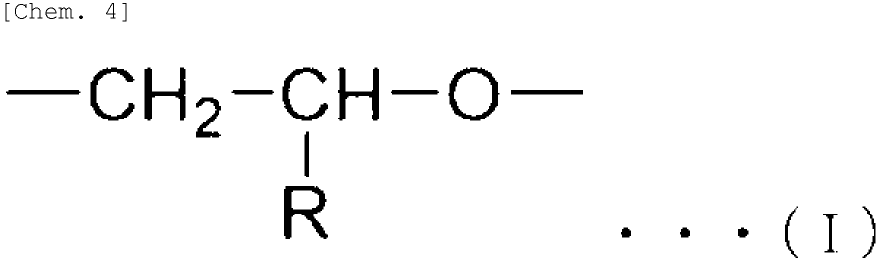

In Formula (I), R represents a hydrogen atom or an alkyl group having 1 to 12 carbon atoms. Examples of the alkyl group having 1 to 12 carbon atoms include linear or branched alkyl groups such as a methyl group, an ethyl group, a n-propyl group, an isopropyl group, a n-butyl group, an isobutyl group, a sec-butyl group, a t-butyl group, a n-pentyl group, a n-hexyl group, a n-heptyl group, an n-octyl group, and a n-nonyl group. When R is a hydrogen atom or methyl group, it is preferable because of its excellent polymerization activity and its excellent coarse particle development inhibition effect, and it is more preferably a hydrogen atom.

The compound (F) containing the oxyalkylene backbone is a compound derived from an antistatic agent, which is one of the additives added at a stage of polymerization operation. Moreover, it may be further added after polymerization. Therefore, the content of compound (F) in the ethylenic polymer particle can be adjusted by the concentration of compound (F) upon polymerization operation, and may also be adjusted by further adding the compound (F) after polymerization. The presence of the compound (F) improves flowability of powder, making it possible for the powder to be uniformly made into a form. Furthermore, adding the compound (F) upon polymerization instead of its addition after polymerization, allows the compound (F) to penetrate into an inside of the polymer particle, resulting in obtaining a stretch-molded body further excellent in stretch moldability and a strength.

The compound (F) preferably has a form in which a hydrogen atom is bonded to an oxygen of the oxyalkylene backbone represented by the general formula (I) and is particularly preferably a compound having one or a plurality of two or more backbones in the molecule, which are represented by the following general formula [F1], [F2] o [F3], and these can be used without limitation.

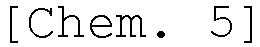

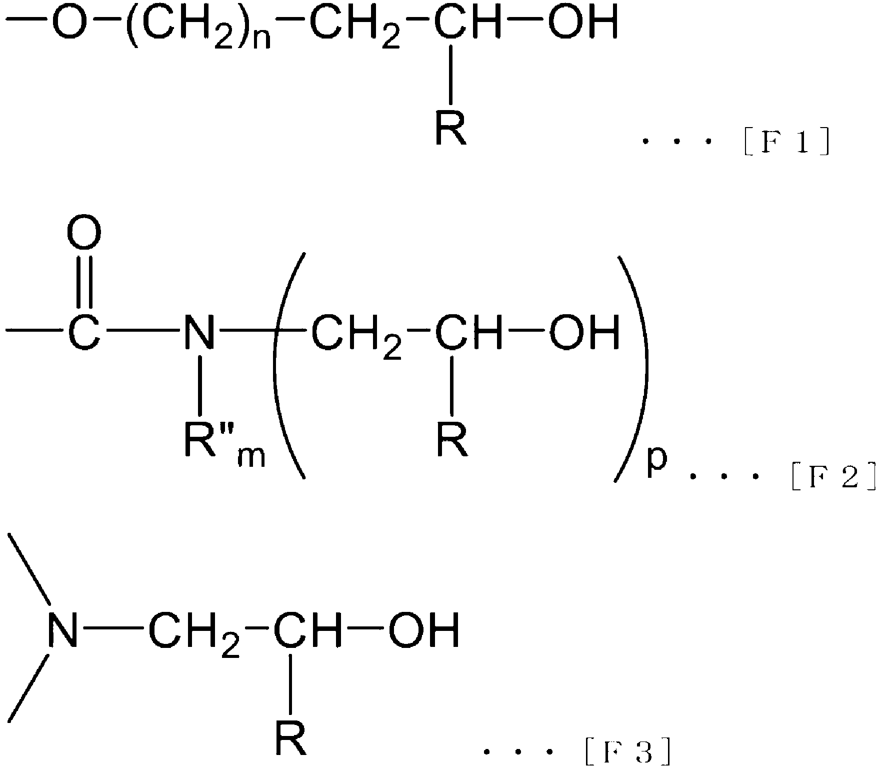

In the above Formula, R is the same as R described in the above Formula (I). In the above Formula, R'' represents the same atom or group as R above, n and m are integers of 0 or 1, p is an integer of 1 or 2, and the sum of m and p is 2. From the viewpoint of polymerization activity and coarse particle development inhibition effect, m is preferably 0 and p is preferably 2.

Example of the compound containing the backbone represented by the general formula [F1] can include the polyoxyalkylene-based compounds represented by the following general formulae [F1-1] and [F1-2].

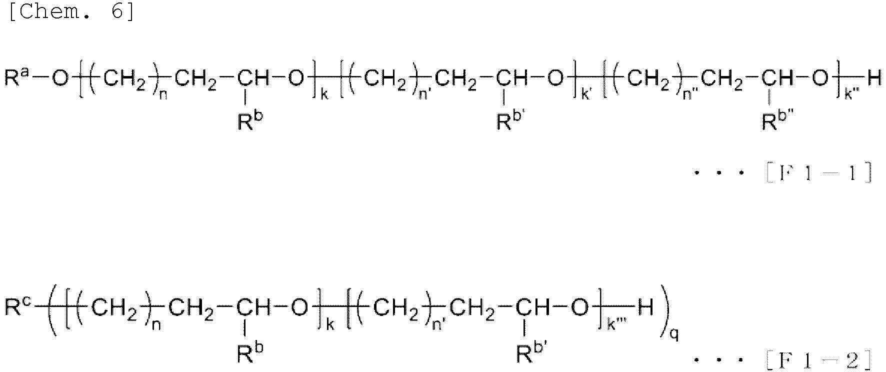

In the general formula, R^{b}, R^{b}', and R^{b}" each independently represent a hydrogen atom or an alkyl group having 1 to 12 carbon atoms, preferably a hydrogen atom or a methyl group, and more preferably a hydrogen atom. n, n', and n'' are each independently an integer of 0 or 1, k and k‴ each represent the average number of repeating units, ranging from 1 to 100, and K' and k'' are each the average number of repeating units, ranging from 0 to 100.

In the above Formula [F1-1], R^{a} is selected from a hydrogen atom, an alkyl group having 1 to 12 carbon atoms, an aryl group having 6 to 20 carbon atoms, and an acyl group having 1 to 20 carbon atoms. Examples of the alkyl group having 1 to 12 carbon atoms include the same alkyl groups as exemplified in the description of the alkyl group having 1 to 12 carbon atoms.

In the above Formula [F1-2], q is an integer of 1 to 4, and R^{c} is selected from a hydrocarbon group carbon atom having 1 to 12 carbon atoms, an oxygen-containing group, or a nitrogen-containing group. The hydrocarbon group having 1 to 12 carbon atoms is an aliphatic or aromatic hydrocarbon group to which q substituents described in [F1-2] are bonded. Examples of the hydrocarbon group having 1 to 12 carbon atoms include, when q is 1, the same hydrocarbon groups as exemplified for R^{a} in the above Formula [F1-1]. When q is 2, examples thereof include, for example, an ethylene structure (-CH₂CH₂-), a 1,2-propylene structure (-CH(CH₃)CH₂-), a 1,3-propylene structure (-CH₂CH₂CH₂-), a 1,4-butylene structure (-CH₂CH₂CH₂-), a 1,2-benzenediyl structure, a 1,3-benzenediyl structure, and a 1,4-benzenediyl structure. When q is 3, examples thereof include a 1,2,3-propanetriyl structure. When q is 4, examples thereof include a 1,2,4,5-benzenetetrayl structure.

Examples of the oxygen-containing group include a group having 1 to 12 carbon atoms, containing at least one selected from an ether bond and a carbonyl group. Examples of the oxygen-containing group include, for example, a group containing at least one structure selected from (or groups composed (only) of one structure selected from) a structure derived from ethylene glycol (O-CH₂CH₂-O), a structure derived from propylene glycol (O-CH(CH₃)CH₂-O), a structure derived from 1,3-propanediol (O-CH₂CH₂CH₂-O), a structure derived from 1,3-butylene glycol (O-CH(CH₃)CH₂CH₂-O), a structure derived from 1,4-butanediol (O-CH₂CH₂CH₂CH₂-O), a structure derived from 1,5-pentanediol (O-CH₂CH₂CH₂CH₂CH₂-O), a structure derived from 1,6-hexanediol (O-CH₂CH₂CH₂CH₂CH₂CH₂-O), a structure derived from catechol, a structure derived from resorcinol, a structure derived from hydroquinone, a structure derived from oxalic acid (O-C(O)-C(O)-O), a structure derived from malonic acid (OC(O)-CH₂-C(O)-O), a structure derived from succinic acid (O-C(O)-CH₂CH₂-C(O)-O), a structure derived from glutaric acid (OC(O)-CH₂CH₂CH₂-C(O)-O), a structure derived from adipic acid (O-C(O)-CH₂CH₂CH₂CH₂-C(O)-O), a structure derived from phthalic acid, a structure derived from isophthalic acid, a structure derived from terephthalic acid, a structure derived from lactic acid (O-CH(CH₃)-C(O)-O), a structure derived from salicylic acid, a structure derived from glycerin, a structure derived from trimellitic acid, a structure derived from 1,3,5-benzenetricarboxylic acid, or a structure derived from citric acid.

In the case of R^{c} being an oxygen-containing group, at least one selected from an ether bond and a carbonyl group is preferably bonded to a structure having the number of repeating units of q, and in this case, q is preferably an integer of 1 to 4 that is not greater than the sum of the numbers of an ether bond and a carbonyl group in the oxygen-containing group. When q is an integer that is smaller than the sum of the numbers of an ether bond and a carbonyl group in the oxygen-containing group as well as the terminal groups of the oxygen-containing group are an ether bond and an carbonyl group, an example of a group bonded to the oxygen atom, which is other than the structure having the number of repeating units of q, includes a hydrogen atom.

Examples of the nitrogen-containing group include a group containing at least one structure selected from (or groups composed (only) of one structure selected from) an ethylenediamine structure (N-CH₂CH₂-N), a propylenediamine structure (N-CH(CH₃)CH₂-N), a 1,3-propanediamine structure (N-CH₂CH₂CH₂-N), a 1, 4-butanediamine structure (N-CH₂CH₂CH₂CH₂-N), a o-phenylenediamine structure, a m-phenylenediamine structure, and a p-phenylenediamine structure.

When R^{c} is a nitrogen-containing group, a nitrogen atom in the nitrogen-containing group is preferably bonded to a structure having the number of repeating units of q, and in this case and when q is an integer of 1 to 3, an example of a group bonded to the nitrogen atom, which is other than the structure having the number of repeating units of q, includes a hydrogen atom. However, from the viewpoint of polymerization activity and the coarse particle development inhibition effect, q is preferably 4.

R^{c} is preferably the nitrogen-containing group from the viewpoint of polymerization activity and coarse particle development inhibition effect, and is more preferably a group containing at least one structure selected from (or groups composed (only) of one structure selected from) an ethylenediamine structure, a propylenediamine structure, or a 1,3-propanediamine structure, with the group containing the ethylenediamine structure (N-CH₂CH₂-N) being more preferred, and the group composed (only) of the ethylenediamine structure being further preferred.

Examples of such polyoxyalkylene-based compounds include, for example, polyethylene glycols such as triethylene glycol, tetraethylene glycol, hexaethylene glycol, and heptaethylene glycol; polyethylene glycol monoalkyl eters such as a triethylene glycol monoalkyl ether, a tetraethylene glycol monoalkyl ether, a hexaethylene glycol monoalkyl ether, and a heptaethylene glycol monoalkyl ether; polyethylene glycol monoalkyl esters such as a triethylene glycol monoalkyl ester, a tetraethylene glycol monoalkyl ester, a hexaethylene glycol monoalkyl ester, and a heptaethylene glycol monoalkyl ester; polypropylene glycol monoalkyl ethers such as a tripropylene glycol dialkyl ether, a tripropylene glycol monoalkyl ether, a tetrapropylene glycol monoalkyl ether, a hexapropylene glycol monoalkyl ether, and a heptapropylene glycol monoalkyl ether; polyethylene glycol monoacrylates such as a tetraethylene glycol monoacrylate, a hexaethylene glycol monoacrylate and a heptaethylene glycol monoacrylate; polyethylene glycol monomethacrylates such as a triethylene glycol monomethacrylate, a tetraethylene glycol monomethacrylate, a hexaethylene glycol monomethacrylate, and a heptaethylene glycol monomethacrylate; polyoxyalkylene alkyl ethers such as a polyoxyethylene lauryl ether, a polyoxyethylene oleyl ether, a polyoxyalkylene lauryl ether, a polyoxyethylene isodecyl ether, and a polyoxyethylene alkyl ether; polyoxyethylenic compounds such as polyoxyethylene castor oil, polyoxyethylene hydrogenated castor oil, a polyoxyethylene styrenated phenyl ether, a polyoxyethylene oleic acid ester, and a polyoxyethylene distearic acid ester; a polyoxyalkylene glycol; sorbitan-based compounds such as a sorbitan sesquioleate, a sorbitan monooleate, a sorbitan monostearate, a sorbitan monolaurate, a polyoxyethylene sorbitan monolaurate, a polyoxyethylene sorbitan monostearate, and a polyoxyethylene sorbitan monooleate; polyoxyethylene lanolin-based compounds such as a polyoxyethylene lanolin alcohol ether and polyoxyethylene lanolin fatty acid ester; a polyoxyethylene alkylamine ether; polyethylene glycol-based compounds such as a polyethylene glycol polyalkyl ether, a polyethylene glycol monolaurate, a polyethylene glycol monostearate, a polyethylene glycol monooleate, a polyethylene glycol sorbitan monolaurate, and a polyethylene glycol sorbitan monooleate; a condensate of a polyoxyethylene-polyoxypropylene; and an ethylenediamine-based polyoxyalkylene polyol. These polyoxyalkylene-based compounds can be used singly or in combinations of two or more thereof.

An example of the compound containing the backbone represented by the general formula [F2] can preferably exemplify the aforementioned aliphatic diethanolamide described in Patent Literature 2.

An example of the compound containing the backbone represented by the general formula [F3] can also preferably exemplify the tertiary amine compound described in Patent Literature 2.

The weight-average molecular weight (Mw) of the compound (F) measured by gel permeation chromatography (GPC) is preferably 500 or higher and 30,000 or lower, more preferably 1,000 or higher and 25,500 or lower, further preferably 1,500 or higher and 20,000 or lower, and particularly preferably 1,500 or higher and 10,000 or lower. Within the above range of Mw, the ethylenic polymer particle is excellent in stretch moldability and can reduce the amount of coarse particles developed, thereby improving flowability in a pipe upon transfer and obtaining a uniform molded body upon stretch molding. A low Mw of the compound (F) has, on the other hand, the risk that the compound (F) bleeds out by a molded body upon molding, resulting in poor quality, while a large Mw of the compound (F) may allow it to be incorporated into the molded body as a foreign substance.

Specific examples of the compound (F) include "ADEKA PLURONIC (registered trademark)" series manufactured by ADEKA Corporation. Among these, from their availability and coarse particle development inhibition capability, examples of the series include polyoxyalkylene glycols such as "ADEKA PLURONIC (registered trademark) L-71 (Mw: 3,760)", "ADEKA PLURONIC (registered trademark) L-72 (Mw: 4,700)", "ADEKA PLURONIC (registered trademark) L-31 (Mw: 1,700)", "ADEKA PLURONIC (registered trademark) P-85 (Mw: 7,430)", "ADEKA PLURONIC (registered trademark) F-68 (Mw: 15,100)," "ADEKA PLURONIC (registered trademark) F-88 (Mw: 19,300)," and "ADEKA PLURONIC (registered trademark) 17-R2 (Mw: 3,310)"; and ethylenediamine-based polyoxyalkylene polyols such as "ADEKA PLURONIC (registered trademark) TR-701 (Mw: 5,060)", "ADEKA PLURONIC (registered trademark) TR-702 (Mw: 5,390)", and "ADEKA PLURONIC (registered trademark) TR-913R (Mw: 4,560)". Specific examples of the compound (F) other than the above include "EMULGEN 108 (Mw: 769)" and "EMULGEN 109P (Mw: 970)", manufactured by Kao Corporation; "Amizet (registered trademark) 5C (Mw: 647)" manufactured by Kawaken Fine Chemicals Co., Ltd., and "Acetylenol (registered trademark) E13T (Mw: 444)."

As described below, the oxyarene backbone can be identified by known analytical techniques such as nuclear magnetic resonance (NMR) spectroscopy.

The content of the compound (F) eluted from the ethylenic polymer particle [2], calculated from liquid chromatography mass (LC-MS) analysis described below, is preferably 6 ppm or more and 1,000 ppm or less relative to the ethylenic polymer particle. Within the above range of the content of compound (F), the ethylenic polymer particle can be stretch-molded at a high stretching ratio, and it can inhibit development of coarse particles, as a result of which flowability in a pipe upon transfer is improved.
Furthermore, from the viewpoint of inhibiting development of coarse particles, the content is more preferably 8 ppm or more and 600 ppm or less and further preferably 10 ppm or more and 400 ppm or less.

Herein, the coarse particle in the present invention refers to a particle of 1 mm or larger not passing through a 1 mm × 1 mm mesh sieve when sieved thereon for a shaking time of 10 minutes at an amplitude of 0.5 mm and at an interval of 15 seconds. The ethylenic polymer particle containing many coarse particles of 1 mm or larger is unable to obtain sufficient flowability upon transfer after polymerization, as a result of which a valve, pump, and strainer, for example, may be clogged. From the viewpoint of preventing the aforementioned problems, the content of the coarse particles (amount of coarse particles) in the ethylenic polymer particles [2] is usually 20% by mass or less, preferably 150 by mass or less, more preferably 10% by mass or less, further preferably 7% by mass or less, particularly preferably 3% by mass or less, and especially preferably 1.5% by mass or less. A few coarse particles allow powder in a processing step to be easily transported, thereby enabling the powder to be uniformly made into a form then to obtain a stretch-molded body excellent in stretch moldability and a strength.

As detailed in the method for producing the ethylenic polymer particle, use of magnesium halide (preferably MgCl₂) upon production enables creation of ethylenic polymer particle having a very high specific surface area. A portion of the magnesium halide used upon production is usually contained in the ethylenic polymer particle, and the magnesium content corresponds to a concentration of magnesium halide upon production. The magnesium content in the ethylenic polymer particle [2] is preferably 10 to 2,000 ppm, more preferably 20 to 1,500 ppm, and further preferably 30 to 1,000 ppm. Within the above range of the content, the ethylenic polymer particle [2] is more excellent in powder flowability and stretch moldability.

The ethylenic polymer particle [2] preferably has the intrinsic viscosity [η] of 5 to 50 dl/g, measured at 135°C in a decalin solvent, more preferably 7 to 50 dl/g, further preferably 10 to 45 dl/g, particularly preferably 15 to 45 dl/g, and especially preferably 20 to 45 dl/g. Within the above range of the intrinsic viscosity [η], the flowability of the ethylenic polymer particle becomes more favorable. When the intrinsic viscosity [η] is lower than the above range, a resin strength reduces, and the intrinsic viscosity [η] being higher than the above range, may make stretch molding difficult. As described above, the ethylenic polymer having the intrinsic viscosity [η] within the above range usually has a likelihood of an extremely high molecular weight, and therefore the ethylenic polymer particle [2] can be said to be composed of an ultrahigh molecular weight ethylenic polymer.

Furthermore, the ethylenic polymer particle [2] preferably has a bulk density (B. D.) of 0.01 to 0.20 g/mL, more preferably 0.02 to 0.18 g/mL, further preferably 0.03 to 0.16 g/mL, and particularly preferably 0.04 to 0.15 g/mL. Within the above range of the bulk density, powder compression bondability upon molding can be enhanced, thereby allowing a stretch-molded body excellent in stretch moldability and a strength to be obtained. When the bulk density is higher than the above range, the specific surface area tends to be smaller than the above range, and when the bulk density is too low or too high compared to the above range, the flowability of the ethylenic polymer particle tends to worsen.

The ethylenic polymer constituting the ethylenic polymer particle [2] is a homopolymer of ethylene or a copolymer of ethylene and a linear or branched α-olefin having 3 to 20 carbon atoms, and is preferably a homopolymer of ethylene.

Herein, the α-olefin having 3 to 20 carbon atoms to be copolymerized with ethylene is preferably an α-olefin having 3 to 10 carbon atoms and more preferably an α-olefin having 3 to 8 carbon atoms. Specific examples thereof can include linear olefins such as propylene, 1-butene, 1-pentene, 1-hexene, 1-octene, and 1-decene; branched olefins such as 4-methyl-1-pentene, 3-methyl-1-pentene, and 3-methyl-1-butene, with propylene, 1-butene, 1-hexene, and 4-methyl-1-pentene being preferred. The α-olefins can be used singly or in combinations of two or more thereof. The content of α-olefin, i.e., a molar ratio of a repeating unit derived from α-olefin copolymerized with ethylene relative to all repeating units, is 5 mol% or less, preferably 2 mol% or less, and more preferably 0.5 mol% or less.

When the ethylenic polymer constituting the ethylenic polymer particle [2] is an ethylene homopolymer, a structural defect due to branching is few, allowing a stretch-molded body excellent in stretch moldability and a high strength to be obtained. Thus, from the viewpoint of increasing a degree of crystallinity and improving the stretch moldability in solid phase stretch molding, a homopolymer of ethylene is preferable. In the case of a copolymer of ethylene and an α-olefin, on the other hand, the α-olefin content higher than the above range, may not allow the copolymer to give a sufficient strength due to a branch derived from the α-olefin, causing a structural defect. It is noted that the ethylene content in the ethylenic polymer can be measured by a known measurement method such as nuclear magnetic resonance (NMR) spectroscopy or infrared absorption spectroscopy.

### <Method for producing ethylenic polymer particle>

The ethylenic polymer particle [2] is preferably produced by the method for producing an ethylenic polymer particle according to the third aspect of the present invention, which will be described below.

### <<Stretch-molded body obtained from ethylenic polymer particle [2] and method for producing same>>

The stretch-molded body according to the second aspect of the present invention can be obtained by stretch molding the ethylenic polymer particle [2]. The stretch-molded body is obtained, for example, by molding the ethylenic polymer particle [2] by a known stretch molding method for polyethylene. As described above, the ethylenic polymer particle [2] has favorable flowability and therefore has favorable molding processability. The favorable molding processability enables obtaining, for example, a stretch-molded body with a very high mechanical strength in solid phase stretch molding.

The ethylenic polymer particle [2] can be dissolved or mixed in a suitable solvent or plasticizer to prepare a gel-like mixture, which is used to also be able to obtain a molded body with a high strength by using a known gel spinning technique.

In a stretch-molded body composed of the ethylenic polymer particles [2], using a so-called ultrahigh molecular weight ethylenic polymer particle having a high intrinsic viscosity [η] tends to provide the stretch-molded body with an even higher strength.

As the stretch-molded body according to the second aspect of the present invention, a solid phase stretch-molded body molded particularly by the solid phase stretch molding method is preferable. The solid phase stretch molding method is a method of molding without using a solvent, therefore which uses relatively simple molding facilities and has less adverse effect on the environment. Thus providing stretch-molded bodies using such a method is considered to highly contribute to the society.

When subjected to solid state stretch molding, the ethylenic polymer particle [2] exhibits extremely high stretching performance, thereby enabling obtaining, for example, fibers, films, sheets, and biomaterials such as bone substitute materials, which have a high strength.

The ethylenic polymer particle [2] is also useful for producing a microporous membrane. A thickness of the microporous membrane varies depending on its applications, but is usually 0.1 to 1000 µm and preferably 1 to 500 pm. The thickness of the microporous membrane can be measured by using a commercially available film thickness measurement apparatus. The microporous membrane preferably has pores. Porosity of the microporous membrane depends on its applications, but is preferably 30 to 95% and more preferably 40 to 90%. Such an aspect is preferable from the viewpoints of a gas permeability and a mechanical strength.

For conditions of the solid phase stretch molding method, known conditions can be used without any limitation, except for using the ethylenic polymer particle [2]. For example, it can be fabricated under the same conditions as those of the solid phase stretch molding method of the aforementioned stretch-molded body according to the first aspect of the present invention.

Using the ethylenic polymer particle [2] enables a stretch-molded body with a stretching ratio of 50 times or more to be obtained. The stretching ratio is preferably 80 times or more, more preferably 100 times or more, and further preferably 120 times or more. Within the above range of the stretching ratio, the stretching ratio is said to be sufficiently high.

By using the ethylenic polymer particle [2], a tensile stress upon stretch becomes lower than that of a conventional polymer. Therefore, more uniform stretching is likely to be possible. The stress upon stretch is preferably 30 MPa or lower, more preferably 25 MPa or lower, further preferably 23 MPa or lower, further preferably 20 MPa or lower, and particularly preferably 16 MPa or lower.

Since the stretch-molded body according to the second aspect of the present invention can be molded at a high stretching ratio as described above, it is expected to have a high tensile modulus and tensile strength. A tensile modulus of a stretch-molded body to be obtained is preferably 80 GPa or higher, more preferably 120 GPa or higher, and further preferably 140 GPa or higher. A strength of a stretch-molded body to be obtained is also preferably 1 GPa or more, more preferably 2 GPa or more, further preferably 2.5 GPa or more, and particularly preferably 3 GPa or more.

In the method for producing the stretch-molded body according to the second aspect of the present invention, instead of a molding method (as a model method) using a small amount of sample, in which rolling with the capillary rheometer as described in Patent Literature 1 was performed followed by stretching using a tensile tester, molding is performed by a method for filling a long mold with ethylenic polymer powder and compressing it, or a method for compressing powder that was uniformly spread and levelled with a doctor blade. For example, in the aforementioned step of spreading and levelling powder, when a coarse particle or aggregated particle is present, upon grinding operation to make the ethylenic polymer particle that was spread and levelled uniform in thickness, the coarse particle is caught and dragged, leaving marks as defects, as a result of which a uniform molded body may not be obtained.

The method for producing an ethylenic polymer particle according to the third aspect of the present invention (hereinafter also referred to as the "present production method") will be described in more detail below. The ethylenic polymer particle in the present production method refers to a polymer particle containing ethylene as a main component, and includes an ethylene homopolymer particle and a copolymer particle of ethylene and other monomer.

### <<Production method of ethylenic polymer particle>>

The present production method is characterized in that it includes the following steps [α] and [β]. The ethylenic polymer particle produced by the production method has a predetermined intrinsic viscosity [η].

[α] :
   A step of producing an olefin polymerization catalyst-containing liquid, including:
   a step <i> of obtaining a suspension via at least a step (1) of bringing a metal halide into contact with an alcohol in a hydrocarbon solvent, and a step (2) of bringing the component obtained in step (1) into contact with an organoaluminum compound and/or an organoaluminum oxy compound;
   a step <ii> of bringing the suspension obtained in the step <i> into contact with the transition metal compound (B) represented by the general formula (II); and
   a step <iii> of adding a compound (F) containing the molecular backbone represented by the general formula (I),
   wherein the step <iii> is carried out between the step <i> and the step <ii>, and/or after the step <ii>.
[β] :
   A step of homopolymerizing ethylene in the presence of the polymerization catalyst-containing liquid, or copolymerizing ethylene with a linear or branched α-olefin having 3 to 20 carbon atoms to produce an ethylenic polymer particle.

First, the step [α] of producing the olefin polymerization catalyst-containing liquid used in the production method of the third aspect of the present invention will be described below.

### <Step [α]>

The step [α] is a step of producing an olefin polymerization catalyst-containing liquid. The step includes the following steps <i> to <iii>, and is characterized in that the step <iii> is carried out at a predetermined timing.

<i> A step of obtaining a suspension via at least a step (1) of bringing a metal halide into contact with an alcohol in a hydrocarbon solvent, and a step (2) of bringing the component obtained in step (1) into contact with an organoaluminum compound and/or an organoaluminum oxy compound.
<ii> A step of bringing the suspension obtained in the step <i> into contact with the transition metal compound (B) represented by the following general formula (I).
<iii> A step of adding a compound (F) containing the molecular backbone represented by the following general formula (II).

The steps <i> to <iii> will be described in detail below.

### [Step <i>]

The step <i> is a step of obtaining a suspension via at least the following two steps.

(1) A step of bringing a metal halide into contact with an alcohol in a hydrocarbon solvent.
(2) A step of bringing the component obtained in step (1) into contact with an organoaluminum compound and/or an organoaluminum oxy compound.

Contents of each step and compounds used in each step will be described below.

### · Step (1)

The step (1) is a step of bringing a metal halide into contact with an alcohol in a hydrocarbon solvent. An order in which these are brought into contact is not particularly limited, and they may be brought into contact at once or sequentially. The step (1) is preferably a step of bringing a metal halide into contact with an alcohol in a hydrocarbon solvent to form an alcohol complex of the metal halide and to form solution in which the alcohol complex is finely dispersed in the hydrocarbon solvent.

The step (1) is usually carried out under normal pressure heating or pressurized heating.

When performing heating under normal pressure, a temperature up to the boiling point of the hydrocarbon solvent to be used can be optionally selected; and when performing heating under pressure, a temperature up to the boiling point under pressure of the hydrocarbon solvent or alcohol to be used can be optionally selected.

A method for bringing the metal halide into contact with the alcohol in the hydrocarbon solvent in the step (1) is not particularly limited, and examples thereof include ordinary stirring and mixing. Upon this stirring and mixing, for example, a commonly used known stirrer may be used.

### (Metal halide)

Preferred examples of the metal halide include ionically bonded compounds with a layered crystal structure of a CdCl₂ type or CdI₂ type. Specific examples of the compound with the CdCl₂ type crystal structure include, for example, CdCl₂, MnCl₂, FeCl₂, CoCl₂, NiI₂, NiCl₂, MgCl₂, ZnBr₂, and CrCl₃. Specific examples of the compound with a CdI₂ type crystal structure include, for example, CdBr₂, FeBr₂, CoBr₂, NiBr₂, CdI₂, MgI₂, CaI₂, ZnI₂, PbI₂, MnI₂, FeI₂, CoI₂, Mg(OH)₂, Ca(OH)₂, Cd(OH)₂, Mn(OH)₂, Fe(OH)₂, Co(OH)₂, Ni(OH)₂, ZrS₄, SnS₄, TiS₄, and PtS₄.

Among them, preferred are CdBr₂, FeBr₂, CoBr₂, NiBr₂, CdI₂, MgI₂, CaI₂, ZnI₂, PbI₂, MnI₂, FeI₂, CoI₂, CdCl₂, MnCl₂, FeCl₂, CoCl₂, NH₂, NiCl₂, MgCl₂, and ZnBr₂, more preferred are MgI₂ and MgCl₂, which are halides of magnesium, and particularly preferred is MgCl₂. The metal halides may be used singly or two or more types thereof may be used.

The ionically bonded compound as described above may be used as long as it is finally contained in a catalyst, and the ionically bonded compound itself is not necessarily used. Therefore, upon preparation of the catalyst, a compound capable of forming an ionically bonded compound may be used to form an ionically bonded compound so that it is finally present in a catalyst. In other words, the following method may be employed in which using a compound that belongs to neither of the CdCl₂ type crystal structure nor CdI₂ type crystal structure, the compound and a halogen-containing compound or a hydroxyl group-containing compound are brought into contact with each other and reacted in the course of preparation of a catalyst to prepare an ionically bonded compound in a catalyst to be finally obtained.

For example, when forming MgCl₂ or MgI₂ to allow them to be finally present in a catalyst component, as compounds capable of forming them, a magnesium compound with reducing ability and a magnesium compound without reducing ability may be used as starting substances. An example of the magnesium compound with reducing ability includes the organomagnesium compound represented by the following Formula.

XₙMgR₂₋ₙ

wherein in Formula, n is 0 ≤ n < 2, and R is hydrogen, an alkyl group having 1 to 20 carbon atoms, an aryl group having 6 to 21 carbon atoms, or a cycloalkyl group having 5 to 20 carbon atoms, and when n is 0, two R may be the same or different. X is halogen.

Specific examples of such an organomagnesium compound with reducing ability include dialkyl magnesium compounds such as dimethylmagnesium, diethylmagnesium, dipropylmagnesium, dibutylmagnesium, diamylmagnesium, dihexylmagnesium, didecylmagnesium, octylbutylmagnesium, and ethylbutylmagnesium; alkylmagnesium halides such as ethylmagnesium chloride, propylmagnesium chloride, butylmagnesium chloride, hexylmagnesium chloride, and amylmagnesium chloride; alkylmagnesium alkoxides such as butylethoxy magnesium, ethylbutoxy magnesium, and octylbutoxy magnesium; and other alkylmagnesium hydrides such as ethylmagnesium hydride, propylmagnesium hydride and butylmagnesium hydride.

Specific examples of the organomagnesium compound without reducing ability include alkoxy magnesium halides such as methoxy magnesium chloride, ethoxy magnesium chloride, isopropoxy magnesium chloride, butoxy magnesium chloride, and octoxy magnesium chloride; aryloxy magnesium halides such as phenoxy magnesium chloride, and methylphenoxy magnesium chloride; alkoxy magnesium such as ethoxy magnesium, isopropoxy magnesium, butoxy magnesium, n-octoxy magnesium, and 2-ethylhexoxy magnesium; aryloxy magnesium such as diphenoxy magnesium and methylphenoxy magnesium; and carboxylic acid salts of magnesium such as magnesium laurate and magnesium stearate.

In addition thereto, a magnesium metal and magnesium hydride, for example, can also be used. These magnesium compounds without reducing ability may be compounds derived from the aforementioned magnesium compounds with reducing ability, or a compound derived upon preparation of a catalyst. In order to derive the magnesium compound without reducing ability from the magnesium compound with reducing ability, for example, a magnesium compound with reducing ability may be brought into contact with a polysiloxane compound, a halogen-containing silane compound, a halogen-containing aluminum compound, an ester, an alcohol, a halogen-containing compound or a compound having a hydroxyl group or an active carbon-oxygen bond.

Note however, the magnesium compound with reducing ability and magnesium compound without reducing ability may form complex compounds and composite compounds with other organometallic compounds such as aluminum, zinc, boron, beryllium, sodium, and potassium, or they may be mixtures thereof. The magnesium compound may be used singly, or two or more thereof may be combined for use, and the magnesium compound may be used in the form of an alcohol complex of the magnesium compound or in its solid state. When the magnesium compound with reducing ability or the magnesium compound without reducing ability is solid, each is preferably converted to an alcohol complex of a magnesium compound by using the alcohol described below.

The concentration of the metal halide (in particular the halide of magnesium) in the ethylene polymerization catalyst-containing liquid is preferably 0.10 to 5.0 mmol/L, more preferably 0.20 to 3.0 mmol/L, and further preferably 0.30 to 2.0 mmol/L.

The metal halide (in particularly the halide of magnesium) to be used within the above concentration range, tends to be able to facilitate obtaining the ethylenic polymer particle having a specific surface area within the above range.

### (Alcohol)

Examples of the alcohol include alcohols having 1 to 25 carbon atoms. Specific examples thereof include, for example, alcohols having 1 to 25 carbon atoms such as methanol, ethanol, propanol, butanol, pentanol, hexanol, 2-ethylhexanol, octanol, dodecanol, octadecyl alcohol, oleyl alcohol, 2-butyloctanol, 2-hexyldecanol, 2-hexyldodecanol, 2-octyldecanol, 2-octyldodecanol, isohexadecanol, isoeicosanol, benzyl alcohol, phenylethyl alcohol, cumyl alcohol, isopropyl alcohol, isobutyl alcohol, and isopropylbenzyl alcohol; halogen-containing alcohols having 1 to 25 carbon atoms such as trichloromethanol, trichloroethanol, and trichlorohexanol; and phenols having 6 to 25 carbon atoms, which may optionally have an alkyl group such as phenol, cresol, xylenol, ethylphenol, propylphenol, nonylphenol, cumylphenol, or naphthol.

These alcohols can be used singly or in combinations of two or more thereof. Among these, a mixture of two types of alcohols is preferably used from the following viewpoints.

The two types of alcohols are classified focused on a difference in reactivity between an alcohol complex of a metal halide containing the alcohol and the organoaluminum compound and/or organoaluminum oxy compound described below. The reason for preference to use a combination of such two types of alcohols is conjectured as follows.

In an alcohol complex of a metal halide obtained from an alcohol highly reactive with an organoaluminum compound and/or an organoaluminum oxy compound, an alcohol is extracted from the alcohol complex of the metal halide by a contact reaction with the organoaluminum compound and/or organoaluminum oxy compound then to be able to immediately create a portion to be a core of a fine particle of the metal halide.

It is considered, on the other hand, that in an alcohol complex of a metal halide, obtained from an alcohol that has relatively low reactivity with an organoaluminum compound and/or an organoaluminum oxy compound, after a portion to be a core of the fine particle was formed, an alcohol is extracted from the alcohol complex of the metal halide, and precipitation of the metal halide results outside the core of the fine particle, forming a fine particle (A).

Therefore, the fine particle (A) can be expected to have a narrow particle size distribution in spite of having a small size, and contamination of by-products of extremely small fine particles, for example, particles of a size of the core, is considered to be reduced.

Since the ethylenic polymer particle described below is extremely susceptible to a particle size of this fine particle, it is considered that use of the fine particle (A) as a constituent of the olefin polymerization catalyst-containing liquid according to the present invention, is unlikely to create an irregularly shaped ethylenic polymer particle, and even a polymer in nano size hardly develops fouling in a reaction tank, for example.

The difference in reactivity between the alcohol described above and the organoaluminum compound and/or organoaluminum oxy compound is thought to be due to a difference in molecular structures of the alcohol as shown in (i) to (iv) below.

(i) Difference between linear and branched
(ii) Difference between aliphatic, alicyclic, and aromatic
(iii) Difference in the number of carbon atoms
(iv) Combinations of the above (i) to (iii)

Among these, when using for example, (iii) the difference in the number of carbon atoms, specifically, the number of carbon atoms in R of the alcohol represented by R-OH as an index, the alcohol can be classified into an alcohol having the relatively small number of carbon atoms and an alcohol having the relatively large number of carbon atoms. In this case, the alcohol having the relatively small number of carbon atoms generally corresponds to an alcohol that is highly reactive with an organoaluminum compound and/or organoaluminum oxy compound. The alcohol having the relatively large number of carbon atoms, on the other hand, corresponds to an alcohol that has low reactivity with an organoaluminum compound and/or organoaluminum oxy compound.

According to the classification based on the number of carbon atoms, in one embodiment, an alcohol that falls under the category of alcohol having the relatively small number of carbon atoms may also be recognized as an alcohol having the relatively large number of carbon atoms, depending on the type of the other type of alcohol. Taking 2-ethylhexanol as an example, when 2-octyldodecanol is used as the other alcohol, it corresponds to an alcohol having the relatively small number of carbon atoms, and when isobutyl alcohol is used as the other alcohol, it corresponds to an alcohol having the relatively large number of carbon atoms. This classification focuses solely on reactivity, thereby causing no problem even though one type of alcohol falls into any category.

Herein, when the two types of alcohols are combined for use, taking into consideration of effect exhibited from the viewpoint of the reactivity, a difference in the number of carbon atoms between the two types of alcohols is preferably 4 or more.

Specific examples of the combination of alcohols include, for example, a combination of an alcohol having 2 to 12 carbon atoms and an alcohol having 13 to 25 carbon atoms, or a combination of two alcohols selected from alcohols having 2 to 12 carbon atoms.

Herein, the alcohol having 2 to 12 carbon atoms more preferably has 2 to 10 carbon atoms, and is particularly preferably an alcohol selected from ethanol, propanol, butanol, pentanol, hexanol, 2-ethylhexanol, heptanol, and octanol.

The alcohol having 13 to 25 carbon atoms more preferably has 15 to 25 carbon atoms and further preferably 16 to 25 carbon atoms, and is particularly preferably an alcohol selected from 2-hexyldecanol, 2-hexyldodecanol, 2-octyldecanol, 2-octyldodecanol, isohexadecanol, isoeicosanol, octadecyl alcohol, or oleyl alcohol.

Note, however, when an alcohol having a relatively large number of carbon atoms, such as an alcohol having 13 to 25 carbon atoms, is present in the olefin polymerization catalyst-containing liquid, an ethylene polymerization reaction is expected to proceed mildly, as a result of which a non-uniform distribution of heat generation upon polymerization can be expected to be inhibited. It is considered that the inhibition of the non-uniform distribution of polymerization heat generation leads to inhibition of created polymer chains from forming an entangled structure, resulting in providing improved performance of a stretch-molded body such as a solid phase stretch-molded body (for example, improved performance of electrode film).

The amount of alcohol to be used is not particularly limited as long as it is an amount dissolving a metal halide, but from the viewpoint of being able to facilitate, for example, formation of alcohol complex of the metal halide, the amount is preferably 0.1 to 50 mol, more preferably 0.5 to 30 mol, further preferably 1 to 20 mol, and particularly preferably 2 to 15 mol, per mole of the metal halide.

In the case of using a mixture of two types of alcohols, which is the preferred aspect described above, a proportion of an alcohol having a relatively small number of carbon atoms and an alcohol having a relatively large number of carbon atoms is not particularly limited as long as it is such an amount that a metal halide dissolves, and the lower limit of the proportion of the alcohol having the relatively large number of carbon atoms is 10 mol%, preferably 20 mol%, more preferably 30 mol%,and the upper limit is 95 mol%, preferably 90 mol%,and more preferably 85 mol%.

### (Hydrocarbon solvent)

The hydrocarbon solvent is not particularly limited, but specific examples thereof include, for example, aliphatic hydrocarbons such as hexane, heptane, octane, decane, dodecane, and kerosene; alicyclic hydrocarbons such as cyclopentane, cyclohexane, and methylcyclopentane; aromatic hydrocarbons such as benzene, toluene and xylene; and halogenated hydrocarbons such as ethylene chloride, chlorobenzene and dichloromethane. Among these, from the viewpoint of solubility and reaction temperature, decane, dodecane, toluene, xylene, and chlorobenzene are preferred.

The hydrocarbon solvents may be used singly or two or more types thereof may be used.

The amount of a hydrocarbon solvent to be used is not particularly limited as long as it is an amount that dissolves a metal halide, but from the viewpoint of being able to facilitate, for example, formation of alcohol complex of the metal halide, the amount is preferably 0.1 to 100 mol, more preferably 0.2 to 50 mol, further preferably 0.3 to 40 mol, and particularly preferably 0.5 to 30 mol, per mole of the metal halide.

### · Step (2)

The step (2) is a step of bringing the alcohol complex of the metal halide obtained in the step (1) into contact with an organoaluminum compound and/or an organoaluminum oxy compound and precipitating the dissolved metal halide to then produce the fine particle (A), and usually a suspension thereof is obtained in this step.

The step (2) is carried out under temperature conditions of preferably -50 to 200°C, more preferably -20 to 150°C, and further preferably 0 to 120°C.

In the step (2), when bringing the component obtained in step (1) into contact with the organoaluminum compound and/or the organoaluminum oxy compound, the step is preferably carried out under stirring and mixing. The stirring and mixing may be carried out under normal stirring conditions, but may require stirring and mixing at high speed.

Equipment used for high-speed stirring is not particularly limited as long as it is a commercially available emulsifying machine or dispersing machine, and examples thereof include batch-type emulsifying machines such as ULTRA TURREX (manufactured by IKA-Works inc.), Polytron (manufactured by Kinematica, Inc.), T. K. Auto Homo Mixer (manufactured by Tokushu Kika Kogyo Co., Ltd.), and National Cooking Mixer (manufactured by Matsushita Electric Industrial Co., Ltd.), continuous emulsifying machines such as Ebara Milder (manufactured by Ebara Corporation), T. K. Pipeline Homo Mixer, T.K. Homomic Line Flow (manufactured by Tokushu Kika Kogyo Co., Ltd.), colloid mill (manufactured by Nippon Seiki Co., Ltd.), a thrasher, a Trigonal wet pulverizer (manufactured by Mitsui Miike Kakoki Co., Ltd.), Cavitron (manufactured by Eurotech Co., Ltd.), and Fine Flow Mill (manufactured by Pacific Machinery & Engineering Co., Ltd.); batch-type or continuous dual-use emulsifying machines such as CLEARMIX (manufactured by M Technique Co., Ltd.) and Filmix (manufactured by Tokushu Kika Kogyo Co., Ltd.), highpressure emulsifying machines such as a microfluidizer (manufactured by Mizuho Industrial Co., Ltd.), Nanomaker, Nanomizer (manufactured by Nanomizer Inc.) and APV Gaulin (manufactured by APV Gaulin GmbH); a membrane emulsifying machine such as a membrane emulsifying machine (manufactured by Reika Kogyo Co., Ltd.); a vibration emulsifying machine such as Vibromixer (manufactured by Reika Kogyo Co., Ltd.); and an ultrasonic emulsifying machine such as Ultrasonic Homogenizer (manufactured by Branson Ultrasonics Corporation). In the case of stirring and mixing at high speed, the stirring speed is preferably 5,000 rpm or more.

### (Organoaluminum compound)

Examples of an organoaluminum compound that can be used in the present invention include the compounds represented by the following Formula (Al-1), (Al-2), or (Al-3). First, the compound represented by the following Formula (Al-1) will be described below.

R^{a}ₙAlX₃₋ₙ ··· (Al-1)

wherein in Formula (Al-1), R^{a} is a hydrocarbon group having 1 to 12 carbon atoms, X is a halogen atom or a hydrogen atom, and n is 1 to 3.

The hydrocarbon group having 1 to 12 carbon atoms is, for example, an alkyl group having 1 to 12 carbon atoms, an alkenyl group having 1 to 12 carbon atoms, a cycloalkyl group having 3 to 12 carbon atoms, or an aryl group having 6 to 12 carbon atoms, and specific examples of the hydrocarbon group include a methyl group (Me), an ethyl group (Et), a n-propyl group, an isopropyl group, an isobutyl group (iso-Bu), a pentyl group, a hexyl group, a 2-ethylhexyl group, an octyl group, an isoprenyl group, a cyclopentyl group, a cyclohexyl group, a phenyl group, and a tolyl group.

Specific examples of the organoaluminum compound represented by Formula (Al-1) include trialkylaluminum such as trimethylaluminum, triethylaluminum, triisopropylaluminum, triisobutylaluminum, trioctylaluminum, and tri-2-ethylhexylaluminum; alkenylaluminum such as triisoprenylaluminum; dialkylaluminum halides such as dimethylaluminum chloride, diethylaluminum chloride, diisopropylaluminum chloride, diisobutylaluminum chloride, and dimethylaluminum bromide; alkylaluminum sesquihalides such as methylaluminum sesquichloride, ethylaluminum sesquichloride, isopropylaluminum sesquichloride, butylaluminum sesquichloride and ethylaluminum sesquibromide; alkylaluminum dihalides such as methylaluminum dichloride, ethylaluminum dichloride, isopropylaluminum dichloride, and ethylaluminum dibromide; and alkylaluminum halides such as diethylaluminum hydride and diisobutylaluminum hydride.

As the organoaluminum compound, the compound represented by the following Formula (Al-2) can also be used.

R^{a}ₙAlY₃₋ₙ ··· (Al-2)

wherein in Formula (Al-2), R^{a} is the same substituent as in the above Formula (Al-1), and Y is the group represented by - OR^{b}, -OSiR^{c}₃, -OAlR^{d}₂, -NR^{e}₂, -SiR^{f}₃ or -N(R^{g})AlR^{h}₂, n is an integer of 1 to 2, R^{b}, R^{c}, R^{d} and R^{h} are each for example, a methyl group, an ethyl group, an isopropyl group, an isobutyl group, a cyclohexyl group, and a phenyl group, R^{e} is for example, hydrogen, a methyl group, an ethyl group, an isopropyl group, a phenyl group, and a trimethylsilyl group, and R^{f} and R^{g} are each for example, a methyl group and an ethyl group.

As the organoaluminum compound represented by Formula (Al-2), specifically, the following compounds are used:
(i) Compound represented by R^{a}ₙAl(OR^{b})₃₋ₙ
   Examples of the compound include, for example, alkyl aluminum alkoxides such as dimethylaluminum methoxide, diethylaluminum ethoxide, diisobutylaluminum methoxide, and diethylaluminium-2-ethylhexoxide.
(ii) Compound represented by R^{a}ₙAl(OSiR^{c}₃)₃₋ₙ
   Examples of the compounds include for example, Et₂Al(OSiMe₃), (iso-Bu)₂Al(OSiMe₃), and (iso-Bu)₂Al(OSiEt₃).
(iii) Compound represented by R^{a}ₙAl(OAlR^{d}₂)₃₋ₙ
   Examples of the compound include Et₂AlOAlEt₂ and (iso-Bu)₂AlOAl(iso-Bu)₂.
(iv) Compound represented by R^{a}ₙAl(NR^{e}₂)₃₋ₙ
   Examples of the compounds include for example, Me₂AlNEt₂, Et₂AlNHMe, Me₂AlNHEt, Et₂AlN(Me₃Si)₂, and (iso-Bu)₂AlN(Me₃Si)₂.
(v) Compound represented by R^{a}ₙAl(SiR^{f}₃)₃₋ₙ
   Examples of the compound include for example, (iso-Bu)₂AlSiMe₃.
(vi) Compound represented by R^{a}ₙAl[N(R^{g})-AlR^{h}₂]₃₋ₙ
   Examples of the compound include for example, Et₂AlN(Me)-AlEt₂ and (iso-Bu)₂AlN(Et)Al(iso-Bu)₂.

As the organoaluminum compound, the compound represented by the following Formula (Al-3), which is a complex alkylated product of a Group I metal and aluminum, can be used.

M¹AlR^{j}₄ ··· (Al-3)

wherein in Formula (Al-3), M¹ is a Group I metal atom such as Li, Na, or K, and R^{j} is a hydrocarbon group having 1 to 15 carbon atoms.

Specific examples of the organoaluminum compound represented by Formula (Al-3) include for example, LiAl(C₂H₅)₄ and LiAl(C₇H₁₅)₄.

Of the organoaluminum compounds described above, particularly preferred are trimethylaluminum, triethylaluminum, triisobutylaluminum, trihexylaluminum, trioctylaluminum, diethylaluminum chloride, ethylaluminum sesquichloride, ethylaluminum dichloride, and diisobutylaluminum hydride.

In precipitating a dissolved metal halide to produce the fine particle (A), the amount of organoaluminum compound to be used is preferably 0.1 to 50 mol, more preferably 0.2 to 30 mol, further preferably 0.5 to 20 mol, and particularly preferably 1.0 to 10 mol, per 1 mol of a metal halide.

### (Organoaluminum oxy compound)

The organoaluminum oxy compound is not particularly limited, and conventionally known aluminoxanes (including the benzene-insoluble organoaluminum oxy compound exemplified in JPH2-78687A and the organoaluminum oxy compound containing boron exemplified in JP2021-147437A), can be used.

Examples of the organoaluminum oxy compound include methylaluminoxane, ethylaluminoxane, and isobutylaluminoxane, and specific examples thereof include the organoaluminum oxy compound described in JP2021-147437A.

The organoaluminum oxy compound may be used singly, or two or more types thereof may be used.

A conventionally known aluminoxane can be produced, for example, by the following methods, and is usually obtained as an aluminoxane solution of a hydrocarbon solvent.
(1) A method in which to a hydrocarbon medium suspension such as a compound containing adsorbed water or salt containing crystal water, for example, magnesium chloride hydrate, copper sulfate hydrate, aluminum sulfate hydrate, nickel sulfate hydrate, or cerium (III) chloride hydrate, is added an organoaluminum compound such as trialkyl aluminium to react the adsorbed water or crystal water with the organoaluminum compound.
(2) A method in which in a medium such as benzene, toluene, ethyl ether, or tetrahydrofuran, water, ice, or steam is directly acted with an organoaluminum compound such as trialkyl aluminum.
(3) A method in which in a medium such as decane, benzene, or toluene, an organoaluminum compound such as trialkyl aluminum is reacted with an organotin oxide such as dimethyltin oxide or dibutyltin oxide.

Note, however, the aluminoxane may contain a small amount of organic metal component. Moreover, after distilling and removing a solvent or an unreacted organoaluminum compound from the collected aluminoxane solution, the obtained aluminoxane may be redissolved in a solvent or suspended in a poor solvent for the aluminoxane.

Specific examples of the organoaluminum compound to be used in preparing an aluminoxane include the same organoaluminum compounds as those exemplified above. Among these, the trialkyl aluminum and tricycloalkyl aluminum are preferred with the trimethyl aluminum being particularly preferred.

The above organoaluminum compounds may be used singly or may be combined for use with two or more thereof.

Examples of a solvent to be used in preparation of aluminoxane include aromatic hydrocarbons such as benzene, toluene, xylene, cumene, and cymene; aliphatic hydrocarbons such as pentane, hexane, heptane, octane, decane, dodecane, hexadecane, and octadecane; alicyclic hydrocarbons such as cyclopentane, cyclohexane, cyclooctane, and methylcyclopentane; petroleum fractions such as gasoline, kerosene, and light oil; or halides of the aromatic hydrocarbons, aliphatic hydrocarbons, and alicyclic hydrocarbons, particularly hydrocarbon solvents such as a chlorinated solvent and brominated solvent. Furthermore, ethers such as ethyl ether and tetrahydrofuran can also be used. Among these solvents, the aromatic hydrocarbons or aliphatic hydrocarbons are particularly preferred.

The benzene-insoluble organoaluminum oxy compound used in the present invention has an Al component that dissolves in benzene at 60°C usually in an amount of 10% or less, preferably 5% or less, and particularly preferably 2% or less, in terms of Al atom, that is, the benzene-insoluble organoaluminum oxy compound is preferably insoluble or sparingly soluble in benzene.

Examples of the organoaluminum oxy compound that can also be used in the present invention can include the boron-containing organoaluminum oxy compound represented by the following general formula (III). 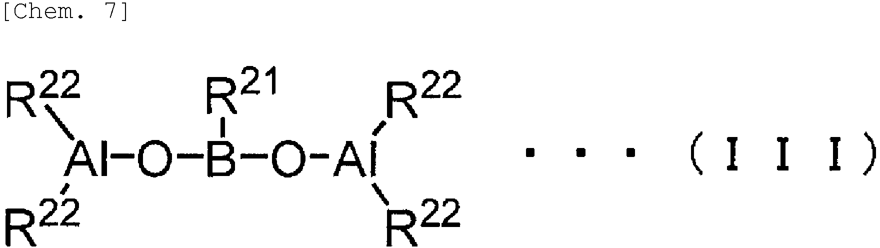 wherein in the general formula (III), R²¹ represents a hydrocarbon group having 1 to 10 carbon atoms, and four R²² groups may be the same as or different from each other, which are each a hydrogen atom, a halogen atom, or a hydrocarbon group having 1 to 10 carbon atoms.

The boron-containing organoaluminum oxy compound represented by the general formula (III) can be produced by reacting the alkylboronic acid represented by the following general formula (IV) and an organoaluminum compound in an inert solvent under an inert gas atmosphere at a temperature of -80°C to room temperature for 1 minute to 24 hours.

R²²-B(OH)₂ ··· (IV)

wherein in the general formula (IV), R²² represents the same group as R²² in the above general formula (III).

Specific examples of the alkylboronic acid represented by the general formula (IV) include, for example, methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluoroboronic acid, pentafluorophenylboronic acid, and 3,5-bis(trifluoromethyl)phenylboronic acid. Among these, methylboronic acid, n-butylboronic acid, isobutylboronic acid, 3,5-difluorophenylboronic acid, and pentafluorophenylboronic acid are preferred. These may be used singly or in combinations of two or more thereof.

Specific examples of the organoaluminum compound to be reacted with such alkylboronic acids include the same organoaluminum compounds as those exemplified above. As the organoaluminum compound, the trialkylaluminum and tricycloalkylaluminum are preferable, and the trimethylaluminum, triethylaluminum, and triisobutylaluminum are particularly preferable. These may be used singly or in combinations of two or more thereof.

In precipitating a dissolved metal halide to produce the fine particle (A), the amount of the organoaluminum oxy compound used is preferably 0.1 to 50 mol, more preferably 0.2 to 30 mol, further preferably 0.5 to 20 mol, and particularly preferably 1.0 to 10 mol, per 1 mol of the metal halide.

### (Fine particle (A))

The fine particle (A) that is obtained via at least the step (1) above and the step (2), has the average particle size of 1 nm or larger and 300 nm or smaller, preferably 1 nm or larger and 250 nm or smaller, more preferably 1 nm or larger and 200 nm or smaller, further preferably 1 nm or larger and 150 nm or smaller, even further preferably 1 nm or larger and 100 nm or smaller, and particularly preferably 1 nm or larger and 50 nm or smaller, as measured by dynamic light scattering.

The reason for preference to use the microparticle having such a size can be considered as follows. Using the aforementioned fine particle as a catalyst support allows a specific surface area of the support to be increased, as a result of which a distance between active sites upon ethylene polymerization, which are generated when the transition metal compound (B) described below was supported, is lengthened. When the distance between the active sites is lengthened as in this case, heat generation around the active sites decreases, the crystallization temperature of the ethylenic polymer to be created lowers, and a lamella thickness becomes thin. It is also possible to reduce entanglement of polymer molecular chains of the ethylenic polymer to be created. Due to these characteristics, use of the fine particle of the present invention as the catalyst support facilitates pulverization of an ethylenic polymer particle to be obtained in a crystal portion thereof upon stretch, thereby enhancing its stretch moldability, as a result of which the particle is presumed to have a higher degree of orientation and exhibit a high strength.

Using the fine particle with such a size as a catalyst support allows the specific surface area of the support to be increased as described above, and therefore, when securing the same distance between active sites as in the case of a conventional support, the amount of transition metal supported per support particle can be increased, thereby enabling enhancing olefin polymerization activity per catalyst weight.

### [Step <ii>]

The step <ii> is a step of bringing the suspension obtained in the step <i> into contact with a transition metal compound (B). The step <ii> is preferably carried out at a temperature of -50 to 100°C and more preferably 0 to 70°C.

### (Transition metal compound (B))

As the transition metal compound used in the present invention, a known metallocene compound and a specific organic transition metal complex compound such as a so-called post-metallocene may be used without limitation as long as, for example, the intrinsic viscosity of the ethylenic polymer particle described below can be achieved.

As the transition metal compound (B) contained in the olefin polymerization catalyst-containing liquid in the present invention, an organic transition metal complex having the so-called phenoxyimine ligand described in JPH11-315109A is particularly preferable. Specifically, a preferred aspect thereof includes an organic transition metal complex having the structural formula of the following general formula (II).

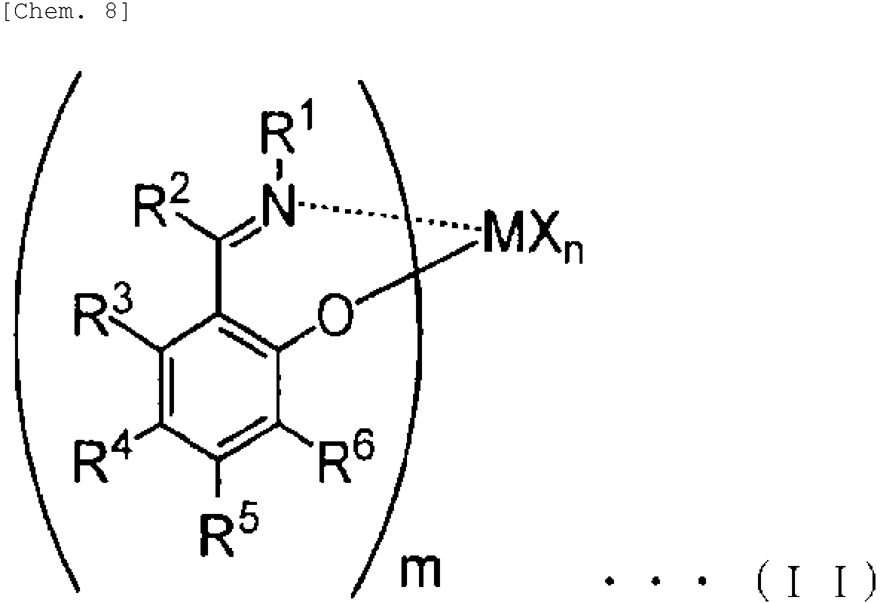

In the general formula (II), M represents a transition metal atom of Group 4 or 5 of the periodic table and preferably a transition metal atom of Group 4. Specifically, it is for example, titanium, zirconium, hafnium, vanadium, niobium, and tantalum, more preferably titanium, zirconium, and hafnium, and particularly preferably titanium or zirconium.

In general formula (II) above, the dotted line connecting N and M generally indicates that N is coordinated with M, but, in the present invention, N may or may not be coordinated.

In general formula (II) above, m represents an integer of 1 to 4, preferably an integer of 2 to 4, and further preferably 2.

In the general formula (II), R¹ to R⁵ may be the same as or different from each other and each represents a hydrogen atom, a halogen atom, a halogen-containing group, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, and two or more of these may be connected to each other to form a ring.

Examples of the halogen atom include fluorine, chlorine, bromine, and iodine.

Examples of the hydrocarbon group include a linear or branched aliphatic hydrocarbon group having 1 to 30 carbon atoms, a cyclic hydrocarbon group having 3 to 30 carbon atoms, or an aromatic hydrocarbon group having 6 to 30 carbon atoms. Specific examples thereof include, for example, linear or branched alkyl groups having 1 to 30 carbon atoms, preferably 1 to 20 carbon atoms, and further preferably 1 to 10 carbon atoms, such as a methyl group, an ethyl group, a n-propyl group, an isopropyl group, a n-butyl group, an isobutyl group, a sec-butyl group, a t-butyl group, a neopentyl group, and a n-hexyl group; linear or branched alkenyl groups having 2 to 30 carbon atoms and preferably 2 to 20 carbon atoms, such as a vinyl group, an allyl group, and an isopropenyl group; linear or branched alkynyl groups having 2 to 30 carbon atoms, preferably 2 to 20 carbon atoms, and further preferably 2 to 10 carbon atoms, such as an ethynyl group and a propargyl group; cyclic saturated hydrocarbon groups having 3 to 30 carbon atoms, preferably 3 to 20, and further preferably 3 to 10 carbon atoms, such as a cyclopropyl group, a cyclobutyl group, a cyclopentyl group, a cyclohexyl group, a cycloheptyl group, and an adamantyl group; cyclic unsaturated hydrocarbon groups having 5 to 30 carbon atoms, such as a cyclopentadienyl group, an indenyl group, and a fluorenyl group; aryl groups having 6 to 30 carbon atoms, preferably 6 to 20, and further preferably 6 to 10 carbon atoms, such as a phenyl group, a naphthyl group, a biphenyl group, a terphenyl group, a phenanthryl group, and an anthracenyl group; and alkyl-substituted aryl groups such as a tolyl group, an iso-propylphenyl group, a t-butylphenyl group, a dimethylphenyl group, and a di-t-butylphenyl group.

The hydrocarbon group may be such that the hydrogen atom is substituted with a halogen, and examples of the hydrocarbon group in which the hydrogen atom is substituted with a halogen include, for example, halogenated hydrocarbon groups having 1 to 30 carbon atoms and preferably 1 to 20 carbon atoms, such as a trifluoromethyl group, a pentafluorophenyl group, and a chlorophenyl group.

The hydrocarbon group may be substituted with other hydrocarbon group, and examples of the hydrocarbon group substituted with such a hydrocarbon group include, for example, aryl group-substituted alkyl groups such as a benzyl group and a cumyl group.

The hydrocarbon group may have a heterocyclic compound residue; oxygen-containing groups such as an alkoxy group, an aryloxy group, an ester group, an ether group, an acyl group, a carboxyl group, a carbonate group, a hydroxy group, a peroxy group, and a carboxylic acid anhydride group; nitrogen-containing groups such as an amino group, an imino group, an amide group, an imido group, a hydrazino group, a hydrazono group, a nitro group, a nitroso group, a cyano group, an isocyano group, a cyanic acid ester group, an amidino group, a diazo group, a group such that an amino group is converted to an ammonium salt; boron-containing groups such as a boranediyl group, a boranetriyl group, and a diboranyl group; sulfur-containing groups such as a mercapto group, a thioester group, a dithioester group, an alkylthio group, an arylthio group, a thioacyl group, a thioether group, a thiocyanic acid ester group, an isothionic acid ester group, a sulfone ester group, a sulfone amide group, a thiocarboxyl group, a dithiocarboxyl group, a sulfo group, a sulfonyl group, a sulfinyl group, and sulfenyl group; phosphorus-containing groups such as a phosphide group, a phosphoryl group, a thiophosphoryl group and a phosphate group; a silicon-containing group; a germanium-containing group; or a tin-containing group.

Examples of the heterocyclic compound residue include, for example, residues of nitrogen-containing compounds such as pyrrole, pyridine, pyrimidine, quinoline, and triazine, oxygen-containing compounds such as furan and pyran, and a sulfur-containing compound such as thiophene, as well as groups in which these heterocyclic compound residues were further substituted with substituents such as an alkyl group or an alkoxy group, having 1 to 30 carbon atoms and preferably 1 to 20 carbon atoms.

Examples of the silicon-containing group include, for example, a silyl group, a siloxy group, a hydrocarbon-substituted silyl group, and a hydrocarbon-substituted siloxy group, and more specific examples thereof include, for example, a methylsilyl group, a dimethylsilyl group, a trimethylsilyl group, an ethylsilyl group, a diethylsilyl group, a triethylsilyl group, a diphenylmethylsilyl group, a triphenylsilyl group, a dimethylphenylsilyl group, a dimethyl-t-butylsilyl group, and a dimethyl (pentafluorophenyl)silyl group. Among these, preferred are, for example, the methylsilyl group, dimethylsilyl group, trimethylsilyl group, ethylsilyl group, diethylsilyl group, triethylsilyl group, dimethylphenylsilyl group, and triphenylsilyl group, and particularly preferred are the trimethylsilyl group, triethylsilyl group, triphenylsilyl group, and dimethylphenylsilyl group. Specific examples of the hydrocarbon-substituted siloxy group include, for example, a trimethylsiloxy group.

Examples of the germanium-containing group or the tin-containing group include a group in which silicon in the silicon-containing group is substituted with germanium or tin.

Among the groups listed as groups that the hydrocarbon group may have, specific examples of the alkoxy group include, for example, a methoxy group, an ethoxy group, a n-propoxy group, an isopropoxy group, a n-butoxy group, an isobutoxy group, and a t-butoxy group, specific examples of the aryloxy group include, for example, a phenoxy group, a 2,6-dimethylphenoxy group, and a 2,4,6-trimethylphenoxy group, specific examples of the ester group include, for example, an acetyloxy group, a benzoyloxy group, a methoxycarbonyl group, a phenoxycarbonyl group, and a p-chlorophenoxycarbonyl group, examples of the acyl group include, for example, a formyl group, an acetyl group, a benzoyl group, a p-chlorobenzoyl group, and p-methoxy benzoyl group, specific examples of the amino group include, for example, a dimethylamino group, an ethylmethylamino group, and a diphenylamino group, specific examples of the imino group include, for example, a methylimino group, an ethylimino group, a propylimino group, a butylimino group, and a phenylimino group, specific examples of the amide group include, for example, an acetamide group, a N-methylacetamide group, and a N-methylbenzamide group, specific examples of the imide group include, for example, an acetamide group and a benzimide group; specific examples of the thioester group include, for example, an acetylthio group, a benzoylthio group, a methylthiocarbonyl group, and a phenylthiocarbonyl group; specific examples of the alkylthio group include, for example, a methylthio group and an ethylthio group; specific examples of the arylthio group include, for example, a phenylthio group, a methylphenylthio group, and a naphthylthio group, specific examples of the sulfone ester group include, for example, a methyl sulfonate group, an ethyl sulfonate group, and a phenyl sulfonate group, and specific examples of the sulfonamide group include, for example, a phenyl sulfonamide group, a N-methylsulfonamide group, and a N-methyl-p-toluene sulfonamide group.

As the hydrocarbon group, particularly preferred are linear or branched alkyl groups having 1 to 30 carbon atoms and preferably 1 to 20 carbon atoms, such as a methyl group, an ethyl group, a n-propyl group, an isopropyl group, a n-butyl group, an isobutyl group, a sec-butyl group, a t-butyl group, a neopentyl group, and a n-hexyl group; aryl groups having 6 to 30 carbon atoms and preferably 6 to 20 carbon atoms, such as a phenyl group, a naphthyl group, a biphenyl group, a terphenyl group, a phenanthryl group, and an anthracenyl group; substituted aryl groups in which these aryl groups are substituted with 1 to 5 substituents such as a halogen atom, an alkyl group or alkoxy group having 1 to 30 carbon atoms and preferably 1 to 20 carbon atoms, or an aryl group or aryloxy group having 6 to 30 carbon atoms and preferably 6 to 20 carbon atoms.

As described above, R¹ to R⁵ can be heterocyclic compound residues, oxygen-containing groups, nitrogen-containing groups, boron-containing groups, sulfur-containing groups, phosphorus-containing groups, silicon-containing groups, germanium-containing groups or tin-containing groups, however, examples thereof include the same groups as those exemplified in the description of the hydrocarbon groups.

From the viewpoint of ethylene polymerization catalytic activity as well as the ability to synthesize a high molecular weight ethylenic polymer, the above R¹ is preferably a linear or branched hydrocarbon group having 1 to 20 carbon atoms, an alicyclic hydrocarbon group having 3 to 20 carbon atoms, an aromatic hydrocarbon group having 6 to 20 carbon atoms, or a group in which at least a moiety of these groups is substituted with a halogen atom, and more preferably a halogen-substituted aromatic hydrocarbon group.

From the viewpoint of ethylene polymerization catalytic activity, the ability to synthesize a high molecular weight ethylenic polymer, as well as hydrogen resistance upon polymerization, for example, the above R⁶ is preferably an aliphatic hydrocarbon group having 4 or more carbon atoms, an aryl group-substituted alkyl group, a monocyclic or bicyclic alicyclic hydrocarbon group, or an aromatic hydrocarbon group, more preferably a branched hydrocarbon group such as a t-butyl group; aryl-substituted alkyl groups such as a benzyl group, a 1-methyl-1-phenylethyl group, a 1-methyl-1,1-diphenylethyl group, and 1,1,1-triphenylmethyl group; and alicyclic hydrocarbon groups having an alicyclic or multiple ring structure having 6 to 15 carbon atoms, such as a cyclohexyl group having a hydrocarbon group at the 1-position, an adamantyl group, a norbornyl group, and a tetracyclododecyl group, and further preferably a branched hydrocarbon group.

In the general formula (II), n is a numeral satisfying a valence of M, and X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group, and when n is 2 or greater, the plurality of groups represented by X may be the same as or different from each other, and the plurality of groups represented by X may be bonded to each other to form a ring.

In the above X, examples of the halogen atom, hydrocarbon group, heterocyclic compound residue, oxygen-containing group, nitrogen-containing group, boron-containing group, sulfur-containing group, phosphorus-containing group, silicon-containing group, germanium-containing group, and tin-containing group, include the same groups as those exemplified in the description of R¹ to R⁵ above. Among these, preferred are the halogen atom and hydrocarbon group.

The transition metal compound used herein, represented by the above general formula (II) can be produced by the production method described in JPH3-130116A without limitation.

The amount of transition metal compound (B) to be used is preferably 1 to 10,000 mol, more preferably 10 to 3,000 mol, and further preferably 50 to 1,500 mol, per mol of a metal halide.

### [Step <iii>]

The step <iii> is a step of adding a compound (F) containing the molecular backbone represented by the following general formula (I). The compound (F) is the compound (F) described in the aforementioned ethylenic polymer particle [2].

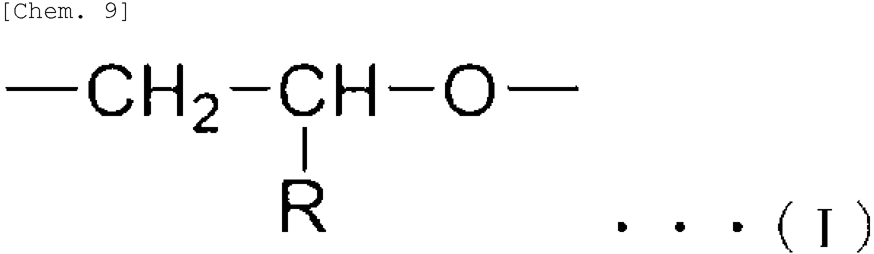

In the present production method, the step <iii> is carried out between the step <i> and the step <ii>, after the step <ii>, or between the step <i> and the step <ii> and after the step <ii>. Within the range of the concentration of compound (F) described below, the step <iii> may be carried out not only once but also two or more times. Use of the olefin polymerization catalyst-containing liquid produced by adding the compound (F) at the aforementioned timing can inhibit fouling upon polymerization. Adding the compound (F) upon polymerization instead of its addition after the polymerization allows the compound (F) to penetrate into an inside of a polymer particle, then to be able to obtain a stretch-molded body more excellent in its stretch moldability and a strength, making it possible for a binder with few coarse particles and excellent in bindability to be easily obtained. Use of such a polymer particle tends to be able to facilitate producing a molded body having a sufficient strength and capable of supporting on its own in spite of having a thin thickness by a dry method.

A temperature of a suspension upon addition of compound (F) is preferably 0 to 80°C and more preferably 20 to 70°C, from the viewpoint of contact efficiency between the compound (F) and other constituents in an ethylene polymerization catalyst-containing liquid.

A time taken from the above step <iii> to the next step is preferably 0 to 60 minutes, more preferably 0 to 40 minutes, and further preferably 0 to 20 minutes.

Carrying out steps from the step <iii> to the next step within this time enables proceeding to a polymerization stage without impairing catalytic activity of the ethylene polymerization catalyst-containing liquid.

The concentration of the compound (F) in the polymerization catalyst-containing liquid is greater than 1 mg/L and 150 mg/L or less. Within the aforementioned range of the concentration of compound (F), an ethylenic polymer particle after polymerization has excellent stretch moldability, and the content of coarse particles can be reduced, resulting in improvement in flowability within a pipe upon their transfer. Furthermore, from the viewpoint of inhibiting development of coarse particle, the concentration of compound (F) is more preferably 2.5 mg/L or higher and 100 mg/L or lower and further preferably 4.0 mg/L or higher and 75.0 mg or lower.

### [Other component that can be used in olefin polymerization catalyst-containing liquid]

It is essential for the olefin polymerization catalyst-containing liquid used in the present production method to contain the aforementioned fine particle (A), transition metal compound (B), and compound (F).

For the purpose of producing the ethylenic polymer particle with higher activity and adjusting the physical properties of an ethylenic polymer particle to be obtained, the olefin polymerization catalyst-containing liquid can be optionally added with other component in addition to the fine particle (A), transition metal compound (B) and compound (F).

Examples of the compound that can representatively be used as the other component include a compound (C) that reacts with the transition metal compound (B) to form an ion pair, and an organoaluminum oxy compound (D). The other component can be used without any particular limitation as long as it does not prevent performance of the olefin polymerization catalyst-containing liquid containing the fine particle (A), transition metal compound (B), and compound (F). Examples of compounds that can be used as the compound (C) and the compound (D) include the same compounds as those described in Patent Literature 1.

### <Step [β] >

The step [β] is a step of homopolymerizing ethylene in the presence of the ethylene polymerization catalyst-containing liquid prepared in the step [α], or copolymerizing ethylene with the other monomer to produce an ethylenic polymer particle.

The polymerization may be carried out in batchwise manner, semi-continuous manner or continuous manner.

The polymerization may be either of a liquid phase polymerization method such as suspension polymerization or a gas phase polymerization method.

In the liquid phase polymerization method, one or two or more types of inert hydrocarbon media can be used.

Specific examples of the inert hydrocarbon medium include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; and halogenated hydrocarbons such as ethylene chloride, chlorobenzene, and dichloromethane; and each monomer itself can also be used as a solvent.

Upon the aforementioned polymerization, the transition metal compound (B) is used in an amount such that it is usually 10⁻¹¹ to 10 mmol and preferably 10⁻⁹ to 1 mmol per 1 liter of reaction volume in terms of a metal atom in the transition metal compound (B).

When using the compound (C), it is used in an amount such that a molar ratio [(C)/(M)] of the compound (C) to all transition metal atoms (M) in the transition metal compound (B) is usually 0.01 to 100,000 and preferably 0.05 to 50,000.

When using the compound (D), it is used in an amount such that a molar ratio[(D)/(M)] of the compound (D) to all transition metal atoms (M) in transition metal compound (B) is usually 0.01 to 100,000 and preferably 0.05 to 50,000.

A polymerization temperature in the polymerization is preferably -20 to 150°C. The lower limit of the polymerization temperature is more preferably 0°C, further preferably 20°C, and particularly preferably 30°C, and the upper limit of the polymerization temperature is more preferably 120°C, further preferably 100°C, and particularly preferably 80°C.

Polymerization pressure in the polymerization is usually normal pressure to 10 MPa and preferably normal pressure to 5 MPa.

The polymerization may be so-called multi-stage polymerization, in which and reaction is carried out in separate two or more stages while the polymerization reaction conditions are changed.

A molecular weight of an ethylenic polymer particle to be obtained can be adjusted by a method for allowing hydrogen to be present in a polymerization system and a method for changing a polymerization temperature or polymerization pressure, for example.

In the present invention, ethylene is preferably homopolymerized. In the case of copolymerization of ethylene and an α-olefin, as an α-olefin having 3 to 20 carbon atoms to be copolymerized with ethylene is preferably an α-olefin having 3 to 10 carbon atoms and more preferably an α-olefin having 3 to 8 carbon atoms. Specific examples of the α-olefin can include linear olefins such as propylene, 1-butene, 1-pentene, 1-hexene, 1-octene, and 1-decene; branched olefins such as 4-methyl-1-pentene, 3-methyl-1-pentene, and 3-methyl-1-butene, with propylene, 1-butene, 1-hexene, and 4-methyl-1-pentene being preferred. The above α-olefins can be used singly or in combinations of two or more thereof. The content of α-olefin, i. e., a molar ratio of a repeating unit derived from an α-olefin copolymerized with ethylene to all repeating units, is 5 mol% or less, preferably 2 mol% or less, and more preferably 0.5 mol% or less.

In a case in which an ethylenic polymer constituting the ethylenic polymer particle obtained by the present production method is an ethylene homopolymer, it has few structural defects due to branching, resulting in a stretch-molded body with excellent stretch moldability and a high strength. Thus, from the viewpoint of increasing a degree of crystallinity and improving the stretch moldability in solid phase stretch molding, an ethylene homopolymer is preferable. In the case of a copolymer of ethylene and an α-olefin, when the content of α-olefin is greater than the aforementioned range, on the other hand, structural defects result from a branch derived from the α-olefin, making it unable to obtain a sufficient strength of the copolymer. Note, however, the ethylene content in the ethylenic polymer can be measured by a known measurement method such as nuclear magnetic resonance (NMR) spectroscopy or infrared absorption spectroscopy.

### <Ethylenic polymer particle>

The ethylenic polymer particle obtained by the present production method (hereinafter also referred to as an "ethylenic polymer particle [3]") has the following characteristics (1).

(1) The intrinsic viscosity [η] measured at 135°C in a decalin solvent is 5 to 50 dl/g.

The intrinsic viscosity [η] is preferably 5 to 50 dl/g, more preferably 7 to 50 dl/g, further preferably 10 to 45 dl/g, particularly preferably 15 to 45 dl/g, and especially preferably 20 to 45 dl/g. Within the above range of the intrinsic viscosity [η] of the ethylenic polymer particle, the flowability of the ethylenic polymer particle becomes further favorable. The intrinsic viscosity [η] lower than the above range, lowers a resin strength, and the intrinsic viscosity [η] higher than the above range, makes it difficult to carry out stretch molding. As described above, the ethylenic polymer, the intrinsic viscosity [η] of which is within the above range usually tends to have an extremely high molecular weight, as a result of which the ethylenic polymer particle can be said to be composed of an ultrahigh molecular weight ethylenic polymer.

The ethylenic polymer particle obtained by the present production method preferably further has the following characteristics (2) and (3).

(2) The specific surface area determined by a BET method from the adsorption/desorption isotherms measured by a nitrogen gas adsorption method is larger than 2.00 m²/g and 30.0 m²/g or smaller.

The specific surface area refers to the total specific surface area that is a sum of all the specific surface areas determined by the BET method from the adsorption/desorption isotherms measured by the nitrogen gas adsorption method, and is usually larger than 2.00 m²/g and 30.0 m²/g or smaller, preferably 2.50 to 28.0 m²/g, more preferably 3.00 to 26.0 m²/g, further preferably 4.00 to 20.0 m²/g, and even further preferably 5.00 to 18.0 m²/g. Within the above range of the total specific surface area, stretch moldability in particular solid-phase stretching moldability, is excellent. The ethylenic polymer particle subjected to solid state stretch molding, can yield a stretch-molded body with an extremely high strength and a uniform microporous membrane.

(3) An acetone extract of the ethylenic polymer particle contains the compound (F).

The weight-average molecular weight (Mw) of the compound (F) as determined by gel permeation chromatography (GPC) is preferably in a range of 500 or higher and 30,000 or lower. The oxyarene backbone that the compound (F) has can be identified by a known analytical technique such as nuclear magnetic resonance (NMR) spectroscopy, as described below.

The content of compound (F) eluted from the ethylenic polymer particle, calculated from the liquid chromatography mass (LC-MS) analysis described below, is more preferably 6 ppm or more and 1,000 ppm or less relative to the ethylenic polymer particle.

When the ethylenic polymer particle is sieved on a 1 mm x 1 mm mesh sieve for a shaking time of 10 minutes at an amplitude of 0.5 mm and an interval of 15 seconds, the amount of polymer particles not passing through the sieve (coarse particle amount) is more preferably 20% by mass or less.

The bulk density (B.D.) of the ethylenic polymer particle is more preferably 0.01 to 0.20 g/mL.

Since a portion of the magnesium halide used upon production of an ethylenic polymer particle is usually contained in the ethylenic polymer particle, the magnesium content of the ethylenic polymer particle corresponds to the concentration of magnesium halide upon production described above. The ethylenic polymer particle of the present invention more preferably contains 10 to 2,000 ppm of magnesium.

### <Stretch-molded body obtained from ethylenic polymer particle [3] and method for producing same>

A stretch-molded body can be obtained by stretch molding the ethylenic polymer particle [3]. As described above, the ethylenic polymer particle [3] has favorable flowability and therefore has favorable molding processability. For example, favorable molding processability allows a stretch-molded body with a very high mechanical strength to be obtained in solid phase stretch molding. Examples of the stretch-molded body and the method for producing the same include the same stretch-molded body and method as those described in

### <<Stretch-molded body obtained from ethylenic polymer particle [2] and method for producing same>>.

The ethylenic polymer particle [3] can be dissolved or mixed in an appropriate solvent or plasticizer to prepare a gel-like mixture, which can be used also to obtain a molded body with a high strength by a known gel spinning technique.

For the stretch-molded body composed of the ethylenic polymer particle [3], use of a so-called ultrahigh molecular weight ethylenic polymer particle that has a high intrinsic viscosity [η] tends to enable obtaining a molded body with an even higher strength.

As the stretch-molded body, a solid phase stretch-molded body molded by the solid phase stretch molding method is particularly preferable. The solid phase stretch molding method is a method of molding without using a solvent, therefore which uses relatively simple molding facilities and has less adverse effect on the environment. Thus, providing stretch-molded bodies using such a method is considered to highly contribute to the society.

The ethylenic polymer particle [3] exhibits extremely high stretching performance when subjected to the solid phase stretch molding, thereby enabling obtaining with a high strength, for example, fibers, films, sheets, and biomaterials such as bone substitute materials.

The ethylenic polymer particle [3] is also useful for producing a microporous membrane. A thickness of the microporous membrane varies depending on its applications, but is usually 0.1 to 1000 pm, preferably 1 to 500 pm. The thickness of the microporous membrane can be measured using a commercially available film thickness measurement apparatus. The microporous membrane preferably has pores. Porosity of the microporous membrane depends on its applications, but is preferably 30 to 95% and more preferably 40 to 90%. Such an aspect is preferable from the viewpoints of a gas permeability and mechanical strength.

For conditions of the solid phase stretch molding method, known conditions can be used without any limitation, except for using the ethylenic polymer particle [3]. For example, it can be fabricated under the same conditions as those of the solid phase stretch molding method of the stretch-molded body according to the first aspect of the present invention described above.

Using the ethylenic polymer particles [3] can obtain a stretch-molded body having a stretching ratio of 50 times or more. The stretching ratio is preferably 80 times or more, more preferably 100 times or more, and further preferably 120 times or more. The stretching ratio within the above range, can be said to be sufficiently high.

By using the ethylenic polymer particle [3], the tensile stress upon stretch lowers than that of a conventional polymer. Therefore, this tends to enable more uniform stretching. The stress upon stretch is preferably 30 MPa or less, more preferably 25 MPa or less, further preferably 23 MPa or less, further preferably 20 MPa or less, and particularly preferably 16 MPa or less.

Since the stretch-molded body can be molded at the high stretching ratio as described above, it is expected to have high a tensile modulus and tensile strength. A tensile modulus of a stretch-molded body to be obtained is preferably 80 GPa or higher, more preferably 120 GPa or higher, and further preferably 140 GPa or higher. A strength of a stretch-molded body to be obtained is preferably 1 GPa or more, more preferably 2 GPa or more, further preferably 2.5 GPa or more, and particularly preferably 3 GPa or more.

The method for producing the above-described stretch-molded body can be a similar method as the method for producing the stretch-molded body of stretch-molded body according to the second aspect of the present invention described above.

### <<Binder>>

The binder according to the fourth aspect of the present invention (hereinafter also referred to as "the present binder") contains the aforementioned ethylenic polymer particles [1] to [3] (hereinafter also collectively referred to as "ethylenic polymer particles [4]").

### <Ethylenic polymer particle [4]>

The ethylenic polymer particle [4] is an ethylenic polymer particle, and therefore has a higher surface free energy than resins that have been used for conventional binders for electrodes, such as a polytetrafluoroethylene (PTFE) and a polyvinylidene difluoride (PVDF), and has a high affinity with a target component to be bonded (particularly an inorganic material), as well as has excellent bindability of the target component to be bonded (particularly between inorganic materials). Furthermore, the ethylenic polymer particle [4] tends to have excellent resistance to a solvent such as an electrolytic solution and electrical properties. Since the ethylenic polymer can also be likely to be fibrillated as is the case of, for example, PTFE and PVDF, it can exhibit a higher effect on connecting target components to be bonded.

The ethylenic polymer particle [4] is preferably an ultrahigh molecular weight ethylenic polymer particle.

The ethylenic polymer particle [4] to be used in the present binder may be used singly or two or more types thereof may be used.

The content of ethylenic polymer particle [4] in the present binder is preferably 70% by mass or more, more preferably 80% by mass or more, further preferably 90% by mass or more, particularly preferably 95 to 100% by mass, and even further preferably 100% by mass.

Within the above range of the content of ethylenic polymer particle [4], a molded body excellent in bindability and capable of supporting on its own in spite of having a thin thickness, can be easily produced by a dry method.

The specific surface area of the ethylenic polymer particle [4] being within the ranges as described in the ethylenic polymer particles [1] to [3], enables facilitation to produce a molded body excellent in bindability and capable of supporting on its own in spite of having a thin thickness by the dry method.

When the median diameter (D50) of the ethylenic polymer particle [4] is within the ranges of D50 described in the ethylenic polymer particles [1] to [3], the ethylenic polymer particle [4] is excellent in its handleability (flowability), thereby improving dispersibility with a material to be bonded. This can facilitate obtaining a molded body excellent in uniformity (uniformity in mixed state, uniformity in dimensions and surface conditions of the molded body).

When the intrinsic viscosity [η] of the ethylenic polymer particle [4] is within the ranges of the intrinsic viscosities [η] as described in the ethylenic polymer particles [1] to [3], the bindability is excellent.

For example, also upon fabricating a molded body by a dry method, the molded body may also be fabricated by pressing a material to be formed into the molded body (for example, an electrode composite material). Within the above range of the intrinsic viscosity [η], a molded body capable of supporting on its own in spite of having a thin thickness can be easily produced by a dry method. Furthermore, upon the press, the ethylenic polymer particle [4] hardly flows out from a molded body even though being in a molten state, and can retain the particle shape, thereby making it possible to improve adhesiveness for components other than the ethylenic polymer particle [4] in the molded body and inhibit them from falling off from the molded body. As a result, in the case of the molded body of an electrode mixture layer, using the electrode mixture layer allows, for example, lithium ions to be stably intercalated and released.

The bulk density of the ethylenic polymer particle [4] being within the ranges as described in the bulk densities of the ethylenic polymer particles [1] to [3], enables facilitation to produce a molded body having excellent handleability and a sufficient strength, and capable of supporting on its own in spite of having a thin thickness by the dry method.

In a case in which a large amount of coarse particles are contained in the ethylenic polymer particle [4], when transferred after polymerization, the ethylenic polymer particle cannot have sufficient flowability, as a result of which clogging may occur in a valve, pump, and strainer, for example. From the viewpoint of capable of inhibiting such troubles, for example, the content of coarse particles is preferably in the above range. Within the above range of the content of coarse particles, the ethylenic polymer particle is excellent in transferability in manufacture and processing step of the ethylenic polymer particle, making it possible to facilitate obtaining a uniform particle and to facilitate production of a molded body having a sufficient strength and capable of supporting on its own in spite of having a thin thickness by the dry process. An electrode mixture layer obtained by using the ethylenic polymer particle [4] in which the content of coarse particles falls within the range as that described in the coarse particle content of ethylenic polymer particle [2] or [3], is unlikely to develop electrical defects, and use of the electrode mixture layer tends to inhibit reduction of battery capacity.

When the content of compound (F) in the ethylenic polymer particle [4] is within the range as that described in the aforementioned content of compound (F) in the ethylenic polymer particle [2] or [3], a particle with excellent flowability and low content of coarse particles is likely to be obtained, making it possible to obtain a uniform binder excellent in bindability. Using the ethylenic polymer particle [4] enables facilitation to produce a molded body that is uniform and can support on its own in spite of having a thin thickness by the dry method.

### <Other component>

The present binder may contain other component in addition to the ethylenic polymer particle [4].

The other component is not particularly limited and examples thereof include conventionally known components, such as an olefinic polymer particle other than the ethylenic polymer particle [4], a polyvinyl acetate, a polymethyl methacrylate, a carboxymethyl cellulose (CMC), a nitrocellulose, a fluororesin, and a rubber particle.

Examples of the fluororesin include, for example, PTFE, PVDF, a tetrafluoroethylene-hexafluoropropylene copolymer (FEP), and a vinylidene fluoride-hexafluoropropylene copolymer.

Examples of the rubber particle include, for example, a styrene-butadiene rubber (SBR) particle and an acrylonitrile rubber particle.

Each of the aforementioned other components may be used singly or two or more thereof may be used.

The content of the other component in the present binder is preferably 30% by mass or less, more preferably 20% by mass or less, further preferably 10% by mass or less, and more preferably 0 to 5% by mass, and the present binder is particularly preferably free of the other component (the content of the other component in the present binder is particularly preferably 0% by mass).

The content of the olefinic polymer particle other than the ethylenic polymer particle [4] in the present binder is preferably 30% by mass or less, more preferably 20% by mass or less, further preferably 10% by mass or less, and more preferably is 0 to 5% by mass, and the present binder is particularly preferably free of any olefinic polymer particle other than the ethylenic polymer particle [4] (the content of olefinic polymer particle other than the ethylenic polymer particle [4] in the present binder is particularly preferably 0% by mass).

### <<Molded body>>

The molded body according to the present invention includes the aforementioned present binder and an inorganic material.

The present binder used for the molded body may be one type or two or more types thereof. The inorganic material used for the molded body may also be one type or two or more types thereof.

The molded body may include a component in addition to the present binder and the inorganic material depending on its required physical properties and functions, for example.

A shape of the molded body is not particularly limited, and may be any shape depending on applications of the molded body, and specific examples thereof include block, platy, sheet, and film shapes, for example.

The molded body is suitably used for batteries, filters, catalysts, and absorbers, for example.

Specific examples of the molded body include an electrode mixture layer using an active material as the inorganic material, a purification filter using a purifying agent as the inorganic material, a solid catalyst using a catalyst support as the inorganic material, a moisture removal sheet using a moisture absorbent as the inorganic material, and an outgas removal sheet using an outgas absorbent as the inorganic material.

The content of the present binder in the molded body is preferably 50% by mass or less, more preferably 0.1 to 20% by mass, and further preferably 0.5 to 12% by mass.

The content of the binder within the above range is preferred in terms of capable of achieving both the mechanical strength of a molded body to be obtained and the characteristics of the inorganic material, for example.

### <Inorganic material>

The inorganic material is not particularly limited, but includes, for example, ceramics, metals, metal oxide materials, silicon materials, and carbon materials.

The inorganic material is not particularly limited as long as it has a form capable of being bonded by the present binder, and is usually a particle (inorganic particle), an average particle size of which is preferably 1 to 500 pm, more preferably 1 to 100 pm, and further preferably 5 to 50 pm.

Note, however, the average particle size is measured by a Coulter counter method.

The content of the inorganic material in the molded body is preferably 50% by mass or more, more preferably 80 to 99.9% by mass, and further preferably 88 to 99.5% by mass.

The content of the inorganic material within the above range is preferred in terms of capable of achieving both the mechanical strength of a molded body to be obtained and the characteristics of the inorganic material.

### <electrode mixture layer>

Example of one preferable form of the molded body includes an electrode mixture layer.

It is preferable that the electrode mixture layer contains the present binder and an active material and is capable of intercalating and releasing lithium ions. The electrode mixture layer may be a positive electrode mixture layer used for a positive electrode or a negative electrode mixture layer used for a negative electrode.

A thickness of the electrode mixture layer is not particularly limited, and may be the same thickness as that of a conventionally known electrode mixture layer, and is preferably 30 to 500 pm, more preferably 30 to 300 pm, and further preferably 30 to 150 pm.

According to the present invention, even the electrode mixture layer having such a thickness can provide an electrode mixture layer that can support on its own without a support.

The content of the present binder in the electrode mixture layer is, from the viewpoint of achieving both physical properties of the electrode mixture layer (for example, an electrolytic solution permeability and tensile strength) and battery performance, preferably 0.1 to 30% by mass, more preferably 0.5 to 20% by mass, further preferably 0.5 to 15% by mass, and particularly preferably 0.5 to 12% by mass.

The content of the present binder within the above range enables facilitation to produce an electrode mixture layer having excellent adhesiveness to a current collector, wherein bondability between active materials is excellent, by the dry method. The amount of active material in the electrode mixture layer can also be increased, and therefore use of the electrode mixture layer enables facilitation to obtain a battery with a large capacity.

### [Active material]

In the case of using the electrode mixture layer as a positive electrode, as the active material, a positive electrode active material is usually used, and when using the electrode mixture layer as a negative electrode, as the active material, a negative electrode active material is usually used.

The content of the active material in the electrode mixture layer is preferably 70 to 99.9% by mass, more preferably 80 to 99.5% by mass, further preferably 85 to 99.5% by mass, and particularly preferably 88 to 99.0% by mass.

Using the electrode mixture layer in which the content of active material is within the above range, enables facilitation to obtain a battery with a large capacity.

### [Positive electrode active material]

As the positive electrode active material, a conventionally known positive electrode active material can be used, and the positive electrode active material is not particularly limited, however, when the electrode mixture layer is used, for example, in a lithium ion secondary battery, the positive electrode active material is preferably a material capable of intercalating and releasing lithium ions, and an example thereof includes a positive electrode active material commonly used in lithium ion secondary batteries.

The positive electrode active material may be used singly, or two or more types thereof may be used.

Examples of the positive electrode active material include, for example,
an oxide having lithium (Li) and nickel (Ni) as constituent metal elements; and
an oxide containing Li, Ni, and at least one metal element other than Li and Ni (for example, a transition metal element and typical metal element) as a constituent metal element.

In the case of containing the metal element other than Li and Ni, the metal element is preferably contained in a proportion equal to or smaller than that of Ni in terms of the number of atoms.

Examples of the metal element other than Li and Ni include at least one selected from the group consisting of, for example, Co, Mn, Al, Cr, Fe, V, Mg, Ca, Na, Ti, Zr, Nb, Mo, W, Cu, Zn, Ga, In, Sn, La and Ce.

The positive electrode active material preferably contains the lithium-containing composite oxide (hereinafter also referred to as "NCM") represented by the following Formula (C1). Using NCM as the positive electrode active material, enables facilitation to produce an electrode mixture layer having a high energy density per unit volume and also excellent in thermal stability.

LiNiₐCo_{b}Mn_{c}O₂ ··· Formula (C1)

wherein in Formula (C1), a, b and c are each independently greater than 0 and less than 1, and the total of a, b and c is 0.99 to 1.00.

Specific examples of NCM include LiNi_{0.33}Co_{0.33}Mn_{0.33}O₂, LiNi_{0.5}Co_{0.3}Mn_{0.2}O₂, LiNi_{0.5}Co_{0.2}Mn_{0.3}O₂, LiNi_{0.6}Co_{0.2}Mn_{0.2}O₂, and LiNi_{0.8}Co_{0.1}Mn_{0.1}O₂.

The positive electrode active material may contain the lithium-containing composite oxide (hereinafter also referred to as "NCA") represented by the following Formula (C2).

LiₜNi_{(1-x-y)}CoₓAl_{y}O₂ ··· Formula (C2)

wherein in Formula (C2), t is 0.95 or greater and 1.15 or less, x is 0 or greater and 0.3 or less, y is 0.1 or greater and 0.2 or less, and the total of x and y is less than 0.5.

A specific example of NCA includes LiNi_{0.8}Co_{0.15}Al_{0.05}O₂.

### [Negative electrode active material]

As the negative electrode active material, a conventionally known negative electrode active material can be used, and the negative electrode active material is not particularly limited, however, when the electrode mixture layer is used, for example, in a lithium ion secondary battery, the negative electrode active material is preferably a material capable of intercalating and releasing lithium ions, and an example thereof includes a negative electrode active material commonly used in lithium ion secondary batteries.

The negative electrode active material may be used singly, or two or more types thereof may be used.

Examples of the negative electrode active material include at least one selected from the group consisting of, for example, metallic lithium, a lithium-containing alloy, a metal or alloy that can be alloyed with lithium, an oxide capable of doping and dedoping a lithium ion, a transition metal nitride capable of doping and dedoping a lithium ion, and a carbon material capable of doping and dedoping a lithium ion.

Among these, the carbon material capable of doping and dedoping a lithium ion is preferred.

Examples of the carbon material include, for example, carbon black, activated carbon, an amorphous carbon material, and a graphite material.

A shape of the carbon material may be any shape such as a fibrous, spherical, potato-like, or flaky shape, and is preferably a spherical shape.

In the case of the carbon material having a spherical shape, an average particle size of the carbon materials is preferably 5 to 50 µm and more preferably 10 to 30 pm.

Examples of the amorphous carbon material include, for example, hard carbon, coke, a mesocarbon microbead (MCMB) fired at 1500°C or lower, and a mesophase pitch carbon fiber (MCF) .

Examples of the graphite material include, for example, artificial graphite and natural graphite. The graphite material may contain boron. The graphite material may also be such that it is coated with a metal such as gold, platinum, silver, copper, or tin or amorphous carbon, or may be a mixture of amorphous carbon and graphite.

Examples of the artificial graphite include, for example, graphitized MCMB and graphitized MCF.

### [Additive]

The electrode mixture layer may further contain an additive in addition to the present binder and the active material.

Examples of the additive include, for example, an electrically conductive aid, a thickener, a surfactant, a dispersant, a wetting agent, and an antifoaming agent.

Each of the additives may be used singly or two or more thereof may be used.

### [Electrically conductive aid]

The electrically conductive aid is not particularly limited as long as it is a material other than the active material, and any known electrically conductive aid may be used; however, it is preferably a material that improves an electrical conductivity between active materials and an electrical conductivity between the active material and a current collector.

In the positive electrode mixture layer, an electrically conductive aid is preferably used, and in the negative electrode mixture layer, when a negative electrode active material other than the carbon material is also used as the negative electrode active material, the electrically conductive aid is preferably used, and in the negative electrode mixture layer, when the carbon material is used as a negative electrode active material, the electrically conductive aid may or may not be used.

The electrically conductive aid may be used singly or two or more types thereof may be used.

In the electrically conductive aid used in the positive electrode mixture layer or in the negative electrode mixture layer, when a negative electrode active material other than the carbon material is used as the negative electrode active material, an electrically conductive aid used in the negative electrode mixture layer is not particularly limited, but is preferably a carbon material having an electrical conductivity, and examples thereof include, for example, graphite, carbon black, electrically conductive carbon fibers (for example, a carbon nanotube, a carbon nanofiber, and a carbon fiber), and fullerene.

A commercially available product of the carbon black, may be used.

Examples of the commercially available carbon black include, for example, TOKABLACK #4300, #4400, #4500, and #5500 (furnace black, manufactured by Tokai Carbon Co., Ltd.), PRINTEX L (furnace black, manufactured by Degussa AG), Raven 7000, 5750, 5250, 5000ULTRAIII, 5000ULTRA, Conductex SC ULTRA, Conductex 975ULTRA, and PUER BLACK100, 115, 205 (furnace black, manufactured by Columbian Chemicals Co.), #2350, #2400B, #2600B, #30050B, #3030B, #3230B, #3350B, #3400B, and #5400B (furnace black, manufactured by Mitsubishi Chemical Corporation), MONARCH1400, 1300, 900, VulcanXC-72R, BlackPearls2000, LITX-50, and LITX-200 (furnace black, manufactured by Cabot Corporation), Ensaco250G, Ensaco260G, Ensaco350G, and Super-P (manufactured by TIMCAL Ltd.), Ketjen Black EC-300J and EC-600JD (manufactured by Akzo Nobel N. V.), Denka Black and Denka Black HS-100, FX-35 (acetylene black, manufactured by Denka Co., Ltd).

Examples of the graphite include, for example, artificial graphite and natural graphite (for example, flaky graphite, lumpy graphite, and earthy graphite).

### <<Electrode>>

The electrode according to the present invention includes the electrode mixture layer and a current collector, and in the case of using the electrode, for example, in a lithium ion secondary battery, the electrode is preferably an electrode capable of intercalating and releasing lithium ions. The electrode may be a positive electrode or a negative electrode.

The electrode is preferably an electrode having the electrode mixture layer on at least a surface of a current collector, and in this case, the electrode may have the electrode mixture layer on the entire surface of the current collector or may have an electrode mixture layer at a portion of the current collector. The electrode may further include a layer (membrane) in addition to the electrode mixture layer and the current collector.

### <Current collector>

When the electrode is used as a positive electrode, as the current collector, a positive current collector is usually used, and when the electrode is used as a negative electrode, as the current collector, a negative current collector is usually used.

### [Positive electrode current collector]

The positive electrode current collector is not particularly limited, and any known positive electrode current collector can be used.

Examples of a material of the positive electrode current collector include, for example, metallic materials such as aluminum, an aluminum alloy, stainless steel, nickel, titanium, and tantalum; and carbon materials such as carbon cloth and carbon paper.

Among these materials, in terms of, for example, a balance between a high electrical conductivity and costs, aluminum is preferable as a material for the positive electrode current collector. Herein, the "aluminum" refers to pure aluminum or an aluminum alloy.

The positive electrode current collector that is aluminum foil is preferable. A material of the aluminum foil is not particularly limited, and examples thereof include, for example, an A1085 material and A3003 material.

### [Negative electrode current collector]

The negative electrode current collector is not particularly limited, and any known negative electrode current collector can be used.

Examples of a material of the negative electrode current collector include, for example, metallic materials such as copper, nickel, stainless steel, and nickel-plated steel.

Among these, copper is preferable as a material for the negative electrode current collector in terms of, for example, processability, and copper foil is preferable as the negative electrode current collector.

### <<Production method of electrode>>

The electrode is preferably an electrode obtained by the dry method in terms of, for example, simplification of electrode manufacture, economy, safety, and environmental burden.

Specifically, the electrode obtained by the dry method is preferably
an electrode obtained by a method for producing an electrode, including a step 1 of dry mixing the present binder and the active material to obtain an electrode composite material;
a step 2 of forming an electrode mixture layer from the electrode composite material; and
a step 3 of producing an electrode including the electrode mixture layer and a current collector.

### <Step 1>

The step 1 is a step of dry mixing the present binder and the active material to obtain an electrode composite material, and is a step of dry mixing the present binder and the active material without using a solvent or a dispersion medium.

In the step 1, the additives described above may be further used.

In the step 1, each raw material component is preferably dry mixed in an amount such that the content of each component in an electrode composite material to be obtained is in the same range as the content of each component in the electrode mixture layer.

The dry mixing method is not particularly limited, and examples thereof include various known methods, for example, a method of mixing using, for example, a defoaming kneader, a dry ball mill, a dry bead mill, a blade planetary motion type mixer, a rotary type planetary motion mixer, a mortar machine, a mortar, a homogenizer, and a low frequency resonant acoustic mixer.

Upon dry mixing, heat treatment may be performed, for example, in order to soften the present binder. The heat treatment is preferably performed at a temperature at which the active material and electrically conductive aid, for example, do not decompose, or lower.

### <Step 2>

The step 2 is a step of forming an electrode mixture layer from the electrode composite material, and is preferably a step of molding the electrode composite material into a layer (in a form of a membrane or a film).

The step 2 is preferably a step of forming the electrode mixture layer such that a thickness of an electrode mixture layer to be obtained falls within the above range, and preferably includes a step of applying pressure to the electrode composite material to mold it.

As the method for applying the pressure to the electrode composite material to mold it, various known press methods such as a roll press method and a flat plate press method can be appropriately employed.

When applying the pressure to the electrode composite material to mold it, pressure is preferably applied so that a press density of an electrode mixture layer to be obtained is 1.0 to 4.0 g/cm³.

In particular, upon producing a negative electrode mixture layer, pressure is applied so that the press density of a negative electrode mixture layer to be obtained is preferably 1.0 to 2.0 g/cm³ and more preferably 1.3 to 1.8 g/cm³ .

When producing a positive electrode mixture layer, pressure is preferably applied so that the press density of a positive electrode composite material layer to be obtained is 2.5 to 4.0 g/cm³.

When applying the pressure to the electrode composite material to mold it, pressure is preferably applied so that the press density of an electrode mixture layer to be obtained falls within the above range, and the pressure is preferably 0.1 to 100 tons.

A temperature upon applying the pressure to the electrode composite material to mold it, is preferably 20 to 300°C, more preferably 80 to 200°C, and further preferably 100 to 200°C.

Forming the electrode mixture layer within this temperature range allows a binder to appropriately soften, enabling an active material to be effectively bonded.

In the step 2, after applying pressure to the electrode composite material to mold it, a step of heating and drying it may be carried out, if necessary, however, as described above, in terms of, for example, simplification of electrode manufacture, economy, safety, and environmental burden, the heating and drying is preferably omitted.

Examples of the method of heating and drying include, for example, drying with warm air, hot air, and low humidity air; vacuum drying; and drying with infrared rays (for example, far infrared rays) irradiation.

A drying time and drying temperature in the heating and drying are not particularly limited, but the drying time is, for example, 1 minute to 24 hours, and the drying temperature is, for example, 80 to 180°C.

### <Step 3>

The step 3 is a step of producing an electrode including the electrode mixture layer and a current collector, and is preferably a step of stacking the electrode mixture layer and the current collector to produce an electrode.

As the stacking method, a method in which the electrode mixture layer is arranged on a current collector to press it, is preferred.

As the press method, various known press methods such as a roll press method and a flat plate press method can be appropriately employed.

Upon the press, it is preferably performed so that the press density of an electrode mixture layer to be obtained in an electrode is 1.0 to 4.0 g/cm³.

In particular, when producing a negative electrode, press is performed so that the press density of a negative electrode mixture layer to be obtained in a negative electrode is preferably 1.0 to 2.0 g/cm³ and more preferably 1.3 to 1.8 g/cm³.

When producing a positive electrode, press is also preferably performed so that the press density of a positive electrode mixture layer to be obtained in a positive electrode is 2.5 to 4.0 g/cm³.

Upon the press, it is preferably performed so that the press density of an electrode mixture layer to be obtained in an electrode falls within the above range, and the press pressure is preferably 0.1 to 100 tons.

A press temperature upon the press is preferably 20 to 300°C, more preferably 80 to 200°C, and further preferably 100 to 200°C.

Stacking an electrode mixture layer and a current collector in this temperature range, allows a binder to moderately soften, and the electrode mixture layer and the current collector can be effectively stacked.

Note, however, in order to improve adhesiveness with the electrode mixture layer, the current collector used in the step 3 may be preliminarily subjected to surface treatment such as roughening treatment or formation of electrically conductive adhesive layer.

In the step 3, after the electrode mixture layer was pressed onto a current collector, a step of heating and drying may be performed, if necessary, however, as described above, from the viewpoint of, for example, simplification of electrode manufacture, economy, safety, and environmental burden, the heating and drying is preferably omitted.

Examples of the method of heating and drying include drying with warm air, hot air, and low humidity air; vacuum drying; and drying with infrared rays (for example, far infrared rays) irradiation, for example.

A drying time and drying temperature in the heating and drying are not particularly limited, but the drying time is, for example, 1 minute to 24 hours, and the drying temperature is, for example, 80 to 180°C.

The step 3 may be carried out simultaneously with the step 2, or the step 3 may be carried out after the step 2. For example, by arranging (example: coating) the electrode composite material obtained in the step 1 as is on a current collector and pressing it, an electrode stacked with an electrode mixture layer and a current collector may be produced while forming the electrode mixture layer.

### <<Lithium ion secondary battery>>

The lithium ion secondary battery according to the present invention is not particularly limited as long as it includes the electrode and an electrolyte. The lithium ion secondary battery may have a separator between a negative electrode and a positive electrode, and may have a case housing the electrode and electrolyte, for example.

Because the lithium ion secondary battery includes the electrode, it has excellent battery characteristics (for example, charge/discharge capacities and battery resistance).

The lithium ion secondary battery can be suitably used for portable devices and vehicles.

### <Electrode>

In terms of, for example, improving battery characteristics of a battery to be obtained, the lithium ion secondary battery preferably has at least either of a positive electrode and a negative electrode, which is an electrode produced by a dry method, particularly an electrode produced by the production method of the electrode described above. That is, either of the positive electrode and the negative electrode of the lithium ion secondary battery may be an electrode produced, for example, by a wet method.

### <Electrolyte>

The electrolyte is not particularly limited as long as it can serve as an electrical conductor for an alkali metal cation such as a lithium ion. The properties of the electrolyte are not also particularly limited, and for example, the electrolyte may be liquid in which it is dissolved in the nonaqueous solvent described below, and may be gel-like, or a solid state.

The electrolyte may be used singly, or two or more types thereof may be used.

The electrolyte preferably contains at least one lithium salt containing fluorine (hereinafter also referred to as "fluorine-containing lithium salt").

Examples of the fluorine-containing lithium salt include, for example, Inorganic acid anion salts such as lithium hexafluorophosphate (LiPF₆), lithium tetrafluoroborate (LiBF₄), lithium hexafluoroarsenate (LiAsF₆), and lithium hexafluorotantalate (LiTaF₆); and organic acid anion salts such as lithium trifluoromethanesulfonate (LiCF₃SO₃), lithium bis(trifluoromethanesulfonyl)imide (Li(CF₃SO₂)₂N), and lithium bis (pentafluoroethanesulfonyl) imide (Li(C₂F₅SO₂)₂N). Among these, as the fluorine-containing lithium salt, LiPF₆ is particularly preferred.

The lithium ion secondary battery may contain an electrolyte that is a lithium salt free of fluorine. Examples of the lithium salt free of fluorine include lithium perchlorate (LiClO₄), lithium aluminum tetrachloride (LiAlCl₄), and lithium decachlorodecaborate (Li₂B₁₀Cl₁₀).

### [Electrolytic solution]

The lithium ion secondary battery may contain an electrolytic solution in which one or more types of the electrolytes are dissolved in one or more types of solvents.

The electrolytic solution is more preferably a nonaqueous electrolytic solution containing one or more types of the electrolytes and one or more types of nonaqueous solvents.

In addition to the electrolyte and the electrolytic solution, the electrolytic solution may contain conventionally known additives used for improving, for example, battery performance.

A proportion of the fluorine-containing lithium salt is preferably 50 to 100% by mass, more preferably 60 to 100% by mass, and further preferably 80 to 100% by mass, relative to 100% by mass of electrolyte in an electrolytic solution.

A proportion of LiPF₆ is also preferably 50 to 100% by mass, more preferably 60 to 100% by mass, and further preferably 80 to 100% by mass, relative to 100% by mass of electrolyte in an electrolytic solution.

A concentration of electrolyte in an electrolytic solution is preferably 0.1 to 3 mol/L and more preferably 0.5 to 2 mol/L.

A concentration of LiPF₆ in an electrolytic solution is also preferably 0.1 to 3 mol/L and more preferably 0.5 to 2 mol/L.

Examples of the nonaqueous solvent include, for example, cyclic carbonates, fluorine-containing cyclic carbonates, chain carbonates, fluorine-containing chain carbonates, aliphatic carboxylic acid esters, fluorine-containing aliphatic carboxylic acid esters, γ-lactones, fluorine-containing γ-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, and dimethyl sulfoxide-phosphoric acid.

Examples of the cyclic carbonates include, for example, ethylene carbonate (EC), propylene carbonate (PC), and butylene carbonate (BC).

Examples of the fluorine-containing cyclic carbonates include, for example, fluoroethylene carbonate (FEC).

Examples of the chain carbonates include, for example, dimethyl carbonate (DMC), diethyl carbonate (DEC), ethylmethyl carbonate (EMC), methylpropyl carbonate (MPC), ethylpropyl carbonate (EPC), and dipropyl carbonate (DPC).

Examples of the fluorine-containing chain carbonates include, for example, methyl 2,2,2-trifluoroethyl carbonate.

Examples of the aliphatic carboxylic acid esters include, for example, methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, and trimethyl ethylbutyrate.

Examples of the γ-lactones include, for example, γ-butyrolactone and γ-valerolactone.

Examples of the cyclic ethers include, for example, tetrahydrofuran, 2-methyltetrahydrofuran, tetrahydropyran, 1,3-dioxolane, 4-methyl-1,3-dioxolane, 1,3-dioxane, and 1,4-dioxane.

Examples of the chain ethers include, for example, 1,2-ethoxyethane (DEE), ethoxymethoxyethane (EME), diethyl ether, 1,2-dimethoxyethane, and 1,2-dibutoxyethane.

Examples of the nitriles include, for example, acetonitrile, glutaronitrile, adiponitrile, methoxyacetonitrile, and 3-methoxypropionitrile.

Examples of the amides include, for example, N,N-dimethylformamide.

Examples of the lactams include, for example, N-methylpyrrolidinone, N-methyloxazolidinone, and N,N'-dimethylimidazolidinone.

The nonaqueous solvent preferably contains at least one selected from the group consisting of cyclic carbonates, fluorine-containing cyclic carbonates, chain carbonates, and fluorine-containing chain carbonates.

In this case, the total proportion of the cyclic carbonate, fluorine-containing cyclic carbonate, chain carbonate, and fluorine-containing chain carbonate in the nonaqueous solvent is preferably 50 to 100% by mass, more preferably 60 to 100% by mass and further preferably 80 to 100% by mass.

The nonaqueous solvent also preferably contains at least one selected from the group consisting of cyclic carbonates and chain carbonates.

In this case, the total proportion of cyclic carbonate and chain carbonate in the nonaqueous solvent is preferably 50 to 100% by mass, more preferably 60 to 100% by mass, and further preferably 80 to 100% by mass.

The intrinsic viscosity of the nonaqueous solvent is preferably 10.0 mPa·s or less at 25°C from the viewpoint of, for example, further improving the dissociation properties of the electrolyte and mobility of ions.

A proportion of the nonaqueous solvent in the nonaqueous electrolytic solution is preferably 60% by mass or more and more preferably 70% by mass or more.

The upper limit of the proportion of the nonaqueous solvent in the nonaqueous electrolytic solution depends on the content of other component (for example, an electrolyte) as well, but is, for example, 99% by mass, preferably 97% by mass and further preferably 90% by mass.

### <Separator>

The separator is not particularly limited as long as it can electrically insulate a positive electrode and a negative electrode and can permeate lithium ions.

Examples of a material of the separator include, for example, resins such as a polyethylene (PE), polypropylene (PP), polyester, cellulose, and polyamide. Examples of the separator include, for example, a porous flat plate including the resin and nonwoven fabric including the resin.

Among these, as a separator, a porous resin film having a single layer or multilayer structure mainly composed of one or two or more types of polyolefin resins is preferable.

A thickness of the separator is, for example, 5 to 30 pm.

### <Case>

The case is not particularly limited, and examples thereof include known cases for lithium ion secondary batteries, and specific examples thereof include a case including a laminate film, and a case including a battery can and a battery can lid.

### <Production method of lithium ion secondary battery>

Examples of the method for producing a lithium ion secondary battery include known methods for producing lithium ion secondary batteries, and examples thereof include a production method including a precursor fabrication step of housing a positive electrode, a negative electrode, an electrolyte (or electrolytic solution), and a separator, if necessary in a case to fabricate a lithium ion secondary battery precursor and an aging step of subjecting the lithium ion secondary battery precursor to aging treatment to obtain a lithium ion secondary battery.

The precursor fabrication step preferably includes a step of housing a positive electrode and a negative electrode (via a separator, if necessary) in a case, and a step of injecting an electrolyte (or electrolyte solution) into a case in which the positive electrode and the negative electrode (the separator, if necessary) are housed.

In the aging step, the lithium ion secondary battery precursor is preferably subjected to combination of charge and discharge once or more times in an environment of 25 to 70°C.

Such an aging step tends to be able to reduce internal resistance (particularly positive electrode resistance) of a lithium ion secondary battery.

### Examples

The present invention will be described below based on Examples, but it goes without saying that the present invention is not limited to the following Examples unless it departs from the gist thereof.

In the following Examples, the specific surface area, median diameter (D50), angle of repose, spatula angle, intrinsic viscosity [η], bulk density, content of coarse particle (1 mm or larger), flowability, Mg content, acetone extract, content of compound (F) in the polymer, and weight-average molecular weight (Mw) of compound (F) of the ethylenic polymer particle, were measured according to the following methods.

### <Specific surface area>

Using a high-precision gas adsorption apparatus (LA-950, manufactured by Microtrac Bell Co., Ltd.), adsorption and desorption isotherms of the ethylenic polymer particle were measured by a nitrogen gas adsorption method.

As the analysis method, the specific surface area of the ethylenic polymer particle was determined from adsorption and desorption isotherms using a BET method.

Note, however, before measurement of adsorption/desorption isotherms, degassing treatment was performed using a pretreatment apparatus (BELPREP VAC-II, manufactured by Microtrac Bell Co., Ltd.).

### <Median diameter (D50)>

Using a laser diffraction/scattering measurement apparatus (LA-950, manufactured by HORIBA, Ltd.), a particle size distribution (volume basis) of the ethylenic polymer particle was measured by a dry method. In the obtained particle size distribution, a particle size at which the cumulative volume is 50% was defined as the median diameter (D50).

### <Angle of repose and spatula angle>

The angle of repose and spatula angle were measured using a powder tester (manufactured by Hosokawa Micron Corporation). The angle of repose and the spatula angle are indices of flowability, indicating that the smaller the angles, the higher the flowability.

### <Intrinsic viscosity [η]>

The intrinsic viscosity [η] of the ethylenic polymer particle is determined by dissolving the particle in decalin and measuring it in decalin at a temperature of 135°C using a fully automatic viscosity measurement apparatus (VMR-053UPC, manufactured by Rigosha & Co., Ltd.)

### <Bulk density>

The bulk density of the ethylenic polymer particles was measured using a standard bulk specific gravity meter (for a vinyl chloride resin (JIS k-6720), manufactured by Tsutsui Rikagaku Kikai Co., Ltd.).

Specifically, a 100 mL SUS container attached, the mass of which was preliminarily measured was set, and the ethylenic polymer particles were filled through a funnel of the standard bulk specific gravity meter (for a vinyl chloride resin (JIS K-6720), manufactured by Tsutsui Rikagaku Kikai Co., Ltd.). Excess ethylenic polymer particles on the SUS container were removed with a spatula, its volume was accurately adjusted to 100 mL, and the mass thereof was measured again to calculate the bulk density.

### <Content of coarse particle>

Based on the mass of polymer particles not passing through a sieve when 5.0 g of ethylenic polymer particles was weighed and sieved on a 1 mm × 1 mm mesh sieve for a shaking time: 10 minutes at an amplitude: 0.5 mm and an interval: 15 seconds, the content of coarse particles with a particle size of 1 mm or larger in the ethylenic polymer particle was calculated.

### <Flowability>

Using a funnel (inner diameter of a leg: 8 mm) of a standard bulk specific gravity meter (for vinyl chloride resin (JIS K-6720), manufactured by Tsutsui Rikagaku Kikai Co., Ltd.), 200 mL of ethylenic polymer particles was charged into the funnel and dropped from a funnel outlet.

In each of Examples 1-1 to 1-7 and Comparative Examples 1-1 to 1-5, a time from when the ethylenic polymer particle started came out from the funnel outlet until the total amount of the ethylenic polymer particles finished coming out from the funnel outlet (dropping time) was measured to evaluate flowability of the ethylenic polymer particle based on this dropping time. It is indicated that the shorter the dropping time, the higher the flowability.

In the other Examples and Comparative Examples, the flowability was evaluated according to the presence and absence of clogging phenomena of the funnel outlet due to the ethylenic polymer particle. The absence of clogging phenomena at the funnel outlet indicates higher flowability.

### <Mg content>

0.5 g of ethylenic polymer particles was weighed out, added with sulfuric acid while heated, and was further gradually added therewith to undergo wet decomposition. Thereafter, a diluted liquid was added, and using an inductively coupled plasma mass spectrometry (ICP-MS) apparatus (Agilent 7500 cs, manufactured by Agilent Technologies Inc.), Mg was quantitatively analyzed. Note that an internal standard element was preliminarily added to the diluted liquid used.

### <Acetone extract (identification of compound (F))>

To 10 g parts by mass of ethylenic polymer particles was added 400 ml of acetone, and the mixture was extracted by being refluxed for 4 hours while stirred with a stirrer. The obtained acetone slurry was filtered, and the filtrate was concentrated and analyzed by a ¹H-NMR method using a nuclear magnetic resonance apparatus (ECA500 manufactured by JEOL Ltd.).

In the following Formula (I), a signal derived from the hydrogen atom bonded to the carbon atom adjacent to the oxygen atom is observed at 3 to 4 ppm in deuterated acetonitrile, taking tetramethylsilane as reference. In the following Formula (I), when R is a hydrogen atom, the signal derived from an oxymethylene group is observed at 3.3 to 3.8 ppm. 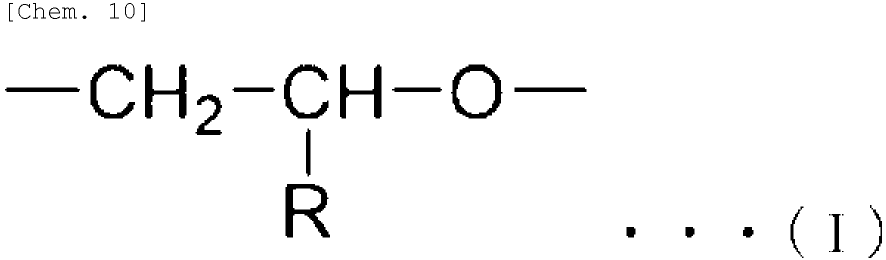 wherein In Formula (I), R represents a hydrogen atom or an alkyl group having 1 to 12 carbon atoms.

### <Content of compound (F)>

The ethylenic polymer particle was subjected to high-speed osmotic solvent extraction (EDGE) by using an acetone solvent with an automatic high-speed solvent extraction apparatus (EDGE, manufactured by CEM Corporation), and the resulting extract was concentrated and transferred to prepare a test liquid.

The obtained test liquid was subjected to LC-MS (Acquity UPLC H-Class System/SQ Detector, manufactured by Waters Corporation) to identify the compound (F) contained in the extract, which also underwent quantitative analysis by an absolute calibration curve method to measure the content of compound (F) in the ethylenic polymer particle.

### <Weight-average molecular weight (Mw) of compound (F)>

To 10 g of ethylenic polymer particles was added 400 ml of acetone, and the mixture was extracted by being refluxed for 4 hours while stirred with a stirrer. The acetone in the obtained extract was evaporated to obtain a measurement sample. The obtained measurement sample was weighed into a 30 mL vial, dissolved in tetrahydrofuran, and added with 3.0 mL of mobile phase for GPC measurement per 3.0 mg of measurement sample, and the vial was tightly sealed and allowed to stand overnight to dissolve the sample. This solution was filtered by using a hydrophilic PTFE membrane filter cartridge with a pore size of 0.45 µm (Millex-LH, manufactured by Merck Millipore Corporation), and the obtained filtrate was used to measure Mw of the compound (F) under the following conditions.

### (Measurement Conditions)

· 515 HPLC pump, 717plus automatic injection apparatus (manufactured by Nippon Waters Co., Ltd.)
· Differential refractive index (RI) detector (Shodex RI-101, manufactured by Showa Denko K.K.)
· Column: Two PLgel 3 pm MIXED-E, 7.5 × 300 mm (manufactured by Agilent Technologies Inc.) connected in series
· Column temperature: 40°C
· Mobile phase: Tetrahydrofuran for HPLC [containing a stabilizer] (manufactured by Fujifilm Wako Pure Chemical Industries, Ltd.)
· Sample (filtrate) volume: 100 µL
· Mobile phase flow rate: 1.0 mL/min
· Column calibration: Performed using a monodisperse PS (EasiVial PS-L polystyrene (manufactured by Agilent Technologies Inc.))
· Molecular weight calibration: Performed using a relative calibration method (in terms of PS)

The first aspect of the present invention will be described below based on Examples.

### [Example 1-1]

### <Preparation of component (i)>

A 1 L glass container with a stirrer, fully substituted with nitrogen was charged with 66.1 g (0.694 mol) of anhydrous magnesium chloride, 246 g of dehydrated decane, and 271 g (2.08 mol) of 2-ethylhexyl alcohol, and the mixture was reacted at 145°C for 4 hours to obtain a homogeneous and transparent component (I') with a concentration of 1.0 mol/L in terms of Mg atom.

The component (I') was diluted with dehydrated decane to obtain a homogeneous and transparent component (i) with a concentration of 0.25 mol/L in terms of Mg atom.

### <Ethylene polymerization>

A 1.6 m³ volume reactor with a stirrer, fully substituted with nitrogen was charged with 721 kg of dehydrated decane and 2.7 mol of triisobutylaluminum in terms of Al atom. After raised to a temperature to 60°C, the reactor was charged with 0.86 mol of the component (i) in terms of Mg atom, which was stirred for 15 minutes. Thereafter, the reactor was cooled to 40°C, and blown with ethylene gas until the internal pressure of the reactor reached 0.1 MPaG. Next, the reactor was charged with 4.3 mmol of the transition metal compound (B-1) represented by the following Formula (B-1) in terms of Ti atom, and then charged with 5.8 g of ADEKA PLURONIC (registered trademark) L-71 (manufactured by ADEKA Corporation) (hereinafter also simply referred to as "L-71") and 2.7 NL of hydrogen, then to carry out a polymerization reaction at 50°C for 117 minutes while supplied with ethylene gas so that the total pressure was 0.6 MPaG. After completion of the polymerization, the polymer was filtered and washed with decane followed by with hexane, and then dried under reduced pressure at 80°C for 18 hours. The obtained ethylenic polymer particle had favorable flowability. Table 1 shows the various measurement results. 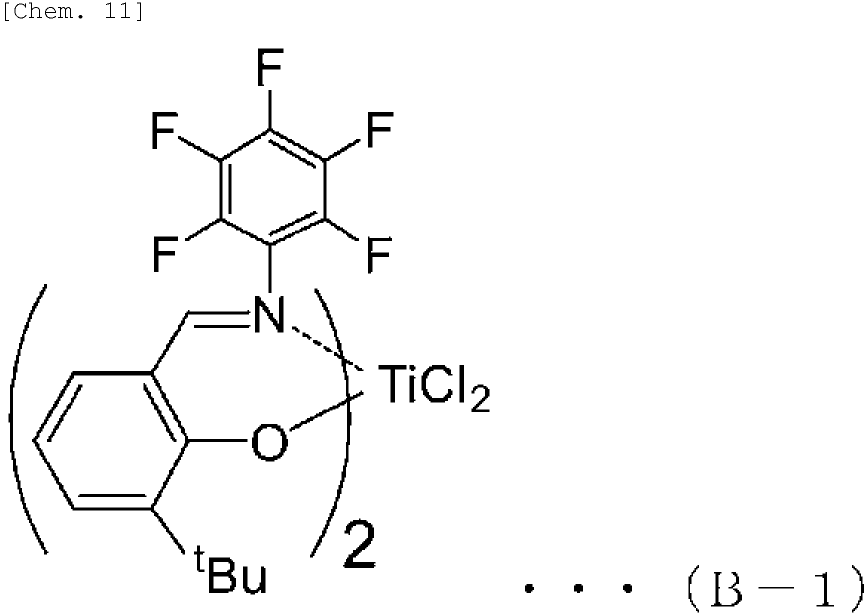 wherein in Formula (B-1), ^{t}Bu represents a tert-butyl group.

### [Example 1-2]

### <Ethylene polymerization>

A 1.6 m³ volume reactor with a stirrer, fully substituted with nitrogen was charged with 721 kg of dehydrated decane and 2.7 mol of triisobutylaluminum in terms of Al atom. After raised to a temperature to 60°C, the reactor was charged with 0.86 mol of the component (i) in terms of Mg atom, which was stirred for 15 minutes. Thereafter, the reactor was cooled to 40°C, and blown with ethylene gas until the internal pressure of the reactor reached 0.1 MPaG. Next, the reactor was charged with 4.3 mmol of the transition metal compound (B-1) in terms of Ti atom, and next charged with 5.8 g of L-71 and 2.7 NL of hydrogen, then to carry out a polymerization reaction at 50°C for 104 minutes while supplied with ethylene gas so that the total pressure was 0.6 MPaG. After completion of the polymerization, the polymer was filtered and washed with decane followed by with hexane, and then dried under reduced pressure at 80°C for 18 hours. The obtained ethylenic polymer particle had favorable flowability. Table 1 shows the various measurement results.

### [Example 1-3]

### <Ethylene polymerization>

A 1.6 m³ volume reactor with a stirrer, fully substituted with nitrogen was charged with 721 kg of dehydrated decane and 2.7 mol of triisobutylaluminum in terms of Al atom. After raised to a temperature to 60°C, the reactor was charged with 0.86 mol of the component (i) in terms of Mg atoms, which was stirred for 15 minutes. Thereafter, the reactor was cooled to 40°C, and blown with ethylene gas until the internal pressure of the reactor reached 0.1 MPaG. Next, the reactor was charged with 4.3 mmol of the transition metal compound (B-1) in terms of Ti atom, and next charged with 5.8 g of L-71 and 2.7 NL of hydrogen, to carry out a polymerization reaction at 50°C for 115 minutes while supplied with ethylene gas so that the total pressure was 0.6 MPaG. After completion of the polymerization, the polymer was filtered and washed with decane followed by with hexane, and then dried under reduced pressure at 80°C for 18 hours. The obtained ethylenic polymer particle had favorable flowability. Table 1 shows the various measurement results.

### [Comparative Example 1-1]

### <Preparation of component (ii)>

A 1 L volume glass container with a stirrer, fully substituted with nitrogen was charged with 66.1 g (0.694 mol) of anhydrous magnesium chloride, 246 g of dehydrated decane, and 271 g (2.08 mol) of 2-ethylhexyl alcohol, and the mixture was reacted at 145°C for 4 hours to obtain a homogeneous and transparent component (ii') with a concentration of 1.0 mol/L in terms of Mg atom. Thereafter the reactor was charged with 1,210 g of dehydrated toluene, and the mixture was diluted to obtain a homogeneous and transparent component (ii").

Next, a 20 L volume reactor with a stirrer, fully substituted with nitrogen was charged with 11,700 g of dehydrated toluene and 2,210 g of a triisobutylaluminum toluene solution with an Al concentration of 2.62 wt%. The reactor was cooled to the solution temperature of 20°C, and charged with the entire amount of component (ii'') over 15 minutes, and thereafter, raised to a temperature of 50°C to carried out reaction for 3 minutes then to obtain a component (ii) .

### <Ethylene polymerization>

A 1.6 m³ volume reactor with a stirrer, fully substituted with nitrogen was charged with 727 kg of dehydrated toluene and 0.16 mol of triisobutylaluminum in terms of Al atom. The reactor was raised to a temperature of 40°C, charged with the entire amount of component (ii) and was blown with ethylene gas until the internal pressure of the reactor reached 0.1 MPaG. Next, the reactor was charged with 3.4 mmol of the transition metal compound (B-1) in terms of Ti atom and charged with 2.5 NL of hydrogen, then to carry out polymerization reaction at 50°C for 118 minutes while supplied with ethylene gas so that the total pressure reached 0.6 MPaG. After completion of the polymerization, the polymer was filtered and washed with toluene followed by with hexane, and then dried under reduced pressure at 80°C for 18 hours. The obtained ethylenic polymer particle had poor flowability. Table 1 shows the various measurement results.

### [Comparative Example 1-2]

### <Ethylene polymerization>

A 1.6 m³ volume reactor with a stirrer, fully substituted with nitrogen was charged with 727 kg of dehydrated toluene and 0.16 mol of triisobutylaluminum in terms of Al atom. The reactor was raised to a temperature of 40°C, charged with the entire amount of component (ii) and, and was blown with ethylene gas until the internal pressure of the reactor reached 0.1 MPaG. Next, the reactor was charged with 3.4 mmol of the transition metal compound (B-1) in terms of Ti atom and charged with 2.5 NL of hydrogen, then to carry out a polymerization reaction at 50°C for 104 minutes while supplied with ethylene gas so that the total pressure reached 0.6 MPaG. After completion of the polymerization, the polymer was filtered and washed with toluene followed by with hexane, and then dried under reduced pressure at 80°C for 18 hours. The obtained ethylenic polymer particle had poor flowability. Table 1 shows the various measurement results.

### [Example 1-4]

The ethylenic polymer particles obtained in Comparative Example 2 were crushed by using a pulverization and granulation machine (Quick Mill QMY type, manufactured by Seishin Enterprise Co., Ltd.). The ethylenic polymer particle obtained by the crushing treatment had favorable flowability. Table 1 shows the various measurement results.

### [Comparative Example 1-3]

### <Ethylene polymerization>

A 1.6 m³ volume reactor with a stirrer, fully substituted with nitrogen was charged with 727 kg of dehydrated toluene and 2.3 mol of triisobutylaluminum in terms of Al atom. The reactor was raised to a temperature of 50°C, charged with 0.69 mol of component (ii'') in terms of Mg atom, which was then stirred for 15 minutes. The reactor was cooled to a temperature of 40°C and blown with ethylene gas until the internal pressure of the reactor reached 0.1 MPaG. Next, the reactor was charged with 3.4 mmol of the transition metal compound (B-1) in terms of Ti atom and charged with 2.6 NL of hydrogen, then to carry out a polymerization reaction at 50°C for 76 minutes while supplied with ethylene gas so that the total pressure reached 0.6 MPaG. After completion of the polymerization, the polymer was filtered and washed with toluene followed by with hexane, and then dried under reduced pressure at 80°C for 18 hours. The obtained ethylenic polymer particle had poor flowability. Table 1 shows the various measurement results.

### [Example 1-5]

### <Ethylene polymerization>

A 340 L volume reactor with a stirrer, fully substituted with nitrogen was charged with 130 L of dehydrated decane and 400 mmol of triisobutylaluminum in terms of Al atom. The reactor was raised to a temperature of 60°C, charged with 88 mmol of the component (i) in terms of Mg atom, which was then stirred for 15 minutes, and was next charged with 2.0 g of ADEKA PLURONIC (registered trademark) TR-701 (manufactured by ADEKA Corporation) (hereinafter also simply referred to as "TR-701"). The reactor was cooled to a temperature of 40°C, and charged with 0.11 mmol of the transition metal compound (B-2) in terms of Zr atom represented by the following Formula (B-2) and charged with 0.4 NL of hydrogen while supplied with ethylene gas, then to carry out a polymerization reaction at 50°C for 126 minutes while supplied with ethylene gas so that the total pressure reached 0.6 MPaG. After completion of the polymerization, the polymer was filtered and washed with decane followed by with hexane, and then dried under reduced pressure at 80°C for 6 hours. The obtained ethylenic polymer particle had favorable flowability. Table 1 shows the various measurement results.

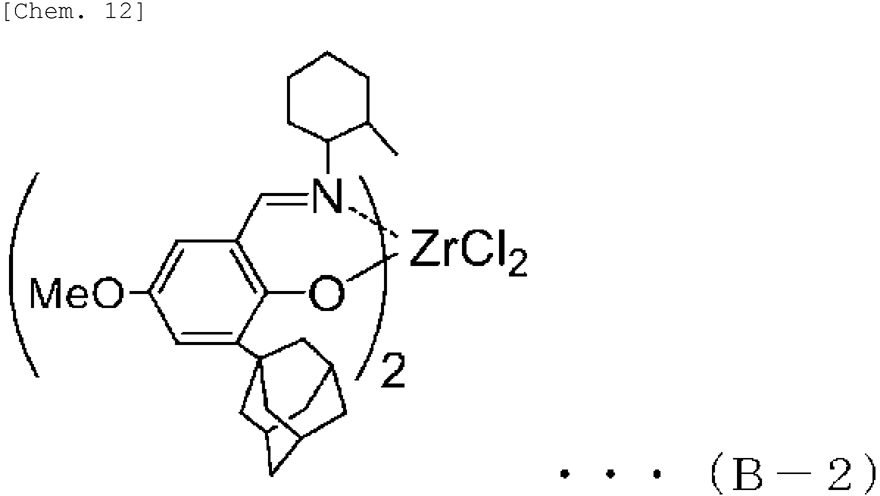

### [Example 1-6]

### <Ethylene polymerization>

A 340 L volume reactor with a stirrer, fully substituted with nitrogen, was charged with 130 L of dehydrated decane and 400 mmol of triisobutylaluminum in terms of Al atom. The reactor was raised to a temperature of 60°C, charged with 88 mmol of the component (i) in terms of Mg atom, which was then stirred for 15 minutes, and was next charged with 3.5 g of TR-701. The reactor was cooled to a temperature of 40°C, and charged with 0.11 mmol of the transition metal compound (B-2) in terms of Zr atom and charged with 0.04 NL of hydrogen while supplied with ethylene gas, then to carry out a polymerization reaction at 50°C for 125 minutes while supplied with ethylene gas so that the total pressure reached 0.6 MPaG. After completion of the polymerization, the polymer was filtered and washed with decane followed by with hexane, and then dried under reduced pressure at 80°C for 6 hours. The obtained ethylenic polymer particle had favorable flowability. Table 1 shows the various measurement results.

### [Example 1-7]

### <Ethylene polymerization>

A 340 L volume reactor with a stirrer, fully substituted with nitrogen was charged with 130 L of dehydrated decane and 490 mmol of triisobutylaluminum in terms of Al atom. The reactor was raised to a temperature of 60°C, charged with 101 mmol of the component (i) in terms of Mg atom, which was stirred for 15 minutes, then cooled to a temperature of 40°C, and was blown with ethylene gas so that the internal pressure of the reactor reached 0.1 MPaG. Next, the reactor was charged with 0.51 mmol of the transition metal compound (B-1) in terms of Ti atom, then charged with 0.93 g of L-71 and 0.4 NL of hydrogen, then to carry out a polymerization reaction at 50°C for 170 minutes while supplied with ethylene gas so that the total pressure reached 0.6 MPaG. After completion of the polymerization, the polymer was filtered and washed with decane followed by with hexane, and then dried under reduced pressure at 80°C for 6 hours. The obtained ethylenic polymer particle had favorable flowability. Table 1 shows the various measurement results.

### [Comparative Example 1-4]

The ultrahigh molecular weight polyethylene particle manufactured by Mitsui Chemicals Inc. (Miperon, PM-200) had poor flowability. Table 1 shows the various measurement results.

### [Comparative Example 1-5]

Ethylene polymerization was carried out according to Example 2 of WO2008/013144. The obtained ethylenic polymer particle had poor flowability. Table 1 shows the various measurement results.

The measurement results of Examples and Comparative Examples are summarized in Table 1. Table 1 also shows the method for controlling the particle size (median diameter).

### [Table 1]

**Table 1**

| | Median diameter D50 (µm) | Bulk density (g/mL) | Specific surface area (m²/g) | Intrinsic viscosity [η](dl/g) | Angle of repose (°) | Spatula angle (°) | Flowability (sec) | Particle size control method * |
|---|---|---|---|---|---|---|---|---|
| Example 1-1 | 480 | 0.069 | 11.2 | 36.7 | 42 | 41 | 32 | (1)(2) |
| Example 1-2 | 520 | 0.068 | 11.4 | 37.1 | 43 | 49 | 32 | (1)(2) |
| Example 1-3 | 420 | 0.066 | 118 | 36.7 | 42 | 44 | 29 | (1)(2) |
| Comparative Example 1-1 | 740 | 0.078 | 5.97 | 38.1 | - | - | Unmeasurable | (1) |
| Comparative Example 1-2 | 730 | 0.073 | 6.08 | 35.4 | 48 | 62 | Unmeasurable | (1) |
| Example 1-4 | 430 | 0.12 | 6.27 | 35.4 | 43 | 50 | 26 | (1)(3) |
| Comparative Example 1-3 | Unmeasurable | 0.076 | 11.0 | 25.9 | Unmeasurable | Unmeasurable | Unmeasurable | (1) |
| Example 1-5 | 370 | 0.065 | 9.09 | 31.9 | 39 | 45 | 28 | (1)(2) |
| Example 1-6 | 340 | 0.078 | 8.34 | 38.9 | 39 | 40 | 24 | (1)(2) |
| Example 1-7 | 300 | 0.068 | 15.3 | 33.2 | 37 | 49 | 26 | (1)(2) |
| Comparative Example 1-4 | 10 | 0.32 | 0.91 | 10.5 | 52 | 71 | 58 | Different catalyst |
| Comparative Example 1-5 | 200 | 0.35 | 0.36 | 21.1 | 45 | 59 | 52 | Different catalyst |

| | | | | | | | | |
|---|---|---|---|---|---|---|---|---|
| *: (1) Method for increasing stirring power and a linear velocity upon stirring in a polymerization step to inhibit aggregation (2) Method for adding an antistatic agent in a polymerization step to inhibit aggregation (3) Method of crushing in a post-treatment step after polymerization | | | | | | | | |

The second embodiment of the present invention will be explained below based on Examples.

In the following Examples, fabrication of stretch-molded bodies of ethylenic polymer particles and measurement of strength of the stretch-molded body were carried out as follows.

### (Fabrication of stretch-molded body)

A brass mold was filled with ethylenic polymer powder, which underwent heat press by using a hydraulic press (125°C, 40 MPa, and 1 minute). Thereafter, the polymer powder underwent cold press to obtain a compressed sheet (thickness: 1 mm, width: 30 mm, and length: 450 mm). Next, the compressed sheet preheated with a preheater (110°C) was rolled by using a heated roll press machine (roll diameter: 250 mmΦ, 130°C, roll speed 0.3 m/min, and gap 143 pm), and the rolled sheet was taken up with a pinch roll (roll speed: 2 m/min) directly below the heating roll to pre-stretch it on the heating roll. The molded body in the form of a tape, which had been preliminarily stretched, was transferred so that it passed through between hot plates set at 135°C, and subjected to the primary stretching by making a speed difference between a feed pinch roll (roll speed 0.2 m/min) and a take-up pinch roll (roll speed 0.8 m/min). Furthermore, the set temperature of the hot plate was changed to 140°C, and the molded body obtained by the primary stretching was subjected to the secondary stretching in the same manner as above with a speed difference between the feed pinch roll (roll speed 0.2 m/min) and a take-up pinch roll (roll speed 0.47 m/min). The obtained stretch-molded body was cut out to 450 mm and weighed, and the stretching ratio was determined divided with the weight of the obtained stretch-molded body.

### (Strength measurement of stretch-molded body)

Using a tensile tester (universal tester Model 5982, manufactured by Instron Corporation), the tensile strength at break in a stretching direction, of the stretch-molded body, the width of which was adjusted to approximately 2 mm, was measured under the conditions of a temperature of 23°C, a chuck distance of 10 mm, and a tensile speed of 50 mm/min.

### [Example 2-1]

### <Ethylene polymerization>

A 1 L volume reactor with a stirrer and a baffle board, fully substituted with nitrogen was charged with 500 mL of dehydrated decane and then was substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Thereafter, the reactor was cooled to a temperature of 40°C and charged with 2.2 pmol of the transition metal compound (B-1) in terms of Ti atom, which was stirred for 3 minutes with supply of ethylene gas. Next, the reactor was charged with 2.95 mg of L-71 as the compound (F) that was an antistatic agent, and 3.75 mL of hydrogen, then to carry out a polymerization reaction at 50°C for 117 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 25.5 g. Table 2 shows the various measurement results.

### [Example 2-2]

### <Ethylene polymerization>

A 1 L volume reactor with a stirrer and a baffle board, fully substituted with nitrogen was charged with 500 mL of dehydrated decane and then was substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Next, the reactor was charged with 7.5 mg of TR-701 as the compound (F) that was an antistatic agent, which was then stirred for 3 minutes. Thereafter, the reactor was cooled to a temperature of 40°C and charged with2.2 pmol of the transition metal compound (B-1) in terms of Ti atom and 3.75 mL of hydrogen, then to carry out a polymerization reaction at 50°C for 121 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 25.7 g. Table 2 shows the various measurement results.

### [Example 2-3]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 7.6 mg of TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 122 minutes while supplied with ethylene gas so that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 26.4 g. Table 2 shows the various measurement results.

### [Example 2-4]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 13.5 mg of TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 118 minutes while supplied with ethylene gas so that the total pressure reached 0.6 MPaG. After completion of the polymerization, the polymer was filtered and washed with decane followed by with hexane, and then dried under reduced pressure at 80°C for 18 hours. The amount of the obtained ethylenic polymer particles was 25.8 g. Table 2 shows the various measurement results.

### [Example 2-5]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 0.5 mg of TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 112 minutes while supplied with ethylene gas so that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 27.4 g. Table 2 shows the various measurement results.

### [Example 2-6]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 7.5 mg of TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then charged with 10.0 mg of TR-701 sequentially 7 times at 15 minute intervals while supplied with ethylene gas so that the total pressure reached 0.3 MPaG, to carry out a polymerization reaction at 50°C for 121 minutes. After completion of the polymerization, the polymer was filtered and washed with decane followed by with hexane, and then dried under reduced pressure at 80°C for 18 hours. The amount of the obtained ethylenic polymer particles was 24.6 g. Table 2 shows the various measurement results.

### [Comparative Example 2-1]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Thereafter, the reactor was cooled to a temperature of 40°C and charged with 2.2 pmol of the transition metal compound (B-1) in terms of Ti atom and charged with 3.75 mL of hydrogen, then to carry out a polymerization reaction at 50°C for 123 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 26.5 g The amount of the antistatic agent in the polymer was the detection limit or lower (less than 5 ppm) in all cases. Table 2 shows the various measurement results.

### [Comparative example 2-2]

### <Preparation of component (iii)>

Solid aluminoxane (component (iii)) was prepared in accordance with the method described in WO2010/055652 (preliminary experiment 1 and Example 5). However, taking into consideration of safety such as ignition of trimethylaluminum, for example, the above preparation of the aluminoxane was carried out with its concentration approximately 1/6 times that of the conditions disclosed in the literature, then to obtain a component (iii) with a size of 4.6 pm.

### <Ethylene polymerization>

A 1 L volume reactor with a stirrer and a baffle board, fully substituted with nitrogen was charged with 500 mL of dehydrated decane and then substituted with ethylene. The reactor was charged with 0.60 mmol of tri-normal octyl aluminum in terms of Al atom. The reactor was raised to a temperature of 45°C and charged with 2.08 mmol of the component (iii) in terms of Al atom and charged with 8.33 pmol of the transition metal compound (B-1) in terms of Ti atom, and was next charged with 24.0 mg of L-71 as the compound (F) that was an antistatic agent and charged with 3.75 mL of hydrogen, then to carry out a polymerization reaction at 50°C for 257 minutes while supplied with ethylene gas so that the total pressure reached 0.65 MPaG. After completion of the polymerization, the polymer was filtered and washed with decane followed by with hexane, and then dried under reduced pressure at 80°C for 18 hours. The amount of the obtained ethylenic polymer particles was 123.9 g Table 2 shows the various measurement results that an attempt was made to fabricate a stretch-molded body using the obtained ethylenic polymer particles by the method described above, however, the compressed sheet did not have a sufficient strength and was unable to undergo stretch molding.

### [Example 2-7]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Next, the reactor was charged with 7.50 mg of TR-701 as the compound (F) that was an antistatic agent, which was then stirred for 3 minutes. Thereafter, the reactor was cooled to a temperature of 40°C and charged with 2.2 pmol of the transition metal compound (B-3) represented by the following Formula (B-3) in terms of Ti atom and charged with 3.75 mL of hydrogen, then to carry out a polymerization reaction at 50°C for 46 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 30.2 g. Table 2 shows the various measurement results.

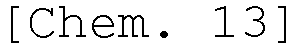

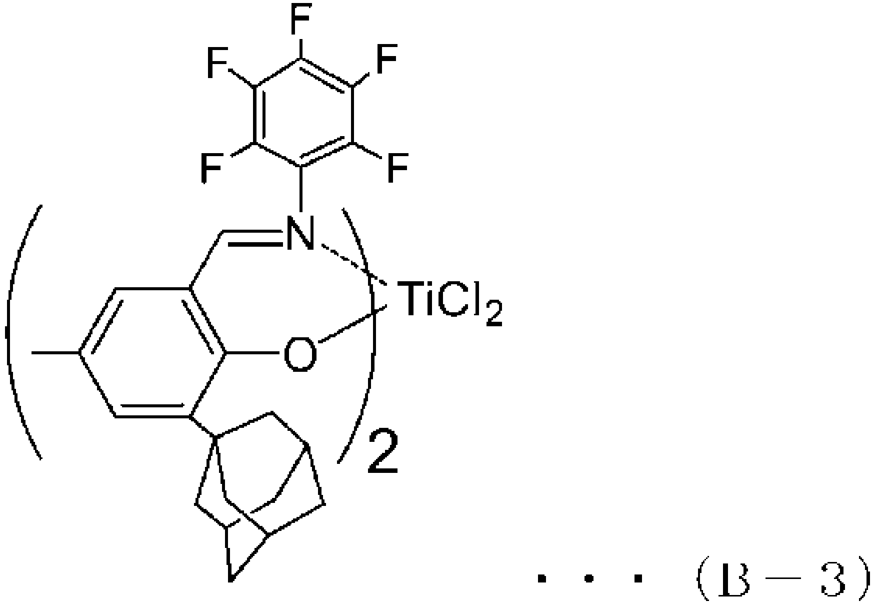

### [Example 2-8]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Next, the reactor was charged with 7.50 mg of TR-701 as the compound (F) that was an antistatic agent, which was then stirred for 3 minutes. Thereafter, the reactor was cooled to a temperature of 40°C and charged with 2.2 pmol of the transition metal compound (B-4) represented by the following Formula (B-4) in terms of Ti atom and charged with 3.75 mL of hydrogen, then to carry out a polymerization reaction at 50°C for 42 minutes while supplied with ethylene gas so that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 30.7 g. Table 2 shows the various measurement results.

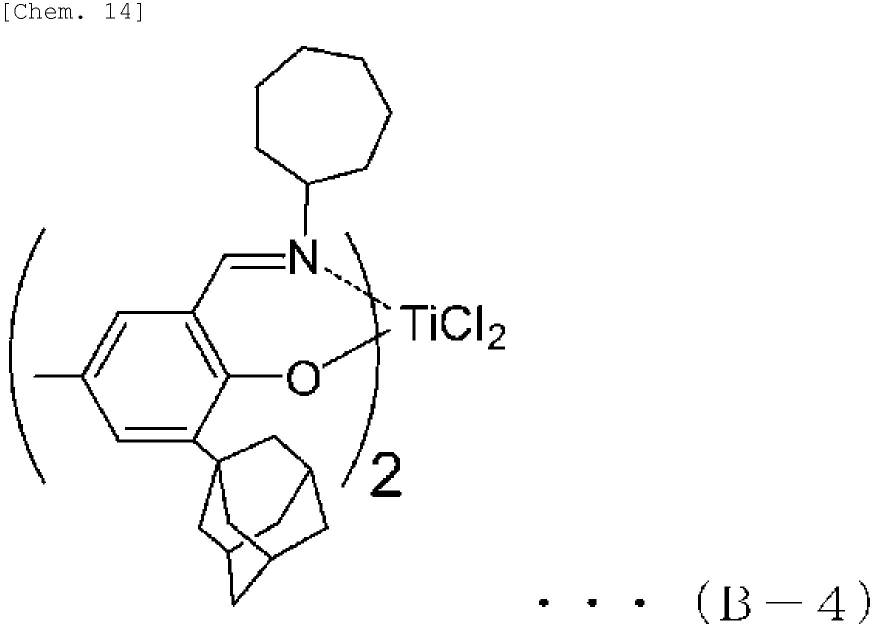

### [Example 2-9]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom and then charged with 0.44 mmol of the component (i) in terms of Mg atoms, which were then stirred for 15 minutes. Next, the reactor was charged with 8.00 mg of L-71 as the compound (F) that was an antistatic agent, which was then stirred for 3 minutes. Thereafter, the reactor was cooled to a temperature of 40°C and charged with 2.2 pmol of the transition metal compound (B-5) represented by the following Formula (B-5) in terms of Ti atom and charged with 3.75 mL of hydrogen, then to carry out a polymerization reaction at 50°C for 49 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 27.4 g. Table 2 shows the various measurement results.

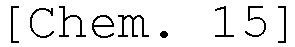

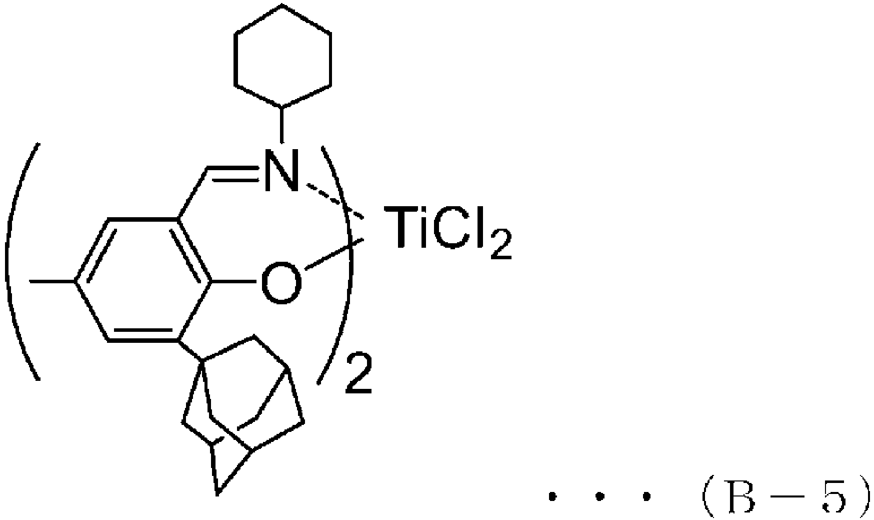

### [Example 2-10]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom and then charged with 0.44 mmol of the component (i) in terms of Mg atom, which were then stirred for 15 minutes. Next, the reactor was charged with 8.00 mg of L-71 as the compound (F) that was an antistatic agent, which was then stirred for 3 minutes. Thereafter, the reactor was cooled to a temperature of 40°C and charged with 2.2 pmol of the transition metal compound (B-6) represented by the following Formula (B-6) in terms of Ti atom and charged with 3.75 mL of hydrogen, then to carry out a polymerization reaction at 50°C for 50 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 28.5 g. Table 2 shows the various measurement results.

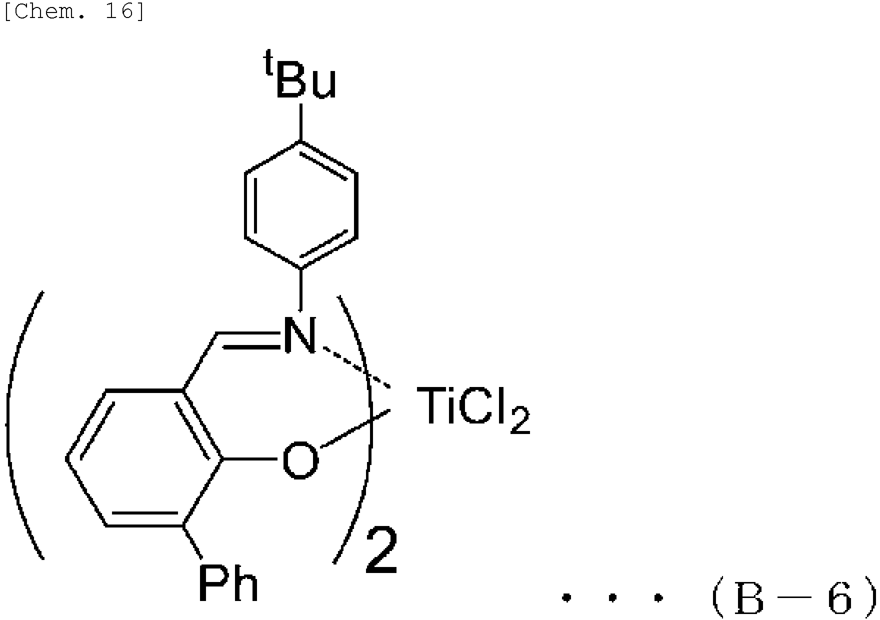

### [Example 2-11]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of TR-701 as the compound (F) that was an antistatic agent, which was then stirred for 3 minutes. Thereafter, the reactor was cooled to a temperature of 40°C and charged with 0.42 pmol of the transition metal compound (B-7) represented by the following Formula (B-7) in terms of Zr atom, which was then stirred for 3 minutes. The reactor was charged with 1.25 mL of hydrogen while supplied with ethylene gas, then to carry out a polymerization reaction at 50°C for 102 minutes while supplied with ethylene gas so that the total pressure reached 0.1 MPaG. After completion of the polymerization, the polymer was filtered and washed with decane followed by with hexane, and then dried under reduced pressure at 80°C for 18 hours. The amount of the obtained ethylenic polymer particles was 26.8 g. Table 2 shows the various measurement results.

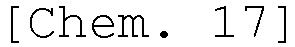

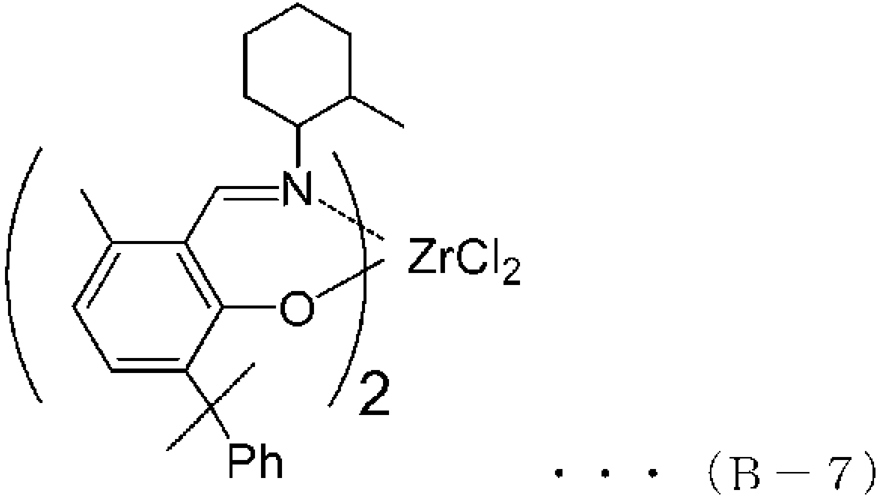

### [Example 2-12]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of TR-701 as the compound (F) that was an antistatic agent, which was then stirred for 3 minutes. Thereafter, the reactor was cooled to a temperature of 40°C and charged with 0.42 pmol of the transition metal compound (B-8) represented by the following Formula (B-8) in terms of Zr atom, which was then stirred for 3 minutes. The reactor was charged with 1.25 mL of hydrogen while supplied with ethylene gas, then to carry out a polymerization reaction at 50°C for 135 minutes while supplied with ethylene gas so that the total pressure reached 0.6 MPaG. After completion of the polymerization, the polymer was filtered and washed with decane followed by with hexane, and then dried under reduced pressure at 80°C for 18 hours. The amount of the obtained ethylenic polymer particles was 26.6 g. Table 2 shows the various measurement results.

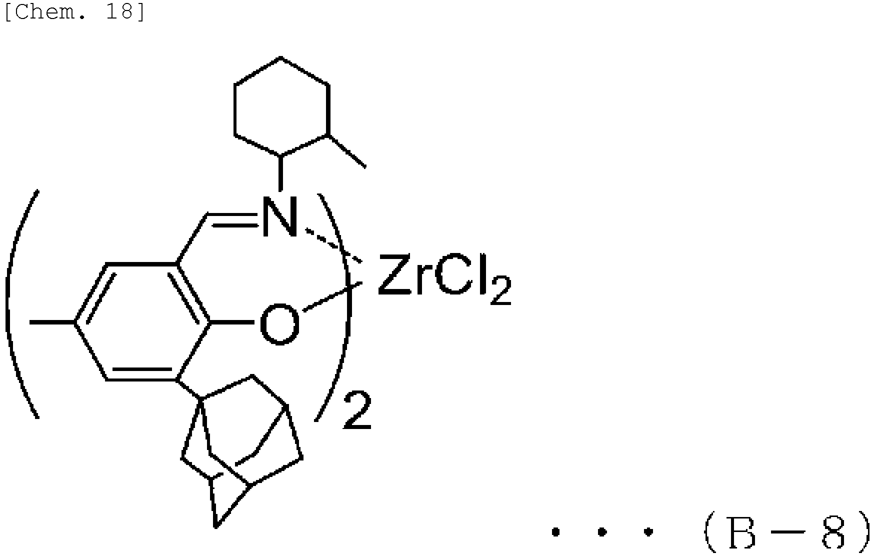

### [Example 2-13]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of L-71 as the compound (F) that was an antistatic agent, which was then stirred for 3 minutes. Thereafter, the reactor was cooled to a temperature of 40°C and charged with 0.42 pmol of the transition metal compound (B-9) represented by the following Formula (B-9) in terms of Zr atom, which was then stirred for 3 minutes. The reactor was charged with 1.25 mL of hydrogen while supplied with ethylene gas, then to carry out a polymerization reaction at 50°C for 109 minutes while supplied with ethylene gas so that the total pressure reached 0.2 MPaG. After completion of the polymerization, the polymer was filtered and washed with decane followed by with hexane, and then dried under reduced pressure at 80°C for 18 hours. The amount of the obtained ethylenic polymer particles was 27.6 g. Table 2 shows the various measurement results.

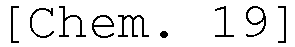

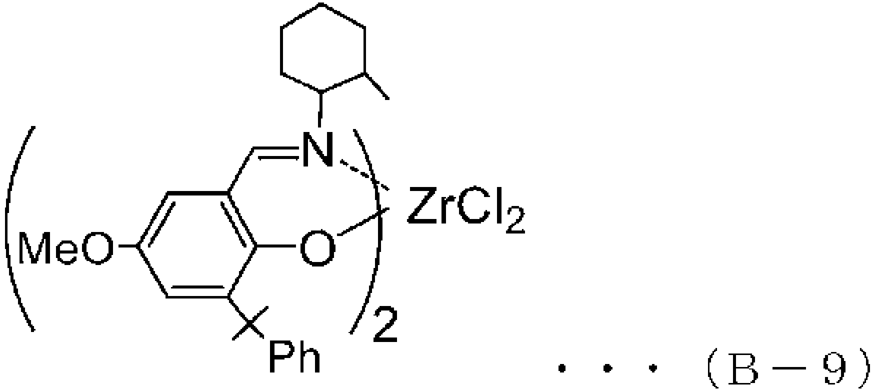

### [Example 2-14]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of L-71 as the compound (F) that was an antistatic agent, which was then stirred for 3 minutes. Thereafter, the reactor was cooled to a temperature of 40°C and charged with 0.42 pmol of the transition metal compound (B-10) represented by the following Formula (B-10) in terms of Zr atom, which was then stirred for 3 minutes. The reactor was charged with 1.25 mL of hydrogen while supplied with ethylene gas, then to carry out a polymerization reaction at 50°C for 135 minutes while supplied with ethylene gas so that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 28.0 g. Table 2 shows the various measurement results.

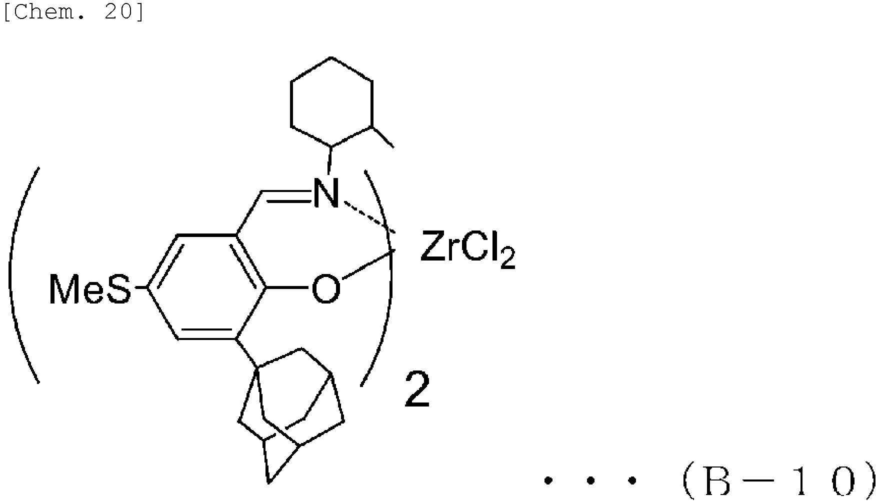

### [Example 2-15]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of L-71 as the compound (F) that was an antistatic agent, which was then stirred for 3 minutes. Thereafter, the reactor was cooled to a temperature of 40°C and charged with 0.42 pmol of the transition metal compound (B-11) represented by the following Formula (B-11) in terms of Zr atom, which was then stirred for 3 minutes. The reactor was charged with 1.25 mL of hydrogen while supplied with ethylene gas, then to carry out a polymerization reaction at 50°C for 207 minutes while supplied with ethylene gas such that the total pressure reached 0.6 MPaG. After completion of the polymerization, the polymer was filtered and washed with decane followed by with hexane, and then dried under reduced pressure at 80°C for 18 hours. The amount of the obtained ethylenic polymer particles was 24.3 g. Table 2 shows the various measurement results.

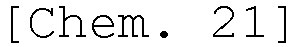

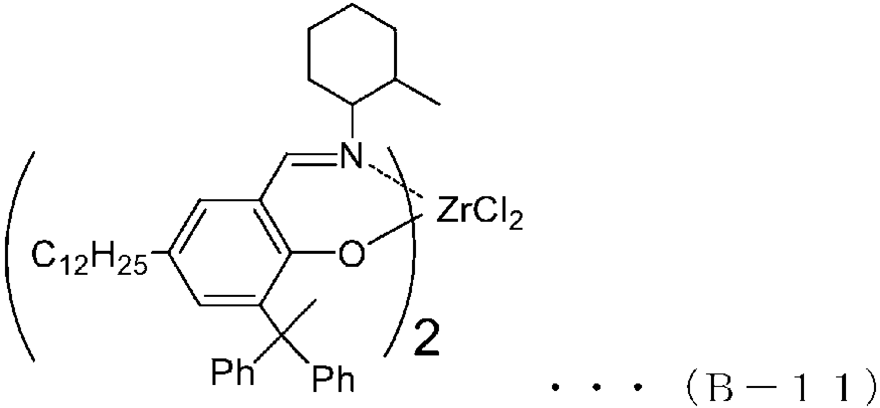

### [Example 2-16]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 1.88 mg of ADEKA PLURONIC (registered trademark) L-31 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 111 minutes while supplied with ethylene gas such that the total pressure reached 0.2 MPaG. After completion of the polymerization, the polymer was filtered and washed with decane followed by with hexane, and then dried under reduced pressure at 80°C for 18 hours. The amount of the obtained ethylenic polymer particles was 27.4 g. Table 2 shows the various measurement results.

### [Example 2-17]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 15.00 mg of ADEKA PLURONIC L-72 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 133 minutes while supplied with ethylene gas such that the total pressure reached 0.5 MPaG. After completion of the polymerization, the polymer was filtered and washed with decane followed by with hexane, and then dried under reduced pressure at 80°C for 18 hours. The amount of the obtained ethylenic polymer particles was 29.3 g. Table 2 shows the various measurement results.

### [Example 2-18]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of ADEKA PLURONIC P-85 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 112 minutes while supplied with ethylene gas such that the total pressure reached 0.2 MPaG. After completion of the polymerization, the polymer was filtered and washed with decane followed by with hexane, and then dried under reduced pressure at 80°C for 18 hours. The amount of the obtained ethylenic polymer particles was 27.6 g. Table 2 shows the various measurement results.

### [Example 2-19]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 6.00 mg of ADEKA PLURONIC F-88 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 112 minutes while supplied with ethylene gas such that the total pressure reached 0.2 MPaG. After completion of the polymerization, the polymer was filtered and washed with decane followed by with hexane, and then dried under reduced pressure at 80°C for 18 hours. The amount of the obtained ethylenic polymer particles was 27.8 g. Table 2 shows the various measurement results.

### [Example 2-20]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 7.50 mg of ADEKA PLURONIC 17-R2 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 113 minutes while supplied with ethylene gas such that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 27.8 g. Table 2 shows the various measurement results.

### [Example 2-21]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, where were then stirred for 15 minutes. Next, the reactor was charged with 7.50 mg of ADEKA PLURONIC TR-702 (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 116 minutes while supplied with ethylene gas such that the total pressure reached 0.2 MPaG. After completion of the polymerization, the polymer was filtered and washed with decane followed by with hexane, and then dried under reduced pressure at 80°C for 18 hours. The amount of the obtained ethylenic polymer particles was 28.2 g. Table 2 shows the various measurement results.

### [Example 2-22]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 3.75 mg of ADEKA PLURONIC TR-913R (manufactured by ADEKA Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 112 minutes while supplied with ethylene gas such that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 28.1 g. Table 2 shows the various measurement results.

### [Example 2-23]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 3.75 mg of EMULGEN 108 (manufactured by Kao Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 123 minutes while supplied with ethylene gas such that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 27.8 g. Table 2 shows the various measurement results.

### [Example 2-24]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 3.75 mg of EMULGEN 109P (manufactured by Kao Corporation) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 123 minutes while supplied with ethylene gas such that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 28.5 g. Table 2 shows the various measurement results.

### [Example 2-25]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 3.75 mg of Amizet 5C (manufactured by Kawaken Fine Chemicals Co., Ltd.) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 120 minutes while supplied with ethylene gas such that the total pressure reached 0.3 MPaG. After completion of the polymerization, the polymer was filtered and washed with decane followed by with hexane, and then dried under reduced pressure at 80°C for 18 hours. The amount of the obtained ethylenic polymer particles was 28.2 g. Table 2 shows the various measurement results.

### [Example 2-26]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom, which were then stirred for 15 minutes. Next, the reactor was charged with 6.00 mg of Acetylenol E13T (manufactured by Kawaken Fine Chemicals Co., Ltd.) as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 128 minutes while supplied with ethylene gas such that the total pressure reached 0.4 MPaG. After completion of the polymerization, the polymer was filtered and washed with decane followed by with hexane, and then dried under reduced pressure at 80°C for 18 hours. The amount of the obtained ethylenic polymer particles was 28.9 g. Table 2 shows the various measurement results.

### [Table 2]

**Table 2**

| | Transition metal compound (B) | Compound (F) | Ethylenic polymer particle | | | | | | | Stretch-molded body | |
|---|---|---|---|---|---|---|---|---|---|---|---|
| | | | Specific surface area (m²/g) | Compound (F) content (ppm) | Intrinsic viscosity [η] (dl/g) | Bulk density (g/mL) | Mg content (ppm) | Coarse particle amount (>1 mm) (wt%) | Flowability (presence or absence of clogging phenomenon) | Stretching ratio (times) | Strength (GPa) |
| Example 2-1 | B-1 | L-71 | 11.4 | 88 | 37.1 | 0.068 | 350 | 0.8 | Absence | 167 | 3.4 |
| Example 2-2 | B-1 | TR-701 | 15.4 | 130 | 36.4 | 0.062 | 410 | 0.5 | Absence | 187 | 2.9 |
| Example 2-3 | B-2 | TR-701 | 9.1 | 100 | 31.9 | 0.065 | 230 | 0.5 | Absence | 166 | 2.5 |
| Example 2-4 | B-2 | TR-701 | 8.4 | 50 | 38.9 | 0.078 | 170 | 0.6 | Absence | 148 | 2.5 |
| Example 2-5 | B-2 | TR-701 | 10.3 | 7 | 24.7 | 0.062 | 300 | 1.8 | Absence | 155 | 2.4 |
| Example 2-6 | B-2 | TR-701 | 8.7 | 300 | 30.1 | 0.048 | 300 | 11.9 | Absence | 157 | 2.5 |
| Comparative Example 2-1 | B-1 | - | 6.1 | <5 | 35.4 | 0.073 | 280 | 84.6 | Presence | 170 | 3.5 |
| Comparative Example 2-2 | B-1 | L-71 | 0.05 | 20 | 36.1 | 0.26 | N.D. | 0.0 | Absence | - | - |
| Example 2-7 | B-3 | TR-701 | 9.27 | 73 | 37.7 | 0.065 | N.D. | 10.6 | Absence | 176 | 3.3 |
| Example 2-8 | B-4 | TR-701 | 9.76 | 92 | 15.1 | 0.053 | N.D. | 1.2 | Absence | 175 | 2.1 |
| Example 2-9 | B-5 | L-71 | 9.78 | 78 | 14.3 | 0.047 | N.D. | 0.8 | Absence | 161 | 2.0 |
| Example 2-10 | B-6 | L-71 | 8.10 | 76 | 8.0 | 0.039 | N.D. | 0.8 | Absence | 120 | 1.2 |
| Example 2-11 | B-7 | TR-701 | 8.73 | 74 | 24.3 | 0.055 | N.D. | 19.1 | Absence | 154 | 2.3 |
| Example 2-12 | B-8 | TR-701 | 8.42 | 74 | 34.0 | 0.055 | N.D. | 4.8 | Absence | 163 | 2.4 |
| Example 2-13 | B-9 | L-71 | 7.11 | 87 | 25.4 | 0.052 | N.D. | 14.3 | Absence | 152 | 2.3 |
| Example 2-14 | B-10 | L-71 | 7.17 | 79 | 33.3 | 0.052 | N.D. | 15.2 | Absence | 158 | 2.4 |
| Example 2-15 | B-11 | L-71 | 6.32 | 100 | 32.0 | 0.051 | N.D. | 15.6 | Absence | 160 | 2.4 |
| Example 2-16 | B-2 | L-31 | 8.63 | 27 | 28.1 | 0.052 | N.D. | 8.41 | Absence | 167 | 2.3 |
| Example 2-17 | B-2 | L-72 | 5.74 | 190 | 36.8 | 0.051 | N.D. | 15.32 | Absence | 155 | 2.6 |
| Example 2-18 | B-2 | P-85 | 8.11 | 210 | 30.4 | 0.053 | N.D. | 3.37 | Absence | 154 | 2.5 |
| Example 2-19 | B-2 | F-88 | 9.12 | 59 | 27.6 | 0.061 | N.D. | 4.15 | Absence | 149 | 2.1 |
| Example 2-20 | B-2 | 17-R2 | 7.28 | 63 | 30.4 | 0.049 | N.D. | 12.1 | Absence | 150 | 2.3 |
| Example 2-21 | B-2 | TR-702 | 8.16 | 46 | 31.4 | 0.052 | N.D. | 4.24 | Absence | 154 | 2.4 |
| Example 2-22 | B-2 | TR-913R | 8.18 | 55 | 28.1 | 0.046 | N.D. | 6.6 | Absence | 160 | 2.3 |
| Example 2-23 | B-2 | EMULGEN 108 | 7.35 | 45 | 33.7 | 0.050 | N.D. | 9.83 | Absence | 158 | 2.5 |
| Example 2-24 | B-2 | EMULGEN 109P | 7.06 | 68 | 32.0 | 0.050 | N.D. | 904 | Absence | 155 | 2.5 |
| Example 2-25 | B-2 | Amizet 5C | 7.32 | 43 | 34.4 | 0.051 | N.D. | 14.77 | Absence | 161 | 2.5 |
| Example 2-26 | B-2 | E13T | 8.20 | 37 | 40.0 | 0.057 | N.D. | 16.98 | Absence | 148 | 2.3 |

The third embodiment of the present invention will be described below based on Examples.

### [Example 3-1]

Ethylene polymerization was carried out in the same manner as in [Example 2-1] described above. After completion of the polymerization, no adhesion of polymer was observed on a wall of a polymerization vessel (no fouling occurred). Table 3 shows the various measurement results.

### [Example 3-2]

Ethylene polymerization was carried out in the same manner as in [Example 2-2] described above. After completion of the polymerization, no adhesion of polymer was observed on a wall of a polymerization vessel (no fouling occurred). Table 3 shows the various measurement results.

### [Example 3-3]

Ethylene polymerization was carried out in the same manner as in [Example 2-3] described above. After completion of the polymerization, no adhesion of polymer was observed on a wall of a polymerization vessel (no fouling occurred). Table 3 shows the various measurement results.

### [Example 3-4]

Ethylene polymerization was carried out in the same manner as in [Example 2-4] described above. After completion of the polymerization, no adhesion of polymer was observed on a wall of a polymerization vessel (no fouling occurred). Table 3 shows the various measurement results.

### [Example 3-5]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 7.5 mg of ADEKA PLURONIC (registered trademark) TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, which was then stirred for 3 minutes. The reactor was supplied with ethylene gas followed by stirring for 3 minutes and then charged with 13.5 mg of ADEKA PLURONIC (registered trademark) TR-701. The reactor was charged with 1.25 mL of hydrogen while supplied with ethylene gas, then to carry out a polymerization reaction at 50°C for 178 minutes while supplied with ethylene gas such that the total pressure reached 0.3 MPaG. After completion of the polymerization, no adhesion of polymer was observed on a wall of a polymerization vessel (no fouling occurred). The polymer was filtered and washed with decane followed by with hexane, and then dried under reduced pressure at 80°C for 18 hours. The amount of the obtained ethylenic polymer particles was 25.4 g. Table 3 shows the various measurement results.

### [Comparative Example 3-1]

Ethylene polymerization was carried out in the same manner as in [Comparative Example 2-1] described above. After completion of the polymerization, adhesion of polymer was observed on a wall of a polymerization vessel (fouling occurred). Table 3 shows the various measurement results.

### [Comparative Example 3-2]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 2.95 mg of ADEKA PLURONIC (registered trademark) L-71 as the compound (F) that was an antistatic agent and then charged with 1.39 mmol of triisobutylaluminum in terms of Al atom, which were then stirred for 3 minutes, and then charged with 0.44 mmol of the component (i) in terms of Mg atom, which was then stirred for 15 minutes. Thereafter, the reactor was cooled to a temperature of 40°C and charged with 2.2 pmol of the transition metal compound (B-1) in terms of Ti atom and next charged with 3.75 mL of hydrogen, then to carry out a polymerization reaction at 50°C for 65 minutes while supplied with ethylene gas such that the total pressure reached 0.5 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 27.5 g. Table 3 shows the various measurement results.

### [Comparative Example 3-3]

### <Ethylene polymerization>

A 1 L volume reactor with a stirrer and a baffle board, fully substituted with nitrogen was charged with 500 mL of dehydrated decan and then substituted with ethylene. The reactor was raised to a temperature of 60°C, charged with 1.39 mmol of triisobutylaluminum in terms of Al atom, then charged with 2.95 mg of ADEKA PLURONIC (registered trademark) L-71 as the compound (F) that was an antistatic agent, which were then stirred for 3 minutes, and then charged with 0.44 mmol of the component (i) in terms of Mg atom, which was then stirred for 15 minutes. Thereafter, the reactor was cooled to a temperature of 40°C and charged with 2.2 pmol of the transition metal compound (B-1) in terms of Ti atom and next charged with 3.75 mL of hydrogen, then to carry out a polymerization reaction at 50°C for 66 minutes while supplied with ethylene gas such that the total pressure reached 0.5 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 27.2 g. Table 3 shows the various measurement results.

### [Comparative Example 3-4]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 7.5 mg of ADEKA PLURONIC (registered trademark) TR-701 as the compound (F) that was an antistatic agent and then charged with 1.39 mmol of triisobutylaluminum in terms of Al atom, which were then stirred for 3 minutes, and then charged with 0.44 mmol of the component (i) in terms of Mg atom, which was then stirred for 15 minutes. Thereafter, the reactor was cooled to a temperature of 40°C and charged with 2.2 pmol of the transition metal compound (B-1) in terms of Ti atom and next charged with 3.75 mL of hydrogen, then to carry out a polymerization reaction at 50°C for 104 minutes while supplied with ethylene gas such that the total pressure reached 0.5 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 25.6 g. Table 3 shows the various measurement results.

### [Comparative Example 3-5]

### <Ethylene polymerization>

A 1 L volume reactor with a stirrer and a baffle board, fully substituted with nitrogen was charged with 500 mL of dehydrated decane and then substituted with ethylene. The reactor was raised to a temperature of 60°C, charged with 1.39 mmol of triisobutylaluminum in terms of Al atom, then charged with 7.5 mg of ADEKA PLURONIC (registered trademark) TR-701 as the compound (F) that was an antistatic agent, which were then stirred for 3 minutes, and then charged with 0.44 mmol of the component (i) in terms of Mg atom, which was then stirred for 15 minutes. Thereafter, the reactor was cooled to a temperature of 40°C and charged with 2.2 pmol of the transition metal compound (B-1) in terms of Ti atom and next charged with 3.75 mL of hydrogen, then to carry out a polymerization reaction at 50°C for 139 minutes while supplied with ethylene gas such that the total pressure reached 0.5 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 20.3 g. Table 3 shows the various measurement results.

### [Comparative Example 3-6]

### <Ethylene polymerization>

A 1 L volume reactor with a stirrer and a baffle board, fully substituted with nitrogen was charged with 500 mL of dehydrated decane. The reactor was raised to a temperature of 60°C, charged with 7.5 mg of ADEKA PLURONIC (registered trademark) TR-701 as the compound (F) that was an antistatic agent, next charged with 1.34 mmol of triisobutylaluminum in terms of Al atom, which were then stirred for 3 minutes, and then charged with 0.335 mmol of the component (i) in terms of Mg atom, which was then stirred for 15 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 118 minutes while supplied with ethylene gas such that the total pressure reached 0.3 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 28.6 g. Table 3 shows the various measurement results.

### [Comparative Example 3-7]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom. Next, the reactor was charged with 7.5 mg of ADEKA PLURONIC (registered trademark) TR-701 as the compound (F) that was an antistatic agent, which was then stirred for 3 minutes, and then charged with 0.335 mmol of the component (i) in terms of Mg atom, which was then stirred for 15 minutes. Thereafter, the reactor was cooled to a temperature of 40°C and charged with 0.42 pmol of the transition metal compound (B-2) in terms of Zr atom, which was then stirred for 3 minutes. The reactor was charged with 1.25 mL of hydrogen while supplied with ethylene gas, then to carry out a polymerization reaction at 50°C for 120 minutes while supplied with ethylene gas such that the total pressure reached 0.3 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The results are shown in Table 1. The amount of the obtained ethylenic polymer particles was 27.4 g. Table 3 shows the various measurement results.

### [Comparative Example 3-8]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 0.5 mg of ADEKA PLURONIC (registered trademark) TR-701 as the compound (F) that was an antistatic agent, followed by stirring for 3 minutes. Thereafter, the reactor was cooled to a temperature of 40°C and charged with 0.42 pmol of the transition metal compound (B-2) in terms of Zr atom, followed by stirring for 3 minutes. The reactor was charged with 1.25 mL of hydrogen while supplied with ethylene gas, then to carry out a polymerization reaction at 50°C for 112 minutes while supplied with ethylene gas such that the total pressure reached 0.3 MPaG. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 27.4 g. Table 3 shows the various measurement results.

### [Comparative Example 3-9]

### <Ethylene polymerization>

A 1 L volume reactor with a stirrer and a baffle board, fully substituted with nitrogen was charged with 500 mL of dehydrated decane. The reactor was raised to a temperature of 60°C, charged with 1.34 mmol of triisobutylaluminum in terms of Al atom and then charged with 0.335 mmol of the component (i) in terms of Mg atom in this order, which were then stirred for 15 minutes. Next, the reactor was charged with 7.5 mg of ADEKA PLURONIC (registered trademark) TR-701 as the compound (F) that was an antistatic agent, which was then stirred for 3 minutes. Thereafter, the reactor was cooled to a temperature of 40°C and charged with 0.42 pmol of the transition metal compound (B-2) in terms of Zr atom, followed by stirring for 3 minutes. The reactor was charged with 1.25 mL of hydrogen while supplied with ethylene gas, then charged with 10.0 mg of ADEKA PLURONIC (registered trademark) TR-701 sequentially 7 times at 15 minute intervals while supplied with ethylene gas such that the total pressure reached 0.3 MPaG, to carry out a polymerization reaction at 50°C for 121 minutes. After completion of the polymerization, adhesion of polymer was observed on a wall of a polymerization vessel (fouling occurred). The polymer was filtered and washed with decane followed by with hexane, and then dried under reduced pressure at 80°C for 18 hours. The amount of the obtained ethylenic polymer particles was 24.6 g. Table 3 shows the various measurement results.

### [Example 3-6]

Ethylene polymerization was carried out in the same manner as in [Example 2-7] described above. After completion of the polymerization, no adhesion of polymer was observed on a wall of a polymerization vessel (no fouling occurred). Table 3 shows the various measurement results.

### [Example 3-7]

Ethylene polymerization was carried out in the same manner as in [Example 2-8] described above. After completion of the polymerization, no adhesion of polymer was observed on a wall of a polymerization vessel (no fouling occurred). Table 3 shows the various measurement results.

### [Example 3-8]

Ethylene polymerization was carried out in the same manner as in [Example 2-9] described above. After completion of the polymerization, no adhesion of polymer was observed on a wall of a polymerization vessel (no fouling occurred). Table 3 shows the various measurement results.

### [Example 3-9]

Ethylene polymerization was carried out in the same manner as in [Example 2-10] described above. After completion of the polymerization, no adhesion of polymer was observed on a wall of a polymerization vessel (no fouling occurred). Table 3 shows the various measurement results.

### [Example 3-10]

Ethylene polymerization was carried out in the same manner as in [Example 2-11] described above. After completion of the polymerization, no adhesion of polymer was observed on a wall of a polymerization vessel (no fouling occurred). Table 3 shows the various measurement results.

### [Example 3-11]

Ethylene polymerization was carried out in the same manner as in [Example 2-12] described above. After completion of the polymerization, no adhesion of polymer was observed on a wall of a polymerization vessel (no fouling occurred). Table 3 shows the various measurement results.

### [Example 3-12]

Ethylene polymerization was carried out in the same manner as in [Example 2-13] described above. After completion of the polymerization, no adhesion of polymer was observed on a wall of a polymerization vessel (no fouling occurred). Table 3 shows the various measurement results.

### [Example 3-13]

Ethylene polymerization was carried out in the same manner as in [Example 2-14] described above. After completion of the polymerization, no adhesion of polymer was observed on a wall of a polymerization vessel (no fouling occurred). Table 3 shows the various measurement results.

### [Example 3-14]

Ethylene polymerization was carried out in the same manner as in [Example 2-15] described above. After completion of the polymerization, no adhesion of polymer was observed on a wall of a polymerization vessel (no fouling occurred). Table 3 shows the various measurement results.

### [Example 3-15]

Ethylene polymerization was carried out in the same manner as in [Example 2-16] described above. After completion of the polymerization, no adhesion of polymer was observed on a wall of a polymerization vessel (no fouling occurred). Table 3 shows the various measurement results.

### [Example 3-16]

Ethylene polymerization was carried out in the same manner as in [Example 2-17] described above. After completion of the polymerization, no adhesion of polymer was observed on a wall of a polymerization vessel (no fouling occurred). Table 3 shows the various measurement results.

### [Example 3-17]

Ethylene polymerization was carried out in the same manner as in [Example 2-18] described above. After completion of the polymerization, no adhesion of polymer was observed on a wall of a polymerization vessel (no fouling occurred). Table 3 shows the various measurement results.

### [Example 3-18]

Ethylene polymerization was carried out in the same manner as in [Example 2-19] described above. After completion of the polymerization, no adhesion of polymer was observed on a wall of a polymerization vessel (no fouling occurred). Table 3 shows the various measurement results.

### [Example 3-19]

Ethylene polymerization was carried out in the same manner as in [Example 2-20] described above. After completion of the polymerization, no adhesion of polymer was observed on a wall of a polymerization vessel (no fouling occurred). Table 3 shows the various measurement results.

### [Example 3-20]

Ethylene polymerization was carried out in the same manner as in [Example 2-21] described above. After completion of the polymerization, no adhesion of polymer was observed on a wall of a polymerization vessel (no fouling occurred). Table 3 shows the various measurement results.

### [Example 3-21]

Ethylene polymerization was carried out in the same manner as in [Example 2-22] described above. After completion of the polymerization, no adhesion of polymer was observed on a wall of a polymerization vessel (no fouling occurred). Table 3 shows the various measurement results.

### [Example 3-22]

Ethylene polymerization was carried out in the same manner as in [Example 2-23] described above. After completion of the polymerization, no adhesion of polymer was observed on a wall of a polymerization vessel (no fouling occurred). Table 3 shows the various measurement results.

### [Example 3-23]

Ethylene polymerization was carried out in the same manner as in [Example 2-24] described above. After completion of the polymerization, no adhesion of polymer was observed on a wall of a polymerization vessel (no fouling occurred). Table 3 shows the various measurement results.

### [Example 3-24]

Ethylene polymerization was carried out in the same manner as in [Example 2-25] described above. After completion of the polymerization, no adhesion of polymer was observed on a wall of a polymerization vessel (no fouling occurred). Table 3 shows the various measurement results.

### [Example 3-25]

Ethylene polymerization was carried out in the same manner as in [Example 2-26] described above. After completion of the polymerization, no adhesion of polymer was observed on a wall of a polymerization vessel (no fouling occurred). Table 3 shows the various measurement results.

### [Table 3]

**Table 3**

| | Transition metal compound (B) | Compound (F) | Compound (F) concentration (mg/L) | Fouling |
|---|---|---|---|---|
| Example 3-1 | B-1 | L-71 | 5.9 | Absence |
| Example 3-2 | B-1 | TR-701 | 15.0 | Absence |
| Example 3-3 | B-2 | TR-701 | 15.2 | Absence |
| Example 3-4 | B-2 | TR-701 | 26.9 | Absence |
| Example 3-5 | B-2 | TR-701 | 42.0 | Absence |
| Comparative Example 3-1 | B-1 | - | - | Presence |
| Comparative Example 3-2 | B-1 | L-71 | 5.9 | Presence |
| Comparative Example 3-3 | B-1 | L-71 | 5.9 | Presence |
| Comparative Example 3-4 | B-1 | TR-701 | 15.0 | Presence |
| Comparative Example 3-5 | B-1 | TR-701 | 15.0 | Presence |
| Comparative Example 3-6 | B-2 | TR-701 | 15.0 | Presence |
| Comparative Example 3-7 | B-2 | TR-701 | 15.0 | Presence |
| Comparative Example 3-8 | B-2 | TR-701 | 1.0 | Presence |
| Comparative Example 3-9 | B-2 | TR-701 | 155.0 | Presence |
| Example 3-6 | B-3 | TR-701 | 15.0 | Absence |
| Example 3-7 | B-4 | TR-701 | 15.0 | Absence |
| Example 3-8 | B-5 | L-71 | 16.0 | Absence |
| Example 3-9 | B-6 | L-71 | 16.0 | Absence |
| Example 3-10 | B-7 | TR-701 | 15.0 | Absence |
| Example 3-11 | B-8 | TR-701 | 15.0 | Absence |
| Example 3-12 | B-9 | L-71 | 15.0 | Absence |
| Example 3-13 | B-10 | L-71 | 15.0 | Absence |
| Example 3-14 | B-11 | L-71 | 15.0 | Absence |
| Example 3-15 | B-2 | L-31 | 3.8 | Absence |
| Example 3-16 | B-2 | L-72 | 30.0 | Absence |
| Example 3-17 | B-2 | P-85 | 15.0 | Absence |
| Example 3-18 | B-2 | F-88 | 12.0 | Absence |
| Example 3-19 | B-2 | 17-R2 | 15.0 | Absence |
| Example 3-20 | B-2 | TR-702 | 15.0 | Absence |
| Example 3-21 | B-2 | TR-913R | 7.5 | Absence |
| Example 3-22 | B-2 | EMULGEN 108 | 7.5 | Absence |
| Example 3-23 | B-2 | EMULGEN 109P | 7.5 | Absence |
| Example 3-24 | B-2 | Amizet 5C | 7.5 | Absence |
| Example 3-25 | B-2 | E13T | 12.0 | Absence |

**Table 3 (continued)**

| | Ethylenic polymer particle | | | | | | | Stretch-molded body | |
|---|---|---|---|---|---|---|---|---|---|
| | Specific surface area (m²/g) | Compound (F) content (ppm) | Intrinsic viscosity [η] (dl/g) | Bulk density (g/mL) | Mg content (ppm) | Coarse particle amount (>1 mm) (wt%) | Flowability (presence or absence of clogging phenomenon) | Stretching ratio (times) | Strength (GPa) |
| Example 3-1 | 11.4 | 88 | 37.1 | 0.068 | 350 | 0.8 | Absence | 167 | 3.4 |
| Example 3-2 | 15.4 | 130 | 36.4 | 0.062 | 410 | 0.5 | Absence | 187 | 2.9 |
| Example 3-3 | 9.1 | 100 | 31.9 | 0.065 | 230 | 0.5 | Absence | 166 | 2.5 |
| Example 3-4 | 8.4 | 50 | 38.9 | 0.078 | 170 | 0.6 | Absence | 148 | 2.5 |
| Example 3-5 | 8.5 | - | 41.1 | 0.090 | 160 | 2.8 | - | 158 | 2.6 |
| Comparative Example 3-1 | 6.1 | <5 | 35.4 | 0.073 | 280 | 84.6 | Presence | 170 | 3.5 |
| Comparative Example 3-2 | 9.68 | - | 36.4 | 0.056 | 400 | 15.5 | - | - | - |
| Comparative Example 3-3 | 9.92 | - | 34.5 | 0.055 | 400 | 8.3 | - | - | - |
| Comparative Example 3-4 | 9.57 | - | 37.1 | 0.061 | 410 | 9.0 | - | - | - |
| Comparative Example 3-5 | 10.8 | - | 35.8 | 0.057 | 520 | 16.8 | - | - | - |
| Comparative Example 3-6 | 8.92 | - | 31.6 | 0.064 | 280 | 6.5 | - | - | - |
| Comparative Example 3-7 | 8.63 | - | 31.3 | 0.066 | 290 | 10.3 | - | - | - |
| Comparative Example 3-8 | 10.3 | 7 | 24.7 | 0.062 | 300 | 1.8 | Absence | 155 | 2.4 |
| Comparative Example 3-9 | 8.7 | 300 | 30.1 | 0.048 | 300 | 11.9 | Absence | 157 | 2.5 |
| Example 3-6 | 9.27 | 73 | 37.7 | 0.065 | N.D. | 10.6 | Absence | 176 | 3.3 |
| Example 3-7 | 9.76 | 92 | 15.1 | 0.053 | N.D. | 1.2 | Absence | 175 | 2.1 |
| Example 3-8 | 9.78 | 78 | 14.3 | 0.047 | N.D. | 0.8 | Absence | 161 | 2.0 |
| Example 3-9 | 8.10 | 76 | 8.0 | 0.039 | N.D. | 0.8 | Absence | 120 | 1.2 |
| Example 3-10 | 8.73 | 74 | 24.3 | 0.055 | N.D. | 19.1 | Absence | 154 | 2.3 |
| Example 3-11 | 8.42 | 74 | 34.0 | 0.055 | N.D. | 4.8 | Absence | 163 | 2.4 |
| Example 3-12 | 7.11 | 87 | 25.4 | 0.052 | N.D. | 14.3 | Absence | 152 | 2.3 |
| Example 3-13 | 7.17 | 79 | 33.3 | 0.052 | N.D. | 15.2 | Absence | 158 | 2.4 |
| Example 3-14 | 6.32 | 100 | 32.0 | 0.051 | N.D. | 15.6 | Absence | 160 | 2.4 |
| Example 3-15 | 8.63 | 27 | 28.1 | 0.052 | N.D. | 8.41 | Absence | 167 | 2.3 |
| Example 3-16 | 5.74 | 190 | 36.8 | 0.051 | N.D. | 15.32 | Absence | 155 | 2.6 |
| Example 3-17 | 8.11 | 210 | 30.4 | 0.053 | N.D. | 3.37 | Absence | 154 | 2.5 |
| Example 3-18 | 9.12 | 59 | 27.6 | 0.061 | N.D. | 4.15 | Absence | 149 | 2.1 |
| Example 3-19 | 7.28 | 63 | 30.4 | 0.049 | N.D. | 12.1 | Absence | 150 | 2.3 |
| Example 3-20 | 8.16 | 46 | 31.4 | 0.052 | N.D. | 4.24 | Absence | 154 | 2.4 |
| Example 3-21 | 8.18 | 55 | 28.1 | 0.046 | N.D. | 6.6 | Absence | 160 | 2.3 |
| Example 3-22 | 7.35 | 45 | 33.7 | 0.05 | N.D. | 9.83 | Absence | 158 | 2.5 |
| Example 3-23 | 7.06 | 68 | 32.0 | 0.05 | N.D. | 9.04 | Absence | 155 | 2.5 |
| Example 3-24 | 7.32 | 43 | 34.4 | 0.051 | N.D. | 14.77 | Absence | 161 | 2.5 |
| Example 3-25 | 8.20 | 37 | 40.0 | 0.057 | N.D. | 16.98 | Absence | 148 | 2.3 |

The fourth embodiment of the present invention will be described below based on Examples.

### <Self-supportability of molded body (bindability)>

The self-supportability of the molded bodies obtained below was evaluated based on the following criteria.

G (Good): When one end of a molded body was held by hand, the molded body (film shape) did not change its shape and could retain its shape (the binder had excellent bindability).

P (Poor): When one end of a molded body was held by hand, the molded body collapses because graphite particles could not be bonded, or the molded body could not retain its shape due to breakage or cracks just by being held by hand (the binder did not have sufficient bindability).

### <Tensile strength at break of molded body>

The molded body obtained below was cut out so that the width in the rolling direction was 5 mm, to fabricate a test piece. Using the test piece fabricated and a tensile tester (universal tester Model 5982, manufactured by Instron Corporation), the tensile strength at break of the test piece in the rolling direction was measured under the conditions of temperature: 23°C, chuck distance: 10 mm, and tensile speed: 1 mm/min.

### [Example 4-1]

As a binder, 4 parts by mass of the ethylenic polymer particle obtained in the above Example 1-2 (corresponding to the ethylenic polymer particle obtained in the above Example 2-1 or the above Example 3-1) and 96 parts by mass of natural graphite particle were used and stirred for 5 minutes using a planetary centrifugal type degassing mixer (ARE-310, manufactured by Shinky Co., Ltd.) to obtain a mixture.

Next, a mold (thickness: 0.3 mm, size: 65 mm × 65 mm) was filled with the obtained mixture, which was pressed using a hydraulic press machine at a temperature of 23°C for 3 minutes, and underwent powder compaction molding to obtain powder compaction-molded sheet.

Next, the powder compaction-molded sheet was subjected to roll molding using a heated roll press machine (manufactured by THANK METAL CO., LTD., roll diameter: 250 mmΦ, roll temperature: 200°C, roll speed: 0.3 m/min, gap: 100 µm) to fabricate a molded body in the form of film having a thickness of 100 pm.

The self-supportability evaluation of the obtained molded body was G, meaning that when one end of the molded body was held by hand, the molded body could retain its shape and support on its own.

The tensile strength at break of the obtained molded body was 3.2 MPa.

### [Comparative Example 4-1]

A molded body was fabricated and evaluated in the same manner as in Example 4-1 except that the ethylenic polymer particle (CA-1) was used as a binder instead of the ethylenic polymer particle used in Example 4-1. The physical properties of the ethylenic polymer particle (CA-1) were as follows.

- Specific surface area: Smaller than 1.0 m²/g
- Median diameter (D50): 160 pm
- Intrinsic viscosity [η]: 30.8 dl/g
- Bulk density: 0.430 g/mL

The self-supportability evaluation of the obtained molded body was P, and the tensile strength at break could not be measured because the molded body did not support on its own.

## Claims

1. An ethylenic polymer particle, having a specific surface area of larger than 2.00 m²/g and 30.0 m²/g or smaller, as determined by a BET method from adsorption/desorption isotherms measured by a nitrogen gas adsorption method, and
a median diameter D50 of 20 to 700 µm as determined by laser diffraction/scattering.

2. The ethylenic polymer particle according to claim 1, having an intrinsic viscosity [η] of 5 to 50 dl/g, measured at 135°C in a decalin solvent.

3. The ethylenic polymer particle according to claim 1 or 2, having a bulk density of 0.01 to 0.20 g/mL.

4. A stretch-molded body comprising the ethylenic polymer particle according to any one of claims 1 to 3 as a component.

5. The stretch-molded body according to claim 4, wherein the stretch-molded body is obtained by solid phase stretch molding of the ethylenic polymer particle.

6. An ethylenic polymer particle having a specific surface area of larger than 2.00 m²/g and 30.0 m²/g or smaller, as determined by a BET method from adsorption/desorption isotherms measured by a nitrogen gas adsorption method,
wherein an acetone extract of the ethylenic polymer particle comprises a compound (F) having a molecular backbone of the following general formula (I): 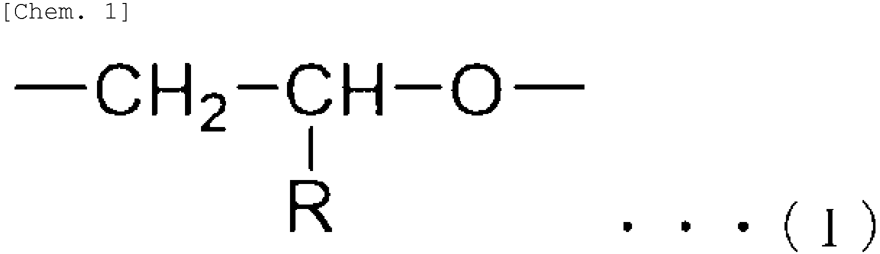 wherein R represents a hydrogen atom or an alkyl group having 1 to 12 carbon atoms.

7. The ethylenic polymer particle according to claim 6, wherein the compound (F) has a weight-average molecular weight of 500 or higher and 30,000 or lower.

8. The ethylenic polymer particle according to claim 6 or 7, wherein a content of the compound (F) is 6 ppm or more and 1,000 ppm or less.

9. The ethylenic polymer particle according to any one of claims 6 to 8, wherein when the ethylenic polymer particle is sieved on a 1 mm × 1 mm mesh sieve for a shaking time of 10 minutes at an amplitude of 0.5 mm and an interval of 15 seconds, an amount of the polymer particle not passing through the sieve is 20% by mass or less.

10. The ethylenic polymer particle according to any one of claims 6 to 9, comprising 10 to 2,000 ppm of magnesium in the ethylenic polymer particle.

11. The ethylenic polymer particle according to any one of claims 6 to 10, wherein the ethylenic polymer particle has a bulk density of 0.01 to 0.20 g/mL.

12. A method for producing a stretch-molded body using the ethylenic polymer particle according to any one of claims 6 to 11.

13. The method for producing a stretch-molded body according to claim 12, which is obtained by a solid phase stretch molding method.

14. A method for producing an ethylenic polymer particle having an intrinsic viscosity [η] of 5 to 50 dl/g measured at 135°C in a decalin solvent, the method comprising:
a step [α] of producing an olefin polymerization catalyst-containing liquid, the step [α] comprising:
a step <i> of obtaining a suspension via at least a step (1) of bringing a metal halide into contact with an alcohol in a hydrocarbon solvent, and a step (2) of bringing the component obtained in the step (1) into contact with an organoaluminum compound and/or an organoaluminum oxy compound,
a step <ii> of bringing the suspension obtained in the step <i> into contact with a transition metal compound (B) represented by the following general formula (II), and
a step <iii> of adding a compound (F) containing a molecular backbone represented by the following general formula (I),
wherein the step <iii> is carried out between the step <i> and the step <ii>, and/or after the step <ii>; and
a step [β] of homopolymerizing ethylene or copolymerizing ethylene with a linear or branched α-olefin having 3 to 20 carbon atoms, in the presence of the polymerization catalyst-containing liquid to produce an ethylenic polymer particle,
wherein a concentration of the compound (F) in the polymerization catalyst-containing liquid is greater than 1 mg/L and 150 mg/L or less. 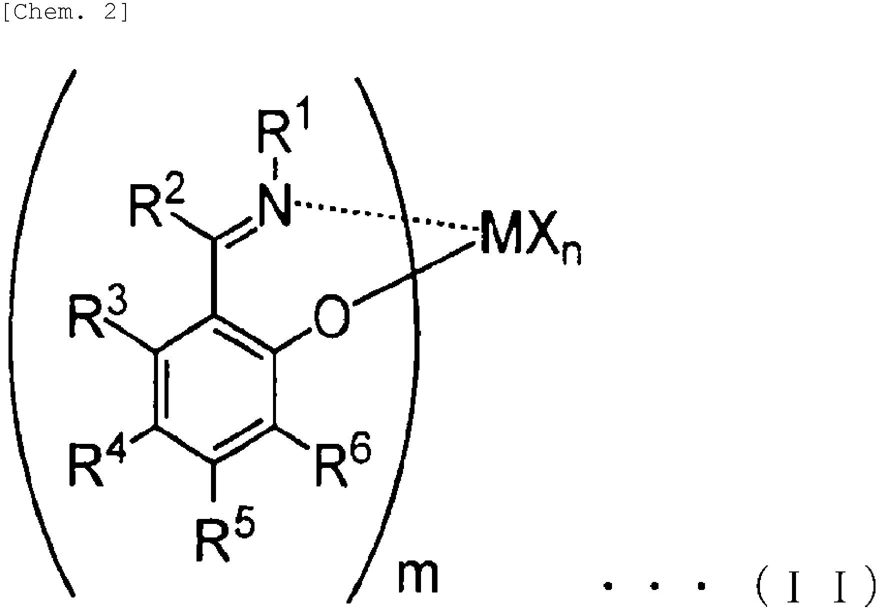 wherein M represents titanium, zirconium, or hafnium,
m represents an integer of 1 to 4,
R¹ to R⁵ may be the same as or different from each other, and each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, and two or more of these may be connected to each other to form a ring,
R⁶ is selected from a hydrogen atom, a hydrocarbon group having 1 to 4 carbon atoms composed only of primary carbon or secondary carbon, an aliphatic hydrocarbon group having 4 or more carbon atoms, an aryl-substituted alkyl group, a monocyclic or bicyclic alicyclic hydrocarbon group, an aromatic hydrocarbon group and a halogen atom,
n is a numeral satisfying a valence of M,
X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group, and when n is 2 or greater, a plurality of groups represented by X may be the same as or different from each other, and the plurality of groups represented by X may be bonded to each other to form a ring, 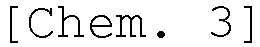 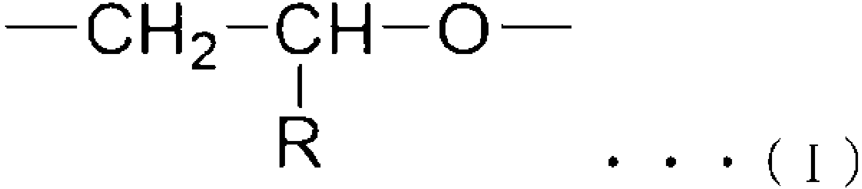 wherein R represents a hydrogen atom or an alkyl group having 1 to 12 carbon atoms.

15. The method for producing an ethylenic polymer particle according to claim 14, wherein the compound (F) has a weight-average molecular weight of 500 or higher and 30,000 or lower.

16. The method for producing an ethylenic polymer particle according to claim 14 or 15, wherein a content of a metal derived from the metal halide in the polymerization catalyst-containing liquid is 0.10 to 5.0 mmol/L.

17. The method for producing an ethylenic polymer particle according to any one of claims 14 to 16, wherein a temperature at which the compound (F) is added is 0 to 80°C.

18. A binder comprising the ethylenic polymer particle according to any one of claims 1 to 3 and 6 to 11.

19. The binder according to claim 18, wherein the binder is a binder for an electrode.

20. A molded body comprising the binder according to claim 18 or 19 and an inorganic material.

21. The molded body according to claim 20, wherein the inorganic material comprises an inorganic particle.

22. The molded body according to claim 21, wherein the inorganic particle has an average particle size of 1 to 500 µm.

23. The molded body according to any one of claims 20 to 22, wherein the molded body is an electrode mixture layer.

24. An electrode comprising the molded body according to any one of claims 20 to 23 and a current collector.

25. The electrode according to claim 24, wherein the electrode is obtained by a dry method.

26. A lithium ion secondary battery, comprising the electrode according to claim 24 or 25 and an electrolyte.

27. A method for producing an electrode, comprising:
a step of dry mixing the binder according to claim 18 or 19 and an active material to obtain an electrode composite material;
a step of forming an electrode mixture layer from the electrode composite material; and
a step of producing an electrode comprising the electrode mixture layer and a current collector.
